# EUROPEAN PATENT APPLICATION

(11) **EP 4 321 326 A1**
(43) Date of publication of application: **14.02.2024**
(21) Application number: 21932956.2
(22) Date of filing: 24.03.2021
(51) Int. Cl.: B29C 64/393, B22F 3/105, B29C 64/135, B33Y 10/00, B33Y 30/00

(54) **MOLDING DEVICE AND MOLDING METHOD**

(71) Applicant: NIKON CORPORATION, Minato-ku Tokyo 108-6290 (JP)
(72) Inventor: SEKIGUCHI, Kei, Tokyo 108-6290 (JP); UENO, Kazuki, Tokyo 108-6290 (JP); SHIKI, Fumika, Tokyo 108-6290 (JP); NAKAYAMA, Ryo, Tokyo 108-6290 (JP); SASAKI, Hiroki, Tokyo 108-6290 (JP); SUZUKI, Tatsuya, Tokyo 108-6290 (JP)
(74) Representative: Hoffmann Eitle
(86) International application number: PCT/JP2021/012154
(87) International publication number: WO 2022/201346

(57) **Abstract**

A build apparatus builds a first structural layer by irradiating a first position, which is set to be an irradiation position of a beam, with the beam to thereby build a first build object and by irradiating the first build object, a second position of which is set to be the irradiation position of the beam, with the beam to thereby build a second build object. The build apparatus further build a second structural layer by irradiating the first structural layer, a third position of which is set to be the irradiation position of the beam, with the beam to thereby build a third build object and by irradiating the third build object, a fourth position of which is set to be the irradiation position of the beam, with the beam to thereby build a fourth build object. At least one of a distance between the first position and the second position and a distance between the third position and the fourth position is shorter than a distance between the second position and the third position. As a result, the build apparatus builds a structural object that includes the first and second structural objects and is inclined with respect to an optical axis direction.

## Description

### Technical Field

The present invention relates to a technical field of a build apparatus and a build method configured to build a structural obj ect.

### Background Art

A Patent Literature 1 discloses one example of a build apparatus configured to build a structural object. A technical problem of this type of build apparatus is to properly build the structural object.

### Citation List

### Patent Literature

Patent Literature 1: US2014/0197576A1

### Summary of Invention

A first aspect provides a build apparatus including: a build unit that includes at least: a beam irradiation unit including an optical system that emits an energy beam; and a material supply unit that supplies a build material to an irradiation position of the energy beam; and a build controller configured to control a building of a structural object by the build unit, wherein the build controller is configured to: control the build unit to build a first structural layer by irradiating a first position, which is set to be the irradiation position of the energy beam, with the energy beam to thereby build a first build object and by irradiating the first build object, a second position of which is set to be the irradiation position of the energy beam, with the energy beam to thereby build a second build obj ect; control the build unit to build a second structural layer by irradiating the first structural layer, a third position of which is set to be the irradiation position of the energy beam, with the energy beam to thereby build a third build object and by irradiating the third build object, a fourth position of which is set to be the irradiation position of the energy beam, with the energy beam to thereby build a fourth build object; control the build unit so that at least one of a distance between the first position and the second position along an optical axis direction of the optical system and a distance between the third position and the fourth position along the optical axis direction is shorter than a distance between the second position and the third position along the optical axis direction; control the build unit so that at least one of a distance between the first position and the second position along an intersecting direction that intersects with the optical axis direction and a distance between the third position and the fourth position along the intersecting direction is shorter than a distance between the second position and the third position along the intersecting direction; and control the build unit to build the structural object that includes at least the first structural object and the second structural object and that is inclined with respect to the optical axis direction.

A second aspect provides a build apparatus including: a build unit that includes at least: a beam irradiation unit including an optical system that emits an energy beam; and a material supply unit that supplies a build material to an irradiation position of the energy beam; and a build controller configured to control a building of a structural object by the build unit, wherein the build controller is configured to perform, based on an input from a user, a switching between a first operation mode for building a first structural object including an inclination surface that intersects with a gravity direction by a first angle and a second operation mode for building a second structural obj ect including an inclination surface that intersects with the gravity direction by a second angle.

A third aspect provides a build apparatus including: a build unit that includes at least: a beam irradiation unit including an optical system that emits an energy beam; and a material supply unit that supplies a build material to an irradiation position of the energy beam; and a build controller configured to control a building of a structural object by the build unit, wherein the build controller is configured to: control the build unit to build a first structural layer by moving the energy beam along a scanning direction in an intersecting plane intersecting with an optical axis direction of the optical system after setting a first position to be an irradiation position or a condensing position of the energy beam to thereby build a first build object extending along the scanning direction and by moving the energy beam along the canning direction in the intersecting plane after setting a second position to be the irradiation position or the condensing position of the energy beam to thereby build a second build object extending along the scanning direction; control the build unit to build a second structural layer by moving the energy beam after setting a third position of at least a part of the first build object to be the irradiation position or the condensing position of the energy beam to thereby build a third build object extending along the scanning direction and by moving the energy beam after setting a fourth position of at least a part of the second build object to be the irradiation position or the condensing position of the energy beam to thereby build a fourth build object extending along the scanning direction; control the build unit so that the first build object and the second built object are built to be arranged along a direction intersecting with the scanning direction and the third build object and the fourth built object are built to be arranged along a direction intersecting with the scanning direction; and control the build unit to build the structural object that is inclined with respect to the optical axis direction by forming structural layers that include at least the first structural layer and the second structural layer.

An operation and other advantage of the present invention will be described in a below-described example embodiment.

### Brief Description of Drawings

[FIG. 1] FIG. 1 is a block diagram that illustrates a system configuration of a build apparatus in a present example embodiment.
[FIG. 2] FIG. 2 is a cross-sectional view that illustrates a configuration of the build apparatus in the present example embodiment.
[FIG. 3] FIG. 3 is a cross-sectional view that illustrates a configuration of the build apparatus in the present example embodiment.
[FIG. 4] Each of FIG. 4A to FIG 4E is a cross-sectional view that illustrates an aspect in which a certain area on a workpiece is irradiated with a build light and build materials are supplied thereto.
[FIG. 5] Each of FIG. 5A and FIG. 5B is a cross-sectional view that illustrates an irradiation target position of the build light.
[FIG. 6] Each of FIG. 6A and FIG. 6B is a cross-sectional view that illustrates the irradiation target position of the build light.
[FIG. 7] Each of FIG. 7A to FIG. 7C is a cross-sectional view that illustrates a process for forming a 3D structural object.
[FIG. 8] FIG. 8A is a perspective view that illustrates a part of an inclination structural object, and FIG. 8B is a cross-sectional view that illustrates a part of the inclination structural object.
[FIG. 9] FIG. 9A is a perspective view that illustrates one process for building the inclination structural object, and FIG. 9B is a cross-sectional view that illustrates one process for building the inclination structural object.
[FIG. 10] FIG. 10A is a perspective view that illustrates one process for building the inclination structural object, and FIG. 10B is a cross-sectional view that illustrates one process for building the inclination structural object.
[FIG. 11] FIG. 11 is a cross-sectional view that illustrates one process for building the inclination structural object.
[FIG. 12] FIG. 12A is a perspective view that illustrates one process for building the inclination structural object, and FIG. 12B is a cross-sectional view that illustrates one process for building the inclination structural object.
[FIG. 13] FIG. 13 is a cross-sectional view that illustrates one process for building the inclination structural object.
[FIG. 14] FIG. 14A is a perspective view that illustrates one process for building the inclination structural object, and FIG. 14B is a cross-sectional view that illustrates one process for building the inclination structural object.
[FIG. 15] FIG. 15A is a perspective view that illustrates one process for building the inclination structural object, and FIG. 15B is a cross-sectional view that illustrates one process for building the inclination structural object.
[FIG. 16] Each of FIG. 16A to FIG. 16C is a cross-sectional view that illustrates one process for building the inclination structural object.
[FIG. 17] FIG. 17A is a perspective view that illustrates one process for building the inclination structural object, and FIG. 17B is a cross-sectional view that illustrates one process for building the inclination structural object.
[FIG. 18] FIG. 18A is a perspective view that illustrates one process for building the inclination structural object, and FIG. 18B is a cross-sectional view that illustrates one process for building the inclination structural object.
[FIG. 19] FIG. 19A is a perspective view that illustrates one process for building the inclination structural object, and FIG. 19B is a cross-sectional view that illustrates one process for building the inclination structural object.
[FIG. 20] FIG. 20A is a perspective view that illustrates one process for building the inclination structural object, and FIG. 20B is a cross-sectional view that illustrates one process for building the inclination structural object.
[FIG. 21] FIG. 21A is a perspective view that illustrates one example of the inclination structural object, and FIG. 21B is a cross-sectional view that illustrates one example of the inclination structural object.
[FIG. 22] FIG. 22A is a perspective view that illustrates one process for building the inclination structural object, and FIG. 22B is a cross-sectional view that illustrates one process for building the inclination structural object.
[FIG. 23] FIG. 23A is a perspective view that illustrates one process for building the inclination structural object, and FIG. 23B is a cross-sectional view that illustrates one process for building the inclination structural object.
[FIG. 24] FIG. 24A is a perspective view that illustrates one process for building the inclination structural object, and FIG. 24B is a cross-sectional view that illustrates one process for building the inclination structural object.
[FIG. 25] FIG. 25A is a perspective view that illustrates one process for building the inclination structural object, and FIG. 25B is a cross-sectional view that illustrates one process for building the inclination structural object.
[FIG. 26] FIG. 26A is a perspective view that illustrates one example of the inclination structural object, and FIG. 26B is a cross-sectional view that illustrates one example of the inclination structural object.
[FIG. 27] Each of FIG. 27A and FIG. 27B is a cross-sectional view that illustrates an inclination angle of an inclination surface relative to a gravity direction.
[FIG. 28] FIG. 28 is a graph that illustrates a first operation model and a second operation mode.
[FIG. 29] FIG. 29 is a graph that illustrates a first operation model and a second operation mode.
[FIG. 30] FIG. 30 is a graph that illustrates a first operation model and a second operation mode.
[FIG. 31] FIG. 31 is a graph that illustrates a first operation model and a second operation mode.
[FIG. 32] FIG. 32 is a graph that illustrates a first operation model and a second operation mode.
[FIG. 33] FIG. 33A is a perspective view that illustrates one example of the inclination structural object that is a thick plate, and FIG. 33B is a cross-sectional view that illustrates one example of the inclination structural object that is the thick plate.
[FIG. 34] FIG. 34 is a planar view that illustrates a structural layer constituting the inclination structural object that is the thick plate.
[FIG. 35] FIG. 34 is a planar view that illustrates the structural layer constituting the inclination structural object that is the thick plate.
[FIG. 36] FIG. 36A is a perspective view that illustrates one example of the inclination structural object that is the thick plate and that has an outer wall surface and an inner wall surface both of which are inclination surfaces, and FIG. 36B is a cross-sectional view that illustrates one example of the inclination structural object that is the thick plate and that has the outer wall surface and the inner wall surface both of which are inclination surfaces.
[FIG. 37] FIG. 37 is a planar view that illustrates the structural layer constituting the inclination structural object that is the thick plate and that has the outer wall surface and the inner wall surface both of which are inclination surfaces.
[FIG. 38] FIG. 38A is a perspective view that illustrates one example of the inclination structural object including the inclination surface that is inclined to fall along a scanning direction, and FIG. 38B is a cross-sectional view that illustrates one example of the inclination structural object including the inclination surface that is inclined to fall along the scanning direction.
[FIG. 39] FIG. 39A is a perspective view that illustrates one process for building the inclination structural object, and FIG. 39B is a cross-sectional view that illustrates one process for building the inclination structural object.
[FIG. 40] FIG. 40A is a perspective view that illustrates one process for building the inclination structural object, and FIG. 40B is a cross-sectional view that illustrates one process for building the inclination structural object.
[FIG. 41] FIG. 41A is a perspective view that illustrates one process for building the inclination structural object, and FIG. 41B is a cross-sectional view that illustrates one process for building the inclination structural object.
[FIG. 42] FIG. 42A is a perspective view that illustrates one example of the inclination structural object, and FIG. 42B is a cross-sectional view that illustrates one example of the inclination structural object.
[FIG. 43] FIG. 43 is a cross-sectional view that illustrates one example of a void inclination structural object.
[FIG. 44] FIG. 44 is a cross-sectional view that illustrates one process for building the void structural object.
[FIG. 45] FIG. 45 is a cross-sectional view that illustrates one process for building the void structural object.
[FIG. 46] FIG. 46 is a cross-sectional view that illustrates one process for building the void structural object.
[FIG. 47] FIG. 47 is a cross-sectional view that illustrates one process for building the void structural object.
[FIG. 48] FIG. 48A is a perspective view that illustrates one process for building the inclination structural object, and FIG. 48B is a cross-sectional view that illustrates one process for building the inclination structural object.
[FIG. 49] FIG. 49A is a perspective view that illustrates one process for building the inclination structural object, and FIG. 49B is a cross-sectional view that illustrates one process for building the inclination structural object.
[FIG. 50] FIG. 50 is a perspective view that illustrates a rotatable table.

### Description of Example embodiments

Next, with reference to drawings, an example embodiment of a build apparatus and a build method will be described. In the below-described description, the example embodiment of the build apparatus and the build method will be described by using a build apparatus SYS that is configured to process a workpiece W that is one example of an object. Especially, in the below-described description, the example embodiment of the build apparatus and the build method will be described by using the build apparatus SYS that is configured to perform an additive manufacturing based on a Laser Metal Deposition (LMD). The additive manufacturing based on the Laser Metal Deposition is an additive manufacturing for building a build object that is integrated with or separatable from the workpiece W by melting a build material M supplied to the workpiece W with build light EL (namely, an energy beam in a form of light). However, the build apparatus SYS may perform an additive manufacturing based on a method different from the Laser Metal Deposition. Alternatively, the build apparatus SYS may perform any processing (for example, a removal processing) different from the additive manufacturing.

Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below-described description, a positional relationship of various components included in the build apparatus SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Build apparatus SYS

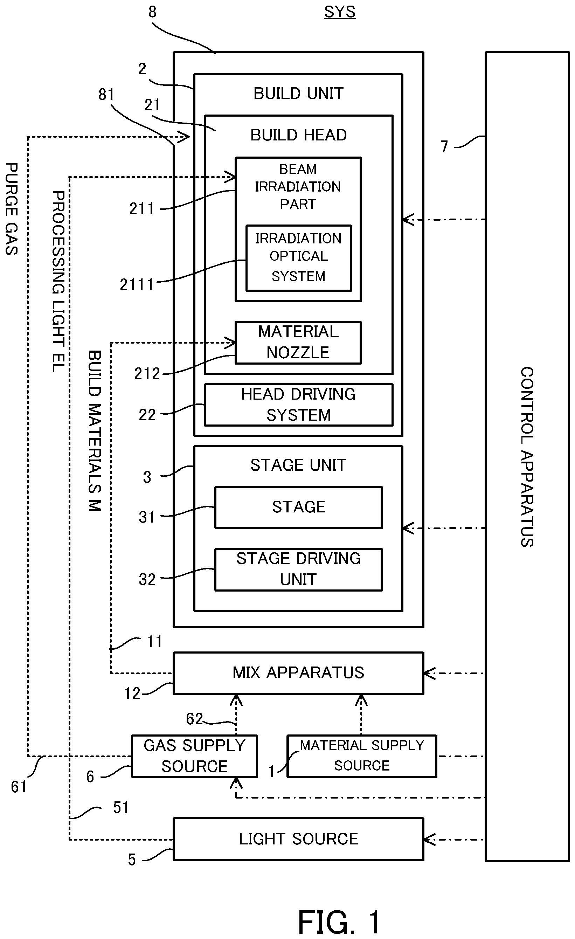

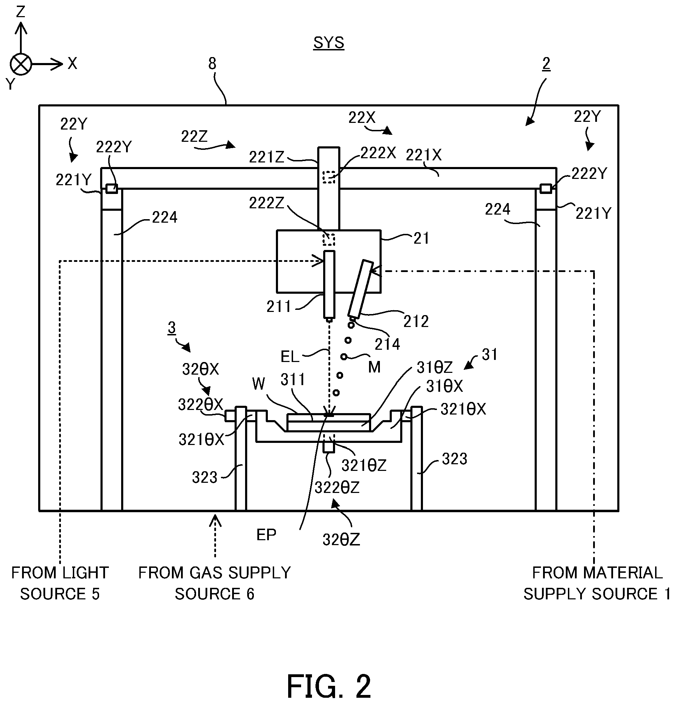

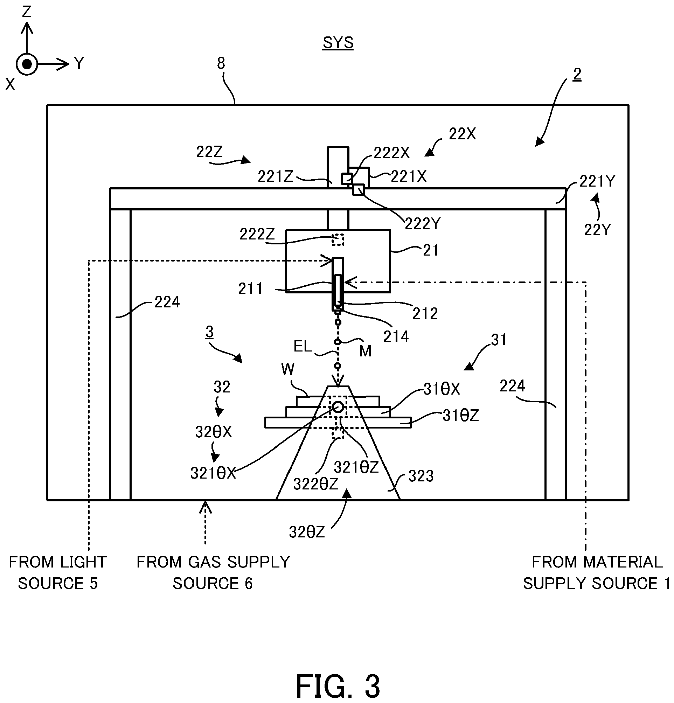

Firstly, with reference to FIG. 1 and FIG. 3, a configuration of the build apparatus SYS in the present example embodiment will be described. FIG. 1 is a system configuration diagram that illustrates a system configuration of the build apparatus SYS in the present example embodiment. Each of FIG. 2 and FIG. 3 is a cross-sectional view that illustrates the configuration of the build apparatus SYS in the present example embodiment.

The build apparatus SYS is configured to perform the additive manufacturing on the workpiece W. The build apparatus SYS is configured to build the build object integrated with (alternatively, separatable from) the workpiece W by performing the additive manufacturing on the workpiece W. In this case, the additive manufacturing performed on the workpiece W corresponds to a processing for adding, to the workpiece W, the build object integrated with (alternatively, separatable from) the workpiece W. Note that the build object in the present example embodiment may mean any object built by the build apparatus SYS. For example, the build apparatus SYS is configured to build a 3D (three-dimensional) structural object ST (namely, a 3D object having a magnitude (a size) in each of 3D directions, a solid object, in other words, an object having a magnitude (a size) in the X-axis direction, the Y-axis direction, and the Z-axis direction).

In a case where the workpiece W is a below-described stage 31, the build apparatus SYS is configured to perform the additive manufacturing on the stage 31. In a case where the workpiece W is a placed object that is an object placed on the stage 31, the build apparatus SYS is configured to perform the additive manufacturing on the placed object. The placed object placed on the stage 31 may be another 3D structural object ST built by the build apparatus SYS (namely, an existing structural object). Note that FIG. 1 illustrates an example in which the workpiece W is the existing structural object held by the stage 31. Moreover, in the below-described description, the example in which the workpiece W is the existing structural object held by the stage 31 will be described.

The workpiece W may be an item that needs to be repaired having a missing part. In this case, the build apparatus SYS may perform a repair processing for repairing the item that needs to be repaired by performing the additive manufacturing for building the build object for filling in the missing part. Namely, the additive manufacturing performed by the build apparatus SYS may include the additive manufacturing for adding, to the workpiece W, the build object for filling in the missing part.

As described above, the build apparatus SYS is configured to perform the additive manufacturing based on the Laser Metal Deposition. Namely, it can be said that the build apparatus SYS is a 3D printer that forms an object by using an Additive layer manufacturing technique. Note that the Additive layer manufacturing technique may be referred to as a Rapid Prototyping, a Rapid Manufacturing or an Additive Manufacturing.

The build apparatus SYS performs the additive manufacturing by processing the build material M with the build light EL. The build material M is a material that is molten by an irradiation with the build light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery materials. However, the build materials M may not be the powdery materials. For example, at least one of a wired-like build material and a gas-like build material may be used as the build material M.

In order to perform the additive manufacturing, the build apparatus SYS includes a material supply source 1, a build unit 2, a stage unit 3, a measurement apparatus 4, a light source 5, a gas supply source 6, and a control apparatus 7, as illustrated in FIG. 1 to FIG. 3. The build unit 2 and the stage unit 3 may be contained in an inner space in a housing 8.

The material supply source 1 is configured to supply the build materials M to the build unit 2. The material supply source 1 supplies, to the build unit 2, the build materials M the amount of which is necessary for performing the additive manufacturing per unit time by supplying the build materials M the amount of which is based on the necessary amount.

The build unit 2 builds the build object by processing the build materials M supplied from the material supply source 1. In order to build the build object, the build unit 2 include a build head 21, and a head driving system 22. Note that the build head 21 may be referred to as a "build part". Furthermore, the build head 21 includes a beam irradiation unit 211, and a material nozzle 212 (namely, supply system that supplies the build materials M). Incidentally, the build head 21 includes a single material nozzle 212 in an example illustrate in FIG. 1 to FIG. 3, however, the build head 21 may include a plurality of material nozzles 212.

The beam irradiation unit 211 is irradiates the workpiece W with the build light EL. The beam irradiation unit 211 include an irradiation optical system 2111 in order to irradiate the workpiece W with the build light EL. The irradiation optical system 2111 is an optical system (for example, a light condensing optical system) for emitting the build light EL. Specifically, the irradiation optical system 2111 is optically connected to the light source 5 that generates the build light EL through a light transmitting member 51 such as an optical fiber and light pipe. The irradiation optical system 2111 emits the build light EL transmitted from the light source 5 through the light transmitting member 51. The irradiation optical system 2111 emits the build light EL in a downward direction (namely, toward a -Z side) from the irradiation optical system 2111. The stage 31 is disposed below the irradiation optical system 2111. In a case where the workpiece W is placed on the stage 31, the irradiation optical system 2111 emits the build light EL, which is the energy beam, toward the workpiece W. Specifically, the irradiation optical system is configured to emit the build light EL toward an irradiation target position EP that is set on the workpiece W or near the workpiece W (alternatively, set on a below-described build surface MS or near the build surface MS) as an area which is irradiated with the build light EL. Furthermore, a state of the irradiation optical system 2111 is switchable between a state in which the build light EL is emitted toward the irradiation target position EP and a state in which the build light EL is not emitted toward the irradiation target position EP under the control of the control apparatus 7. Note that a direction of the build light EL emitted from the irradiation optical system 2111 is not limited to a direct downward direction (namely, coincident with the - Z-axis direction), and may be a direction that is inclined with respect to the Z-axis by a predetermined angle, for example.

A supply outlet 214 is formed at the material nozzle 212. The material nozzle 212 supplies (for example, injects, jets, blows out or sprays) the build materials M from the supply outlet 214. Thus, the material nozzle 212 may be referred to as a material supply unit. The material nozzle 212 is physically connected to the material supply source 1, which is a supply source of the build materials M, through a supply pipe 11 and a mix apparatus 12. The material nozzle 212 supplies the build materials M supplied from the material supply source 1 through the supply pipe 11 and the mix apparatus 12. The material nozzle 212 may pressure-feed the build materials M supplied from the material supply source 1 through the supply pipe 11. Namely, the build materials M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build materials M together with the gas for feeding. Purge gas supplied from the gas supply source 6 is used as the gas for feeding, for example. However, gas supplied from a gas supply source that is different from the gas supply source 6 may be used as the gas for feeding. Note that the material nozzle 212 is illustrated to have a tube-like shape in FIG. 1, however, a shape of the material nozzle 212 is not limited to this shape. The material nozzle 212 supplies the build materials M in a downward direction (namely, toward the -Z side) from the material nozzle 212. The stage 31 is disposed below the material nozzle 212. In a case where the workpiece W is placed on the stage 31, the material nozzle 212 supplies the build materials M toward the workpiece W or a vicinity of the workpiece W. Note that a supply direction of the build materials M supplied from the material nozzle 212 is a direction that is inclined with respect to the Z-axis by a predetermined angle (as one example, an acute angle), however, it may be the -Z-axis direction (namely, a direct downward direction).

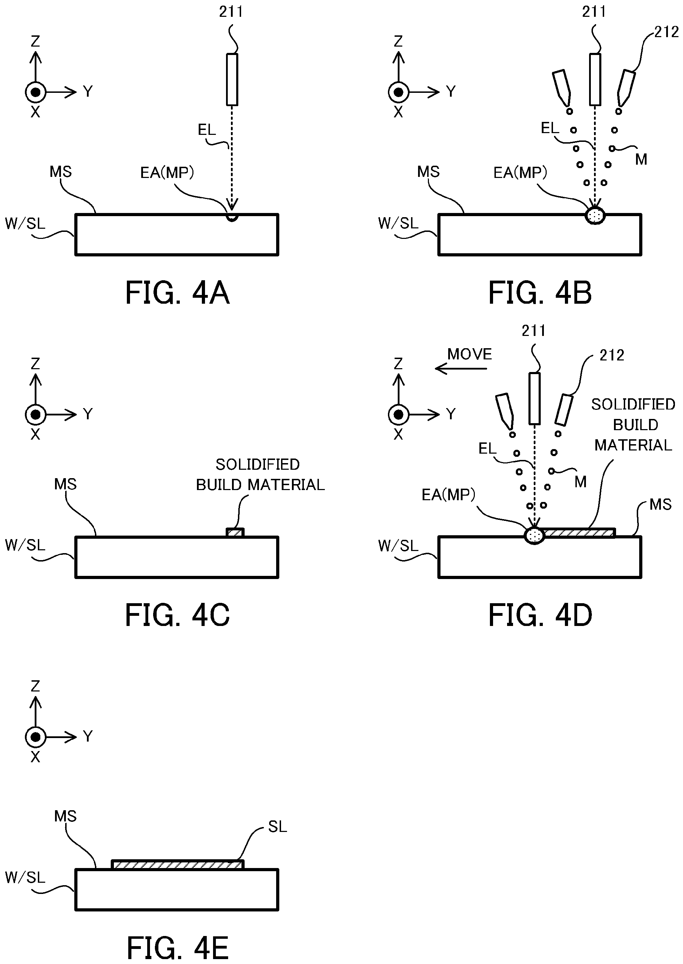

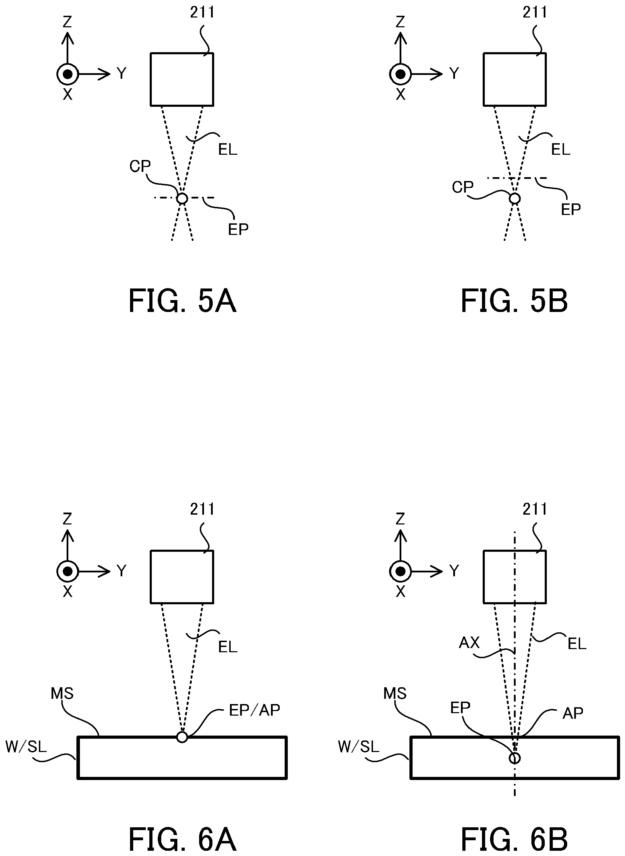

In the present example embodiment, the material nozzle 212 supplies the build materials M to a part that is irradiated with the build light EL from the irradiation optical system 2111. For example, the material nozzle 212 may supply the build materials M to the irradiation target position EP toward which the irradiation optical system 2111 emits the build light EL. For example, the material nozzle 212 may supply the build materials M to an actual irradiation position AP (see FIG. 6A and FIG. 6B described below) that is actually irradiated with the build light EL by the irradiation optical system 2111. For example, the material nozzle 212 may supply the build materials M to a melt pool (see FIG. 4 described below) that is formed by the build light EL emitted from the irradiation optical system 2111. However, the material nozzle 212 may not supply the build materials M to the melt pool MP. For example, the build apparatus SYS may melt the build materials M by the build light EL before the build materials M from the material nozzle 212 reach the workpiece W and may make the molten build materials M adhere to the workpiece W.

The head driving system 22 is configured to move the build head 21. The head driving system 22 moves the build head 21 along at least one of the X-axis, the Y-axis, the Z-axis, the θX direction, the θY direction, and the θZ direction, for example. In an example illustrated in FIG. 2 and FIG. 3, the head driving system 22 moves the build head 21 along at least one of the X-axis, the Y-axis, and the Z-axis. In this case, the head driving system 22 may include a head driving system 22X, a head driving system 22Y, and a head driving system 22Z. The head driving system 22X moves the build head 21 along the X-axis. The head driving system 22Y moves the build head 21 along the Y-axis. The head driving system 22Y moves the build head 21 along the Y-axis.

The head driving system 22Y includes: a Y guide member 221Y that is connected to a support frame 224, which is disposed on a bottom surface of the housing 8 (alternatively, a surface plate disposed on the bottom surface of the housing 8) through a vibration isolator such as an air spring, and that extends along the Y axis; a Y slide member 222Y that is movable along the Y guide member 221Y; and a non-illustrated motor that moves the Y slide member 222Y. The head driving system 22X includes: a X guide member 221X that is connected to the Y slide member 222Y and that extends along the X axis; a X slide member 222X that is movable along the X guide member 221X; and a non-illustrated motor that moves the X slide member 222X. The head driving system 22Z includes: a Z guide member 221Z that is connected to the X slide member 222X and that extends along the Z axis; a Z slide member 222Z that is movable along the Z guide member 221Z; and a non-illustrated motor that moves the Z slide member 222Z. The build head 21 is connected to the Z slide member 222Z. In a case where the Y slide member 222Y moves along the Y guide member 221Y, the build head 21 that is connected to the Y slide member 222Y through the head driving systems 22X and 22Z moves along the Y axis. In a case where the X slide member 222X moves along the X guide member 221X, the build head 21 that is connected to the X slide member 222X through the head driving system 22Z moves along the X axis. In a case where the Z slide member 222Z moves along the Z guide member 221Z, the build head 21 that is connected to the Z slide member 222Z moves along the Z axis.

In a case where the head driving system 22 moves the build head 21, a relative position between the build head 21 and each of the stage 31 and the workpiece W placed on the stage 31 changes. Thus, the head driving system 22 may serve as a position change apparatus that is configured to change the relative positional relationship between the build head 21 and each of the stage 31 and the workpiece W. Furthermore, in a case where the relative position between the build head 21 and each of the stage 31 and the workpiece W changes, the irradiation target position EP (furthermore, the melt pool MP) relatively moves relative to the workpiece W. Thus, the head driving system 22 may serve as a movement apparatus that is configured to move the irradiation target position EP.

The stage unit 3 includes the stage 31 and a stage driving system 32.

The workpiece W that is the object is placed on the stage 31. Specifically, the workpiece W is placed on a placement surface 311 that is at least a part of an upper surface of the workpiece W. The placement surface 311 is usually a surface along the XY plane, and a surface WS of the workpiece W is also a surface along the XY plane. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. The above described irradiation optical system 2111 emits the build light EL in at least a part of a period during which the workpiece W is placed on the stage 31. Furthermore, the above described material nozzle 212 supplies the build materials M in at least a part of the period during which the workpiece W is placed on the stage 31.

In the present example embodiment, the stage 31 includes a stage 31θX and a stage 31θZ. A reason why the stage 31 includes the stage 31θX and the stage 31θZ is to move the stage 31 along each of the θX direction and the θZ direction by the below described stage driving system 32, as described later in detail. The workpiece W is placed on the stage 31θZ. Thus, at least a part of an upper surface of the stage 31θZ is used as the placement surface 311 on which the workpiece W is placed. The stage 31θX is movable along the θX direction (namely, rotatable around a rotational axis along the X axis) by the stage driving system 32 described later. The stage 31θZ is disposed in a concave part formed at the stage 31θX so as to rotatable around the rotational axis along the X axis together with the stage 31θX due to the rotation of the stage 31θX. The stage 31θZ is disposed in the concave part formed at the stage 31θX so as to movable along the θZ direction (namely, rotatable around a rotational axis along the Z axis) by the stage driving system 32 independently from the rotation of the stage 31θX. Note that a configuration of the stage 31 is not limited to a configuration illustrated in FIG. 2 and FIG. 3. As one example, the stage 31θZ may not be disposed in the concave part formed at the stage 31θX.

The stage driving system 32 is configured to move the stage 31. The stage driving system 32 moves the stage 31 along at least one of the X axis, the Y axis, the Z axis, the θX direction, the θY direction, and the θZ direction, for example. Note that an operation for moving the stage 31 along at least one of the θX direction, the θY direction, and the θZ direction is equivalent to an operation for changing an attitude of a stage 31 (furthermore, an attitude of the workpiece W placed on the stage 31) relative to the build head 21 by rotating the stage 31 around at least one of a rotational axis along the X axis, a rotational axis along the Y axis, a rotational axis along the Z axis. In the example illustrated in FIG. 2 and FIG. 3, the stage driving system 32 moves the stage 31 along each of the θX direction and the θZ direction. Namely, the stage driving system 32 rotates the stage 31 around the rotational axis along the X axis and rotates the stage 31 around the rotational axis along the Z axis. In this case, the stage driving system 32 may include a stage driving system 32θX and a stage driving system 32θZ. The stage driving system 32θX is configured to rotate the stage 31 (especially, the stage 31θX) around the rotational axis along the X axis. The stage driving system 32θZ is configured to rotate the stage 31 (especially, the stage 31θZ) around the rotational axis along the Z axis. The stage driving system 32θX includes a pair of rotational shafts 321θX that are rotatably connected to a pair of support frames 323, which are disposed on the bottom surface of the housing 8 (alternatively, the surface plate disposed on the bottom surface of the housing 8) through a vibration isolator such as an air spring; and a motor 322θX that is a driving apparatus configured to rotate the pair of the rotational shafts 321θX around the rotational axis along the X axis. The pair of the rotational shafts 321θX extend along the X axis direction. The pair of the rotational shafts 321θX are connected to the stage 31θX so that the stage 31 is between them along the X axis direction. The stage driving system 32θZ includes a rotational shaft 321θZ that extends along the Z axis direction and that is connected to a bottom surface of the stage 31θX (specifically, a surface facing the stage 31θZ); and a motor 322θZ that rotates the rotational shaft 321θZ around the rotational axis along the Z axis. In a case where the pair of the rotational shafts 321θX rotates, the stage 31θX rotates around a rotational axis along the X axis. As a result, the stage 31θZ supported by the stage 31θX (furthermore, the workpiece W supported by the stage 31θZ) also rotates around the rotational axis along the X axis. In a case where the rotational shafts 321θZ rotates, the stage 31θZ (furthermore, the workpiece W supported by the stage 31θZ) also rotates around a rotational axis along the Z axis. Note that the stage 31 illustrated in FIG. 2 and FIG. 3 has a double-sided structure in which stage 31θX is supported from both sides thereof by support frame 323. However, the stage 31 may have a cantilever structure in which the stage 31θX is supported from one side thereof by the support frame 323.

In a case where the stage driving system 32 moves the stage 31, the relative position between the build head 21 and each of the stage 31 and the workpiece W placed on the stage 31 changes. Thus, the stage driving system 32 may serve as a position change apparatus that is configured to change the relative positional relationship between the build head 21 and each of the stage 31 and the workpiece W. Furthermore, in a case where the relative position between the build head 21 and each of the stage 31 and the workpiece W changes, the irradiation target position EP (furthermore, the melt pool MP) relatively moves relative to the workpiece W. Thus, the stage driving system 32 may serve as a movement apparatus that is configured to move the irradiation target position EP.

The operation for rotating the stage 31 around the rotation axis may be regarded to substantially equivalent to an operation for changing an attitude of the stage 31 (for example, changing a relative attitude of the stage 31 relative to the build head 21). Thus, the stage driving system 32 may serve as a position changing apparatus for changing the relative positional relationship between the build head 21 and each of the stage 31 and the workpiece W by changing the relative attitude of the stage 31 relative to the build head 21.

The light source 5 is configured to emit at least one of an infrared light, a visible light and an ultraviolet light as the build light EL, for example. However, other type of light may be used as the build light EL. The build light EL may include a plurality of pulsed lights (namely, a plurality of pulsed beams). The build light EL may be a laser light. In this case, the light source 5 may include semiconductor laser such as a laser light source (for example, a Laser Diode (LD)). The laser light source may be a fiber laser, a CO₂ laser, a YAG laser, an Excimer laser and the like. However, the build light EL may not be the laser light. The light source 5 may include any light source (for example, at least one of a LED (Light Emitting Diode), a discharge lamp and the like).

The gas supply source 6 is a supply source of purge gas for purging the chamber space 63IN. The purge gas includes inert gas. At least one of Nitrogen gas and Argon gas is one example of the inert gas. The gas supply source 6 supplies the inner space in the housing 8 through a supply pipe 61 that connects the gas supply source 6 and the housing 8. As a result, the chamber space 63IN is a space that is purged by the purge gas. Note that the gas supply source 6 may be a tank that stores the inert gas such as the Nitrogen gas and the Argon gas. In a case where the purge gas is the Nitrogen gas, the gas supply source 6 may be a Nitrogen gas generation apparatus that generates the Nitrogen gas by using air as material.

In a case where the material nozzle 212 supplies the build materials M together with the purge gas as described above, the gas supply source 6 may supply the purge gas to the mix apparatus 12 to which the build materials M are supplied from the material supply source 1. Specifically, the gas supply source 6 may be connected to the mix apparatus 12 through a supply pipe 62 that connects the gas supply source 6 and the mix apparatus 12. As a result, the gas supply source 6 supplies the purge gas to the mix apparatus 12 through the supply pipe 62. In this case, the build materials M from the material supply source 1 may be supplied (specifically, pressure-fed) to the material nozzle 212 through the supply pipe 11 by the purge gas supplied from the gas supply source 6 through the supply pipe 62. Namely, the gas supply source 6 may be connected to the material nozzle 212 through the supply pipe 62, the mix apparatus 12 and the supply pipe 11. In this case, the material nozzle 212 supplies, from the supply outlet 214, the build materials M together with the purge gas for pressure-feeding the build materials M.

The control apparatus 7 is configured to control an operation of the build apparatus SYS. The control apparatus 7 is configured to control the building of the 3D structural object ST by controlling the operation of the build apparatus SYS. As a result, the build apparatus SYS build the 3D structural object ST by performing the additive manufacturing on the workpiece W under the control of the control apparatus 7. Thus, the control apparatus 7 may be referred to as a build control part. Specifically, for example, the control apparatus 7 may control the build unit 2 (for example, at least one of the build head 21 and the head driving system 22) of the build apparatus SYS to perform the additive manufacturing on the workpiece W. For example, the control apparatus 7 may control the stage unit 3 (for example, stage driving system 32) of the build apparatus SYS to perform the additive manufacturing on the workpiece W.

The control apparatus 7 may include an arithmetic apparatus and a storage apparatus. The arithmetic apparatus may include at least one of a CPU (Central Processing Unit) and a GPU (Graphic Processing Unit), for example. The storage apparatus may include a memory. The control apparatus 7 serves as an apparatus for controlling the operation of the build apparatus SYS by means of the arithmetic apparatus executing a computer program. The computer program is a computer program that allows the arithmetic apparatus to execute (namely, to perform) a below-described operation that should be executed by the control apparatus 7. Namely, the computer program is a computer program that allows the control apparatus 7 to function so as to make the build apparatus SYS execute the below-described operation. The computer program executed by the arithmetic apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the arithmetic apparatus may download the computer program that should be executed from an apparatus disposed at an outside of the control apparatus 7 through a network interface.

The control apparatus 7 may control an emitting condition of the build light EL by the beam irradiation unit 211. The emitting condition may include at least one of the intensity of the build light EL and emitting timing of the build light EL, for example. In a case where the build light EL includes the plurality of pulsed lights, the emitting condition may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 7 may control a moving aspect of the build head 21 by the head driving system 22. The control apparatus 7 may control a moving aspect of the stage 31 by the stage driving system 32. The moving aspect may include at least one of a moving distance, a moving speed, a moving direction and a moving timing (a moving period), for example. Moreover, the control apparatus 7 may control a supply aspect of the build materials M by the material nozzle 212. The supply aspect may include at least one of the supplied amount (especially, the supplied amount per unit time) and a supply timing (a supply period).

The control apparatus 7 may not be disposed in the build apparatus SYS. For example, the control apparatus 7 may be disposed at the outside of the build apparatus SYS as a server or the like. In this case, the control apparatus 7 may be connected to the build apparatus SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the build apparatus SYS may be configured to transmit and receive various information through the network. Moreover, the control apparatus 7 may be configured to transmit information such as a command and a control parameter to the build apparatus SYS through the network. The build apparatus SYS may include a reception apparatus that is configured to receive the information such as the command and the control parameter from the control apparatus 7 through the network. The build apparatus SYS may include a transmission apparatus that is configured to transmit the information such as the command and the control parameter to the control apparatus 7 through the network (namely, an output apparatus that is configured to output information to the control apparatus 7). Alternatively, a first control apparatus that is configured to perform a part of the arithmetic processing performed by the control apparatus 7 may be disposed in the build apparatus SYS and a second control apparatus that is configured to perform another part of the arithmetic processing performed by the control apparatus 7 may be disposed at the outside of the build apparatus SYS.

An arithmetic model that is buildable by machine learning may be implemented in the control apparatus 7 by the arithmetic apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 7 may control the operation of the build apparatus SYS by using the arithmetic model. Namely, the operation for controlling the operation of the build apparatus SYS may include an operation for controlling the operation of the build apparatus SYS by using the arithmetic model. Note that the arithmetic model that has been built by off-line machine learning using training data may be implemented in the control apparatus 7. Moreover, the arithmetic model implemented in the control apparatus 7 may be updated by online machine learning on the control apparatus 7. Alternatively, the control apparatus 7 may control the operation of the build apparatus SYS by using the arithmetic model implemented in an apparatus external to the control apparatus 7 (namely, an apparatus external to the build apparatus SYS), in addition to or instead of the arithmetic model implemented on the control apparatus 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7. The recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes a partial element of the hardware are combined.

### (2) Operation of Build apparatus SYS

Next, an operation of the build apparatus SYS will be described.

### (2-1) Basic Operation of Additive Manufacturing

Firstly, a basic operation of the additive manufacturing performed by the build apparatus SYS on the workpiece W will be described. The additive manufacturing performed on the workpiece W corresponds to an operation for building the build object so as to add, to the workpiece W, the build object that is integrated with (alternatively, separable from) the workpiece W. In the below-described description, the additive manufacturing for building the 3D structural object ST that is the build object having a desired shape will be described, for the purpose of simple description. As described above, the build apparatus SYS builds the 3D structural object ST by performing the additive manufacturing based on the Laser Metal Deposition. Thus, the build apparatus SYS may build the 3D structural object ST by performing the existing additive manufacturing based on the Laser Metal Deposition. Next, one example of the operation for building the 3D structural object ST by using the Laser Metal Deposition will be briefly described.

The build apparatus SYS builds the 3D structural object ST on the workpiece W based on 3D model data or the like (for example, CAD (Computer Aided Design) data) of the 3D structural object ST that should be built. Measured data of the solid object measured by at least one of a non-illustrated measurement apparatus disposed in the build apparatus SYS and a 3D shape measurement device disposed separately from the build apparatus SYS may be used as the 3D model data. The build apparatus SYS sequentially builds a plurality of layered partial structural objects (it is referred to as the "structural layer" in the below-described description) SL that are arranged along the Z-axis direction in order to build the 3D structural object ST, for example. For example, the build apparatus SYS sequentially builds, one by one in order, the plurality of structural layers SL based on data related to the plurality of layers that are obtained by slicing the model of the 3D structural object ST along the Z-axis direction. As a result, the 3D structural object ST that is a layered structural body in which the plurality of structural layers SL are layered is built. Note that the structural layer SL may not be necessarily the build object having the layered shape. Next, a flow of an operation for forming the 3D structural object ST by forming the plurality of structural layers SL one by one in order will be described.

Firstly, with reference to FIG. 4A to FIG. 4E, an operation for building each structural layer SL will be described. The build apparatus SYS moves at least one of the build head 21 and the stage 31 so that the irradiation target position EP is set at a first desired position of the workpiece W or already built structural layer SL (alternatively, any build object, the same is applied to the below-described description). Then, the build apparatus SYS emits the build light EL from the irradiation optical system 2111 toward the irradiation target position EP. As a result, as illustrated in FIG. 4A, the build apparatus SYS irradiated a second desired position on a build surface MS, which corresponds to the surface of the workpiece W or the surface of the already built structural layer SL, with the build light EL. Incidentally, the build surface MS is typically a surface (for example, a surface along the XY plane) that intersects with an optical axis AX of the irradiation optical system 2111 emitting the build light EL, because the build surface MS is irradiated with the build light EL.

Here, the irradiation target position EP is described with reference to FIG. 5A to 5B and FIG. 6A to 6B. The irradiation target position EP is a position that should be irradiated with the build light EL from the beam irradiation unit 211. As illustrated in FIG. 5A, the irradiation target position EP may mean a position at which the build light EL from the beam irradiation unit 211 should be condensed. Namely, the irradiation target position EP may mean a position at which a best-focused part of the build light EL from the beam irradiation unit 211 (namely, a part of the build light EL at which the build light EL is most convergent) CP should be located. In this case, the irradiation target position EP may be referred to as a condensed target position. Alternatively, as illustrated in FIG. 5B, the irradiation target position EP may mean a position at which a part of the build light ELfrom the beam irradiation unit 211 that is different from the best-focused position part should be located. Namely, the irradiation target position EP may mean a position at which a part of the build light EL from the beam irradiation unit 211 that has the desired defocus amount should be located. Note that the irradiation target position EP includes both of a position in a plane intersecting with the optical axis AX of the irradiation optical system 2111 (for example, a position in the XY plane) and a position in the direction of the optical axis AX (for example, a position in the Z direction). In the below-described description, for convenience of description, an example in which the irradiation target position EP is the position at which the build light EL from the beam irradiation unit 211 should be condensed will be described.

As illustrated in FIG. 6A, the control apparatus 7 may set the irradiation target position EP on the build surface MS, which corresponds to the surface of the workpiece W or the surface of the already built structural layer SL. Namely, the control apparatus 7 may set the irradiation target position EP as a position on the build surface MS, as illustrated in FIG. 6A. For example, in a case where the surface of the workpiece W includes the build surface MS, the control apparatus 7 may set the irradiation target position EP on the surface of the workpiece W. For example, in the case where the surface of the structural layer SL includes the build surface MS, the control apparatus 7 may set the irradiation target position EP on the surface of the structural layer SL. As described above, the beam irradiation unit 211 irradiates the build surface MS with the build light EL. Thus, in a case where the irradiation target position EP is set on the build surface MS, the actual irradiation position AP, which is actually irradiated with the build light EL on the build surface MS, may be coincident with the irradiation target position EP.

As illustrated in FIG. 6B, the control apparatus 7 may set the irradiation target position EP inside the workpiece W or the already built structural layer SL whose surface is the build surface MS. Namely, the control apparatus 7 may set the irradiation target position EP as a position inside the workpiece W or the already built structural layer SL whose surface is the build surface MS. In a case where the irradiation target position EP is set inside the workpiece W or the already built structural layer SL, there is a possibility that the build light EL does not reach the irradiation target position EP because the build light EL is shielded (for example, absorbed, reflected or scattered) by the workpiece W, the already built structural layer SL or the melt pool MP. Namely, even in a case where the beam irradiation unit 211 emits the build light EL toward the irradiation target position EP, there is a possibility that the irradiation target position EP is not actually be irradiated with the build light EL. In this case, the actual irradiation position AP that is actually irradiated with the build light EL on the build surface MS may not coincide with the irradiation target position EP. For example, the actual irradiation position AP may be located at a position that is away from the irradiation target position EP along an optical axis direction along which the optical axis AX of the irradiation optical system 2111 extends (in an example illustrated in FIG. 6B, the Z-axis direction). Specifically, the actual irradiation position AP may be located in an area on the build surface MS that includes an intersection of the optical axis AX and the build surface MS. However, in a case where the build light EL reaches the irradiation target position EP, the actual irradiation position AP may coincide with the irradiation target position EP.

Considering that a positional relationship between the irradiation target position EP and the actual irradiation position AP can be defined according to a certain rule, an operation for setting the irradiation target position EP may be regarded to be substantially equivalent to an operation for setting the actual irradiation position AP. A below-described condition related to a position at which the irradiation target position EP is set may be regarded to be substantially equivalent to a condition related to a position at which the actual target position EP is set.

Thus, an operation for setting the irradiation target position EP at the first desired position of the workpiece W or the already built structural layer SL may include at least one of an operation for setting the irradiation target position EP at the position on the build surface MS corresponding to the surface of the workpiece W or the already built structural layer SL, and an operation for setting the irradiation target position EP at the position at the position inside the workpiece W or the already built structural layer SL whose surface is the build surface MS.

Again In FIG. 4A, when the build surface MS is irradiated with the build light EL, a melt pool (namely, a pool of a metal molten by the build light EL) MP is formed in an area on the build surface MS that is irradiated with the build light EL. Moreover, the build apparatus SYS supplies the build materials M from the material nozzle 212 under the control of the control apparatus 7. As a result, the build materials M are supplied to the melt pool MP. The build materials M supplied to the melt pool MP are molten by the build light EL with which the melt pool MP is irradiated. Alternatively, the build material M supplied from the material nozzle 212 may be molten by the build light EL before reaching the melt pool MP and molten build material M may be supplied to the melt pool MP. Then, after the melt pool MP is not irradiated with the build light EL due to the movement of at least one of the build head 21 and the stage 31, the build materials M molten in the melt pool MP are cooled and solidified (namely, coagulated). As a result, as illustrated in FIG. 4C, the build object including the solidified build materials M is deposited on the build surface MS.

The build apparatus SYS repeats a series of build process including the formation of the melt pool MP by the irradiation with the build light EL, the supply of the build materials M to the melt pool MP, the melting of the supplied build materials M and the solidification of the molten build materials M while relatively moving the build head 21 relative to the build surface MS along at least one of the X-axis direction and the Y-axis direction, as illustrated in FIG. 4D. In this case, the build apparatus SYS irradiates an area on the build surface MS on which the build object should be built with the build light EL and does not irradiate an area on the build surface MS on which the build object should not be built with the build light EL. Namely, the build apparatus SYS moves the irradiation target position EP relative to the build surface MS along a predetermined movement trajectory and irradiates the build surface MS with the build light EL at a timing based on an aspect of a distribution of the area on which the build object should be built. As a result, the melt pool MP also moves on the build surface MS along a movement trajectory based on the movement trajectory of the irradiation target position EP. Specifically, the melt pool MP is formed in series at a part that is irradiated with the build light EL in the area along the movement trajectory of the irradiation target position EP on the build surface MS. As a result, as illustrated in FIG. 4E, the structural layer SL corresponding to the build object that is an aggregation of the build materials M that solidified after being molten, is built on the build surface MS. Namely, the structural layer SL that is an aggregation of the build obj ect built in a pattern based on the movement trajectory of the melt pool MP on the build surface MS (namely, the structural layer SL having a shape based on the movement trajectory of the melt pool MP in a planar view) is built. Incidentally, in a case where the irradiation target position EP is set at the area on which the build object should not be built, the build apparatus SYS may irradiate the irradiation target position EP with the build light EL and stop the supply of the build materials M. Moreover, in a case where the irradiation target position EP are set at the area on which the build obj ect should not be built, the build apparatus SYS may supply the build materials M to the irradiation target position EP and irradiate the irradiation target position EP with the build light EL having an intensity by which the melt pool MP is not formed.

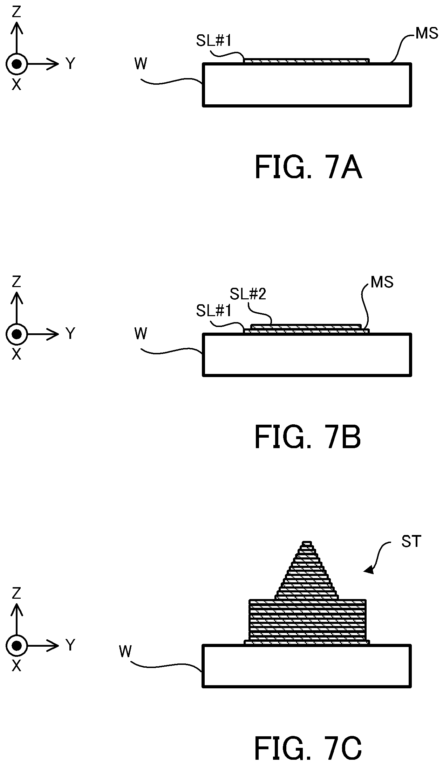

The build apparatus SYS repeats the operation for building the structural layer SL based on the 3D model data under the control of the control apparatus 7. Specifically, the control apparatus 7 firstly generates slice data by performing a slicing process on the 3D model data by a layer pitch before performing the operation for building the structural layer SL. The build apparatus SYS performs an operation for building a first structural layer SL#1 on the build surface MS that corresponds to the surface of the workpiece W based on the slice data corresponding to the structural layer SL#1. Specifically, the control apparatus 7 generates processing control information for controlling the build unit 2 and the stage unit 3 to build the first structural layer SL#1 based on the slice data corresponding to the structural layer SL#1. The processing control information may include processing path information indicating a movement trajectory (for example, a movement trajectory relative to the build surface MS) of the irradiation target position EP of the build light EL on the build surface MS, for example. Then, the control apparatus 7 controls the build unit 2 and the stage unit 3 to build the first structural layer SL#1 based on the processing control information. As a result, as illustrated in FIG. 7A, the structural layer SL#1 is built on the build surface MS. Note that the processing control information may be generated in advance before the build apparatus SYS starts the additive manufacturing. In this case, the control apparatus 7 may acquire the processing control information generated in advance instead of generating the processing control information, and control the build unit 2 and the stage unit 3 to build the first structural layer SL based on the acquired processing control information. Then, the build apparatus SYS sets a surface (namely, an upper surface) of the structural layer SL#1 to be a new build surface MS and builds a second structural layer SL#2 on the new build surface MS. In order to build the structural layer SL#2, firstly, the control apparatus 7 controls at least one of the head driving system 22 and the stage driving system 32 so that the build head 21 moves along the Z-axis direction relative to the stage 31. Specifically, the control apparatus 7 controls at least one of the head driving system 22 and the stage driving system 32 to move the build head 21 toward the +Z-axis side and / or to move the stage 31 toward the -Z-axis direction so that the irradiation target position EP is set on the surface of the structural layer SL#1 (namely, the new build surface MS) or inside the structural layer SL#2. Then, the build apparatus SYS builds the structural layer SL#2 on the structural layer SL#1 based on the slice data corresponding to the structural layer SL#2, by performing an operation that is the same as the operation for building the structural layer SL#1 under the control of the control apparatus 7. As a result, as illustrated in FIG. 7B, the structural layer SL#2 is built. Then, the same operation is repeated until all structural layers SL constituting the 3D structural object ST that should be built on the workpiece W are built. As a result, the 3D structural object ST is built by a layered structural object in which the plurality of structural layers SL are layered, as illustrated in FIG. 7C.

### (2-2) Build Operation of 3D Structural Object ST having Inclination Surface SS

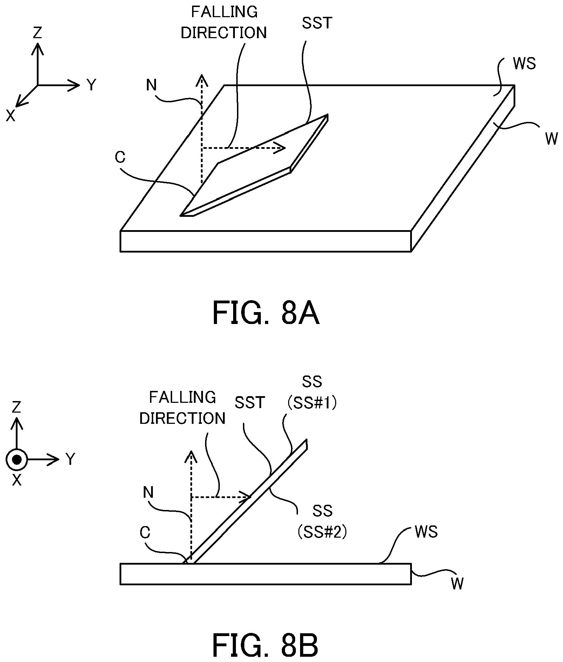

In the present example embodiment, the build apparatus SYS may build the 3D structural object ST including an inclination surface SS by performing the above-described additive manufacturing on the workpiece W under the control of the control apparatus 7. In the below-described description, the 3D structural object ST including the inclination surface SS is referred to as "inclination structural object SST" for convenience of described. One example of the inclination structural object SST is illustrated in FIG. 8A and 8B. FIG. 8A is a perspective view that illustrates one example of the inclination structural object SST, and FIG. 8B is a cross-sectional view that illustrates one example of the inclination structural object SST. As illustrated in FIG. 8A and FIG. 8B, the inclination surface SS may include a surface that is inclined with respect to the surface WS of the workpiece W (in an example illustrated in FIG. 8A and FIG. 8B, a surface along the XY plane). As illustrated in FIG. 8A and FIG. 8B, the inclination surface SS may include a surface that is inclined with respect to a normal of the surface WS of the workpiece W (in the example illustrated in inclined plane, a line extending along the Z-axis direction). As illustrated in inclined plane, the inclination surface SS may include a surface that is inclined with respect to the surface WS of the workpiece W. The inclination surface SS may include a surface that is inclined with respect to the Z-axis direction (namely, the gravity direction). Since the optical axis AX of the irradiation optical system 2111 is an axis parallel to the Z-axis, the inclination surface SS may include a surface that is inclined with respect to the optical axis direction along which the optical axis AX of the irradiation optical system 2111 extends. The inclination surface SS may include a surface, wherein a space is formed between this surface and the surface WS of the workpiece W. The inclination surface SS may include a surface below which a space is formed.

FIG. 8A and FIG. 8B illustrate an example in which the inclination structural object SST is a thin plate-shaped structural object that includes, as the inclination surface SS, an inclination surface SS#1 facing toward the +Z side and an inclination surface SS#2 facing toward the -Z side. Each of the inclination surfaces SS#1 and SS#2 has such a shape that it is more away from a connection part C along a thickness direction (specifically, the Y-axis direction) as it is more away upwardly from the connection part C between the surface WS of the workpiece W and the inclination structural object SST. Incidentally, in the present example embodiment, a direction along which the inclination surface SS is gradually away from a normal line N of the surface WS of the workpiece W extending from the connection part C (namely, a direction along which the inclination surface SS falls) is referred to as a falling direction for convenience of description. In the example illustrated in FIG. 8A and FIG. 8B, the Y-axis direction is the falling direction, because the normal line N of the surface WS of the workpiece W extends along the Z-axis direction and the inclination surface SS is gradually away from the normal line N along the Y-axis direction. Typically, the falling direction is a direction that intersects with the optical axis direction. Thus, the falling direction may be referred to as an intersecting direction. However, the shape of the inclination structural object SST is not limited to the example illustrated in FIG. 8A and FIG. 8B. The inclination of each of the inclination surfaces SS#1 and SS#2 of the inclination structural object SST may vary as it is more away from the surface WS of the workpiece W.

Even in a case where the inclination structural object SST is built, the build apparatus SYS builds the inclination structural object SST including the plurality of structural layers SL by building the plurality of structural layers SL that are layered in the Z-axis direction in sequence (namely, by layering the plurality of structural layers SL along the Z-axis direction). However, in a case where the build apparatus SYS builds the inclination structural object SST, the build apparatus SYS may build at least one other build object after building one build object in order to build each of the plurality of structural layers ST that constitute the 3D structural object ST. Namely, in order to build each structural layer SL, the build apparatus SYS may perform at least the series of build process illustrated in FIG. 4A to 4E for building one build object and then performs the series of build process illustrated in FIG. 4A to 4E for building other build object. In this case, as described later in detail, the inclination structural object SST can be properly built, compared to a case where one build object is built but other build object is not built in order to build each structural layer ST.

Next, a specific example of a build operation for building the inclination structural objects SST will be further described. Incidentally, in the below-described description, the build operation for building the inclination structural object SST illustrated in FIG. 8A and FIG. 8B will be described. However, the build apparatus SYS may build other inclination structural objects SST having a shape different from that of the inclination structural objects SST illustrated in FIG. 8A and FIG. 8B by performing an operation that is same as the below-described build operation. Moreover, as described above, the build apparatus SYS builds the inclination structural object SST under the control of the control apparatus 7. Thus, the below-described description related to the build operation may be regarded to be substantially equivalent to a description related to an operation by the control apparatus 7 to control the build apparatus SYS to build the inclination structural object SST.

### (2-2-1) First Build Operation of Inclination Structural Object SST

Firstly, a first specific example of the build operation for building the inclination structural object SST on the workpiece W (a first build operation) will be described. As described above, in a case where the inclination structural object SST is built, the build apparatus SYS builds one build object and then builds other build object at least in order to build each structural layer SL on the build surface MS. Especially, the build apparatus SYS irradiates the build surface MS with the build light EL after setting the irradiation target position EP at one position of the build surface MS to thereby build one build object, and then irradiates the one build object with the build light EL after setting the irradiation target position EP at other position of the one build object to thereby build other build object. The first build operation is an operation for building the inclination structural object SST by building one build object and other build object so that one position at which the irradiation target position EP is set for building one build object and other position at which the irradiation target position EP is set for building other build object are the same positions along the falling direction (the intersecting direction). Nex, with reference to FIG. 8 to FIG. 21, a flow of the first build operation will be described.

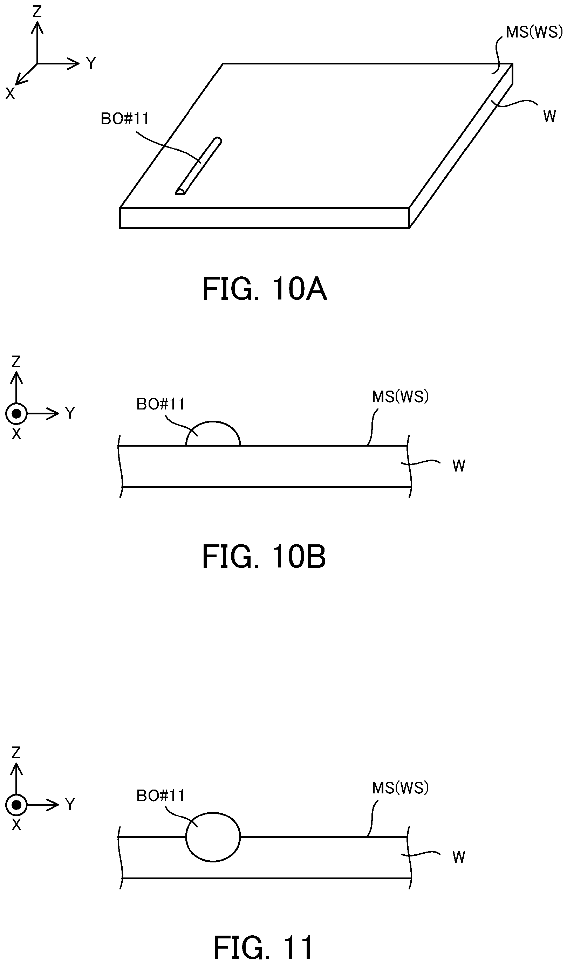

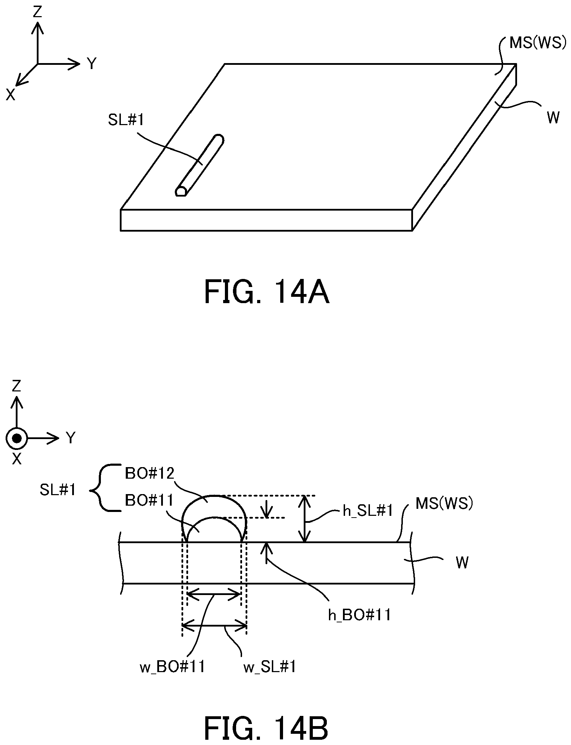

Firstly, the build apparatus SYS builds a first structural layer SL#1 that constitutes the inclination structural object SST on the surface WS of the workpiece W that is set as the build surface MS. Specifically, the build apparatus SYS builds a build object BO#11 (see FIG. 10 below) as one build object, and then builds a build object BO#12 (see FIG. 14 below) as other build object, in order to build the structural layer SL#1. Specifically, the build apparatus SYS builds the build objects BO#11 and BO#12 that extend along a scanning direction that intersects with the optical axis direction and the falling direction. For example, in a case where the inclination structural object SST illustrated in FIG. 8A and 8B is built, the build apparatus SYS builds the build objects BO#11 and BO#12 that extend along the scanning direction (namely, the X-axis direction) that intersects with the Z-axis direction, which is the optical axis direction, and the Y-axis direction, which is the falling direction.

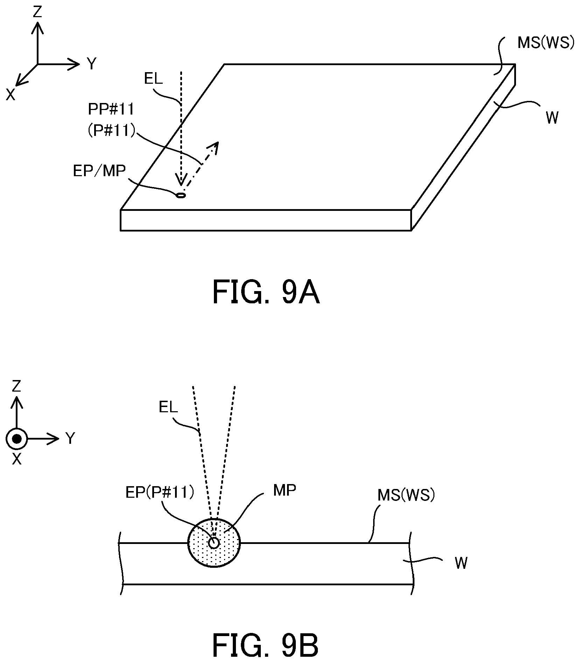

The build apparatus SYS firstly moves at least one of the build head 21 and stage 31 so that the irradiation target position EP is allowed to be set on the surface WS or inside the workpiece W, as illustrated in FIG. 9A and 9B, in order to build the build object BO #11. Then, the build apparatus SYS moves the irradiation target position EP relative to the build surface MS based on the processing control information (especially, the processing path information including a processing path PP#11 for building the build object BO#11). As a result, the irradiation target position EP is sequentially set at a position P#11 indicated by the processing path PP#11 on the surface WS or inside the workpiece W. Incidentally, in the example illustrated in FIG. 9A and 9B, the processing path PP#11 indicates the movement trajectory that extends along the X-axis direction, which is the scanning direction. Namely, the processing path PP#11 indicates the movement trajectory of the irradiation target position EP for building the build object BO#11 that extends along the X-axis direction, which is the scanning direction.

The build apparatus SYS irradiates an area of the build surface MS at which the build object BO#11 should be built with the build light EL, while moving the irradiation target position EP relative to the build surface MS. As a result, as illustrated in FIG. 9B, the melt pool MP is formed in the area on the build surface MS at which the build object BO#11 should be built. Furthermore, when the melt pool MP is formed on the build surface MS, the build material M is supplied to the melt pool MP from the material nozzle 212. Incidentally, the melt pool MP in FIG. 9B is merely one example, and the melt pool MP having a shape that is different from the shape illustrated in FIG. 9B may be formed at a position that is different from the position illustrated in FIG. 9B.

Then, after the melt pool MP is not irradiated with the build light EL due to the movement of at least one of the build head 21 and stage 31, the build materials M molten in the melt pool MP are cooled and solidified (namely, coagulated). As a result, as illustrated in FIG. 10A and 10B, the build object BO#11 including the solidified build material M is built on the build surface MS. Incidentally, the build object BO#11 in FIG. 10B is merely one example, and the build object BO#11 having a shape that is different from the shape illustrated in FIG. 10B may be built at a position that is different from the position illustrated in FIG. 10B.

Incidentally, FIG. 10B illustrates an example in which the build object BO#11 is built on the build surface MS (in the example illustrated in FIG. 10B, the surface WS of the workpiece W). Namely, FIG. 10B illustrates an example in which the build object BO#11 has such a shape that it does not enter the inside of the workpiece W. On the other hand, in a case where the melt pool MP is formed on the build surface MS that is set on the surface WS of the workpiece W, there is a possibility that the melt pool MP includes a material (for example, molten metal) that was a part of the workpiece W. In this case, as illustrated in FIG. 11, the build object BO#11 may have such a shape that it enters the inside of the workpiece W. Note that FIG. 10(b) and FIG. 11 illustrate a boundary between the build object BO#11 and the workpiece W for the sake of clarity of the drawing. However, the boundary between the build material BO#11 and the workpiece W may not be a boundary that is visible at a cross-section thereof. For example, in a case where the build material M and the material constituting the workpiece W are the same type of material, there is a possibility that the boundary between the build object BO#11 and the workpiece W is not the boundary that is visible at the cross-section thereof. On the other hand, in a case where the build material M and the material comprising the workpiece W are different types of materials, the boundary between the build object BO#11 and the workpiece W may be the boundary that is visible at the cross-section thereof. The same is true in the below-described description.

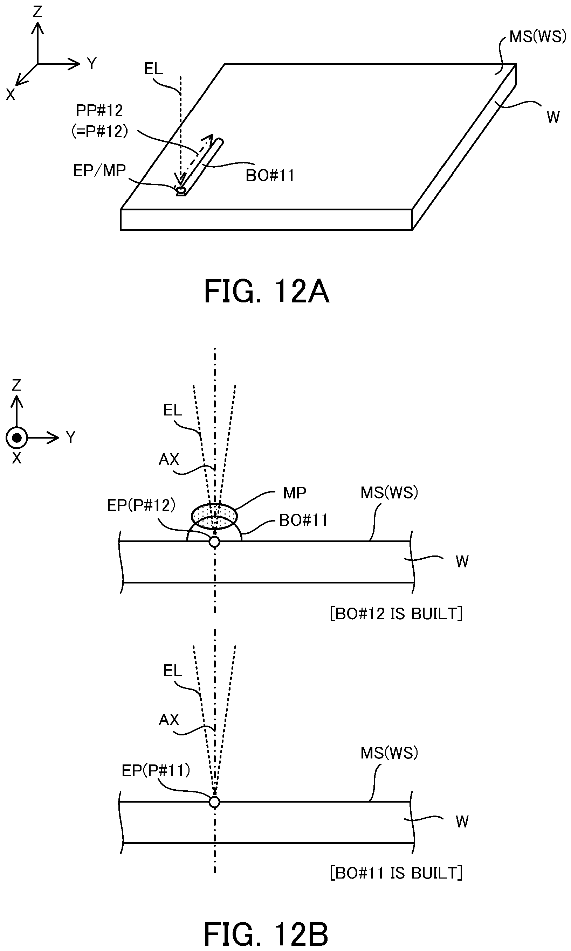

Then, the build apparatus SYS builds the build object BO#12. Thus, the build apparatus SYS firstly moves at least one of the build head 21 and stage 31 so that the irradiation target position EP is allowed to be set on the surface of or inside the build object BO#11 that has already been built, as illustrated in FIG. 12A and FIG. 12B. However, in a case where the irradiation target position EP is already allowed to be set on the surface WS of or inside of the build object BO# 11 without moving the build head 21 and stage 31, the build apparatus SYS may not move at least one of the build head 21 and stage 31. Then, the build apparatus SYS moves the irradiation target position EP relative to the build surface MS based on the processing control information (especially, the processing path information indicating a processing path PP#12 for building the build object BO#12). As a result, the irradiation target position EP is sequentially set at a position P#12 indicated by the processing path PP#12 on the surface of or inside the build object BO#11.

In an example illustrated in FIG. 12A and 12B, the processing path PP#12 indicates the movement trajectory that extends along the X-axis direction, which is the scanning direction, as with the processing path PP#11. Namely, the processing path PP#12 indicates the movement trajectory of the irradiation target position EP for building the build object BO#12 that extends along the X-axis direction, which is the scanning direction. In this manner, at least two processing paths for building at least two build objects, respectively, in order to build a certain structural layer SL may indicate the movement trajectory having the same shape. At least two processing paths for building at least two build objects, respectively, in order to build a certain structural layer SL may indicate the movement trajectories having shapes that are in a congruent relationship.

In the present example embodiment, as illustrated in FIG. 12B, the build apparatus SYS sets the irradiation target position EP so that the position P#12 (see an upper drawing in FIG. 12B) at which the irradiation target position EP for building the build object BO#12 is set and the position P#11 (see a lower drawing in FIG. 12B) at which the irradiation target position EP for building the build object BO#11 is set are the same positions along the Y-axis direction, which is the falling direction. Incidentally, the upper drawing in FIG. 12B illustrates the position P#12 at which the irradiation target position EP for building the build object BO#12 is set, and the lower drawing in FIG. 12B illustrates the position P#11 at which the irradiation target position EP for building the build object BO#11 is set. Thus, the build apparatus SYS may set (namely, move) the irradiation target position EP based on the processing path information including the processing path PP#12 indicating the position P#12 that is same as the position P#11 indicated by the processing path PP#11 in the falling direction.

Furthermore, as illustrated in FIG. 12B, the build apparatus SYS may set the irradiation target position EP so that the position P#12 (see an upper drawing in FIG. 12B) and the position P#11 (see a lower drawing in FIG. 12B) are the same positions along the Z-axis direction, which is the optical axis direction. In this case, the build apparatus SYS may set (namely, move) the irradiation target position EP based on the processing path information including the processing path PP#12 indicating the position P#12 that is same as the position P#11 indicated by the processing path PP#11 in the optical axis direction.

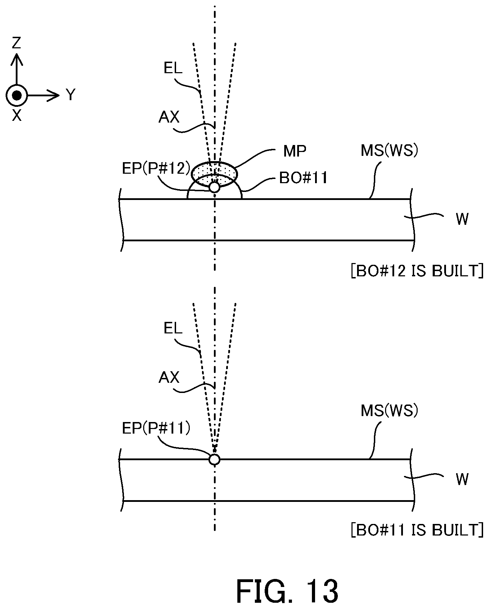

Alternatively, the build apparatus SYS may set the irradiation target position EP so that the position P#12 and the position P#11 are the different positions along the optical axis direction. In this case, the build apparatus SYS may set (namely, move) the irradiation target position EP based on the processing path information including the processing path PP#12 indicating the position P#12 that is different from the position P#11 indicated by the processing path PP#11 in the optical axis direction. For example, as illustrated in FIG. 13, the build apparatus SYS may set the irradiation target position EP so that the position P#12 is located above (namely, at the +Z side of) the position P#11 in the optical axis direction.

The build apparatus SYS irradiates an area of the build object BO#11 at which the build object BO#12 should be built with the build light EL, while moving the irradiation target position EP relative to the build surface MS. As a result, as illustrated in FIG. 12B, the melt pool MP is formed in the area on the build object BO#11 at which the build object BO#12 should be built. Furthermore, when the melt pool MP is formed on the build surface MS, the build material M is supplied to the melt pool MP from the material nozzle 212. Incidentally, the melt pool MP in FIG. 12B is merely one example, and the melt pool MP having a shape that is different from the shape illustrated in FIG. 12B may be formed at a position that is different from the position illustrated in FIG. 12B.

Then, after the melt pool MP is not irradiated with the build light EL due to the movement of at least one of the build head 21 and stage 31, the build materials M molten in the melt pool MP are cooled and solidified (namely, coagulated). As a result, as illustrated in FIG. 14A and 14B, the build object BO#12 including the solidified build material M is built. In an example illustrated in FIG. 14A and 14B, the build object BO#12 is built on the build object BO#11. Incidentally, the build object BO#12 in FIG. 14B is merely one example, and the build object BO#12 having a shape that is different from the shape illustrated in FIG. 14B may be built at a position that is different from the position illustrated in FIG. 14B.

In this manner, the structural layer SL#1 including the build objects BO#11 and BO#12 is built. In this case, a height (namely, a size in the Z-axis direction) h_SL#1 of the structural layer SL#1 is higher than a height h_BO#11 of the build object BO#11 that constitutes the structural layer SL#1. Thus, according to the first build operation, the structural layer SL#1 the height of which is higher can be built, compared to a case where the structural layer SL#1 that includes the build object BO#11 but does not include the build object BO#12 is built. However, the height h_SL#1 of the structural layer SL#1 may not be higher than the height h_BO#11 of the build object BO#11. For example, the height h_SL#1 of the structural layer SL#1 may be equal to the height h_BO#11 of the build object BO#11.

Moreover, a width (namely, a size in a direction along the XY plane, and a size along the Y-axis direction in the example illustrated in FIG. 14B) w_SL#1 of the structural layer SL#1 is wider than a width w_BO#11 of the build obj ect BO#1 1 that constitutes the structural layer SL#1. Thus, according to the first build operation, the structural layer SL#1 the width of which is wider can be built, compared to a case where the structural layer SL#1 that includes the build object BO#11 but does not include the build object BO#12 is built. However, the width w_SL#1 of the structural layer SL#1 may not be wider than the width w_BO#11 of the build object BO#11 constituting the structural layer SL#1. For example, the width w_SL#1 of the structural layer SL#1 may be equal to the width w_BO#11 of the build object BO#11 constituting the structural layer SL#1.

Note that the build apparatus SYS may build at least one other build object constituting the structural layer SL#1 after building the build objects BO#11 and BO#12. For example, the build apparatus SYS may further build an unillustrated build object BO#13 that is different from the build objects BO#11 and BO#12 by newly setting the irradiation target position EP on the surface of or inside the build object BO#12 that has already been built. In this case, the structural layer SL#1 including at least one other build object in addition to the build objects BO#11 and BO#12 is built. The same is true in a case where the structural layer SL that is different from the structural layer SL#1 is built.

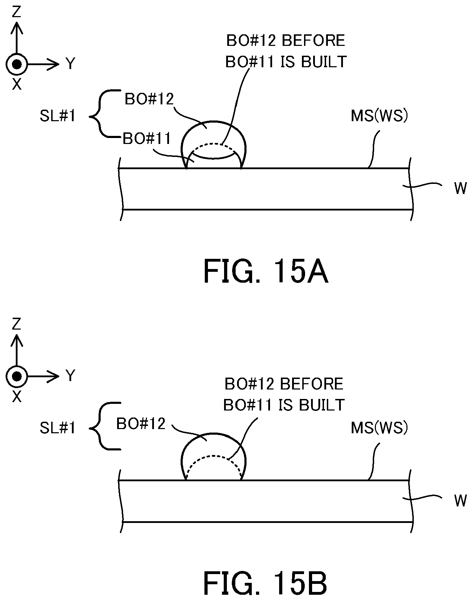

Moreover, FIG. 14B illustrates an example in which the build object BO#12 has such a shape that it does not enter the inside of the build object BO#11 on which the build object BO#12 has not been built yet. On the other hand, in a case where the melt pool MP is formed in the build object BO#11, there is a possibility that the melt pool MP includes a material (for example, molten metal) that was at least a part of the build object BO#11. In this case, as illustrated in FIG. 15A and FIG. 15B, the build object BO#12 may have such a shape that it at least partially enters the inside of the build object BO#11 on which the build object BO#12 has not been built yet. For example, FIG. 15A illustrates an example of the build object BO#12 that is built in a case where the melt pool MP is formed in the build object BO#11 thereby a part of the build object BO#11 is melted. In this case, as illustrated in FIG. 15A, the build object BO#12 may have such a shape that a part thereof enters the inside of the build object BO#11 on which the build object BO#12 has not been built yet. In this case, even in a case where a part of the build object BO#11 is melted due to the formation of the melt pool MP in the build object BO# 11, other part of the build object BO#11 is not melted. Thus, a part of the build object BO#11 remains. On the other hand, for example, FIG. 15B illustrates an example of the build object BO#12 that is built in a case where the melt pool MP is formed in the build object BO#11 thereby whole of the build object BO#11 ismelted. Inthiscase, as illustrated in FIG. 15B, the build object BO#12 may have such a shape that it entirely enters the inside of the build object BO #11 on which the build object BO #12 has not been built yet. In this case, the build object BO#11 may not remain partially after the build object BO#12 is built because whole of the build obj ect BO#11 is melted by the formation of the melt pool MP in the build object BO#11. Namely, the build object BO#11 may be substantially absorbed by the build object BO#12. In this case, the structural layer SL#1 may be regarded to include the build object BO#12 but not to include the build object BO#11. Alternatively, even in this case, the structural layer SL#1 may be regarded to include the build objects BP#11 and BO#12 because the build object BO#12 includes the material that has originally constituted the build object BO#11. Incidentally, not only the build object BO#12, but also in a case where other build object is built on one built object, other build object may have such a shape that it does not enter the inside of one build object or may have such a shape that it at least partially enters the inside of one build object.

Incidentally, a state in which "a first build object does not enter the inside of a second build object on which the first build object has not been built yet" here may mean "a state in which a shape of the second build object does not change before and after the first build object is built". The state in which "a first build object does not enter the inside of a second build object on which the first build object has not been built yet" may mean "a state in which at least a part of the first build object does not exist in the area in which the second build object has existed before the first build object is built". Conversely, the state in which "a first build object enters the inside of a second build object on which the first build object has not been built yet" may mean "a state in which the shape of the second build object changes before and after the first build object is built. The state in which "a first build object enters the inside of a second build object on which the first build object has not been built yet" may mean "a state in which at least a part of the first build object exists in the area in which the second build object has existed before the first build object is built". The same can also be applied to the above-described state in which "the build object enters or does not enter the inside of the workpiece W on which the build object has not been built yet".

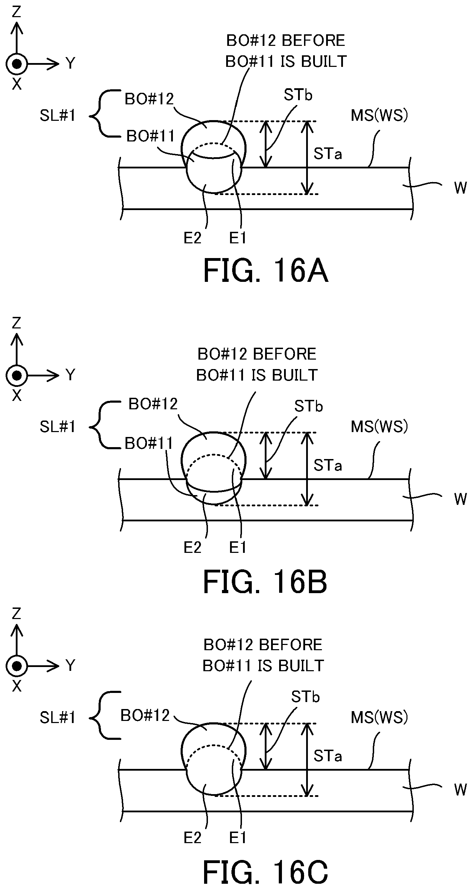

Furthermore, as described above with reference to FIG. 11, the build object BO#11 may have such a shape that it enters the inside of the workpiece W. Even in this case, the build object BO#12 may have such a shape that it does not enter the inside of the build object BO#11 on which the build object BO#12 has not been built yet. Alternatively, as illustrated in FIG. 16A to 16(b), the build object BO#12 may have such a shape that it at least partially enters the inside of the build object BO#11 on which the build object BO#12 has not been built yet. For example, FIG. 16A illustrates an example in which the build object BO#12 enters the inside of a non-entering part E1 of the build object BO#11, which does not enter the inside of the workpiece W, but does not enter the inside of an entering part E2 of the build object BO#11, which enters the inside of the workpiece W. For example, FIG. 16B illustrates an example in which the build object BO#12 enters the inside of the non-entering part E1 of the build object BO#11, which does not enter the inside of the workpiece W, and also enters the inside of the entering part E2 of the build object BO#11, which enters the inside of the workpiece W. For example, FIG. 16C illustrates an example in which the build object BO#12 enters the inside of the non-entering part E1 of the build object BO#11, which does not enter the inside of the workpiece W, and also entirely enters the inside of the entering part E2 of the build object BO#11, which enters the inside of the workpiece W. Namely, FIG. 16B and FIG. 16C illustrates an example in which the build object BO#12 enters the inside of the workpiece W.

Incidentally, in a case where at least one of the build objects BO#11 and BO#12 has such a shape that it enters the inside of the workpiece W, a structural object STa (see FIG. 16A to 16C) including a part of the build objects BO#11 and BO#12 that enters the inside of the workpiece W may be referred to as the structure layer SL#1. Alternatively, a structural object STb (see FIG. 16B to 16C) not including the part of the build object BO#11 and BO#12 that enters the inside of the workpiece W may be referred to as the structural layer SL#1.

After the structural layer SL#1 is built, the build apparatus SYS builds a second structural layer SL#2, which constitutes the inclination structural object SST, on the structural layer SL#1, after setting the surface of the structural layer SL#1 as a new build surface MS. Specifically, the build apparatus SYS builds a build object BO#21 as one build object, and then builds a build object BO#22 as other build object, in order to build the structural layer SL#2. Specifically, the build apparatus SYS builds the build objects BO#21 and BO#22 that extend along the scanning direction that intersects with the optical axis direction and the falling direction. For example, in a case where the inclination structural object SST illustrated in FIG. 8A and FIG. 8B, the build apparatus SYS builds the build objects BO#21 and BO#22 that extend along the scanning direction (namely, the X-axis direction) that intersects with the Z-axis direction, which is the optical axis direction, and the Y-axis direction, which is the falling direction.

The build apparatus SYS firstly moves at least one of the build head 21 and stage 31 so that the irradiation target position EP is allowed to be set on the surface of or inside the structural layer SL#1 (for example, on the surface of or inside the build object BO#12 constituting the structural layer SL#1, the same is applied to the below-described description) that has been built, as illustrated in FIG. 9A and 9B, in order to build the build object BO #21. However, in a case where the irradiation target position EP is already allowed to be set on the surface of or inside of the structural layer SL#1 without moving the build head 21 and stage 31, the build apparatus SYS may not move at least one of the build head 21 and stage 31. Then, the build apparatus SYS moves the irradiation target position EP relative to the build surface MS based on the processing control information (especially, the processing path information indicating a processing path PP#21 for building the build object BO#21). As a result, the irradiation target position EP is sequentially set at a position P#21 indicated by the processing path PP#12 on the surface of or inside the structural layer SL#1.

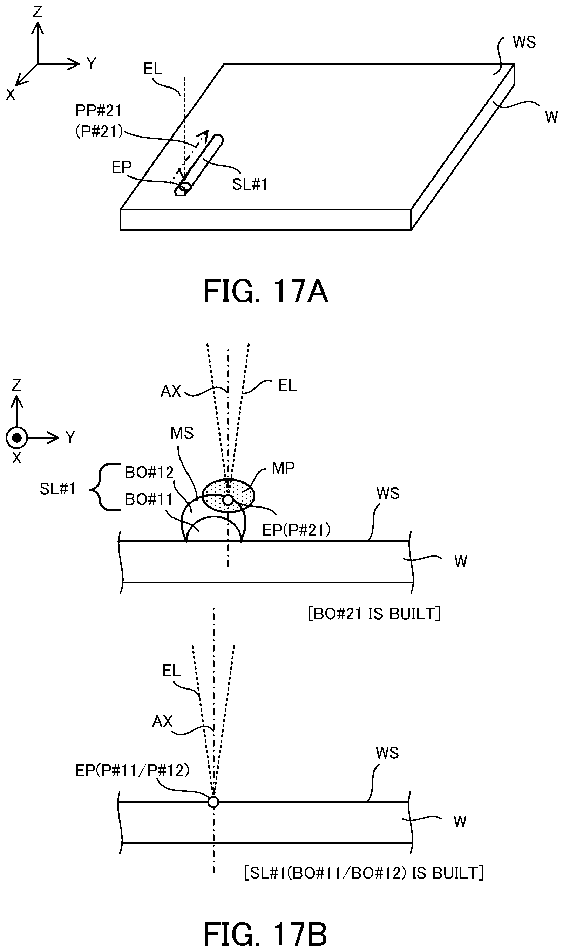

In the present example embodiment, as illustrated in FIG. 17B, the build apparatus SYS sets the position P#21 (see an upper drawing in FIG. 17B) at which the irradiation target position EP for building the build object BO#21 is set and the above-described positions P#11 and P#12 (see the lower drawing in FIG. 17B) are different positions in the Y-axis direction that is the falling direction. Incidentally, the upper drawing in FIG. 17B illustrates the position P#21 at which the irradiation target position EP for building the build object BO#21 is set, and the lower drawing in FIG. 17B illustrates the positions P#11 and P#12 at which the irradiation target position EP for building the build objects BO#11 and BO#12, respectively, is set. Specifically, the build apparatus SYS may set the irradiation target position EP so that the position P#21 is away by a first predetermined amount from the positions P#11 and P#12 along the Y-axis direction, which is the falling direction, toward a direction (a direction toward the +Y side in an example illustrated in FIG. 17A and FIG. 17B) toward which the inclination surface SS falls relative to the normal line N of the workpiece W that extends from the connection part C (see FIG. 8A and FIG. 8B) between the workpiece W and the inclination structural object SST. Thus, the build apparatus SYS may set (namely, move) the irradiation target position EP based on the processing path information including the processing path PP#21 indicating the position P#21 that is different from the position P#11 indicated by the processing path PP#11 and the position P#12 indicated by the processing path PP#12 in the falling direction.

Here, as described above with reference to FIG. 12B, the position P#11 and the position P#12 are the same positions in the falling direction. Thus, the build apparatus SYS may be regarded to set the irradiation target position EP so that a distance between the position P#11 and the position P#12 in the falling direction is shorter than a distance between the position P#21 and at least one of the positions P#11 and P#12 in the falling direction. The build apparatus SYS may be regarded to set the irradiation target position EP so that the distance between the position P#11 and the position P#12 in the falling direction is shorter than a first predetermined distance and the distance between the position P#21 and at least one of the positions P#11 and P#12 in the falling direction is longer than the first predetermined distance.

Moreover, in the present example embodiment, as illustrated in FIG. 17B, the build apparatus SYS sets the irradiation target position EP so that the position P#21 (see the upper drawing in FIG. 17B) and the positions P#11 and P#12 (see the lower drawing in FIG. 17B) are different positions in the Z-axis direction that is the optical axis direction. Thus, the build apparatus SYS may set (namely, move) the irradiation target position EP based on the processing path information including the processing path PP#21 indicating the position P#21 that is different from the position P#11 indicated by the processing path PP#11 and the position P#12 indicated by the processing path PP#12 in the optical axis direction.

Here, as described above, the position P#11 and the position P#12 may be the same positions or may be different positions in the optical axis direction. In this case, the build apparatus SYS may set the irradiation target position EP so that a distance between the position P#11 and the position P#12 in the optical axis direction is shorter than a distance between the position P#21 and at least one of the positions P#11 and P#12 in the optical axis direction. The build apparatus SYS may set the irradiation target position EP so that the distance between the position P#11 and the position P#12 in the optical axis direction is shorter than a second predetermined distance and the distance between the position P#21 and at least one of the positions P#11 and P#12 in the optical axis direction is longer than the second predetermined distance.

The build apparatus SYS irradiates an area of the structural layer SL#1 (for example, the build object BO#12) at which the build object BO#21 should be built with the build light EL, while moving the irradiation target position EP relative to the workpiece W. As a result, as illustrated in FIG. 17B, the melt pool MP is formed in the area on the structural layer SL#1 (for example, the build object BO#12) at which the build object BO#21 should be built. Furthermore, when the melt pool MP is formed on the build surface MS, the build material M is supplied to the melt pool MP from the material nozzle 212. Incidentally, the melt pool MP in FIG. 17B is merely one example, and the melt pool MP having a shape that is different from the shape illustrated in FIG. 17B may be formed at a position that is different from the position illustrated in FIG. 17B.

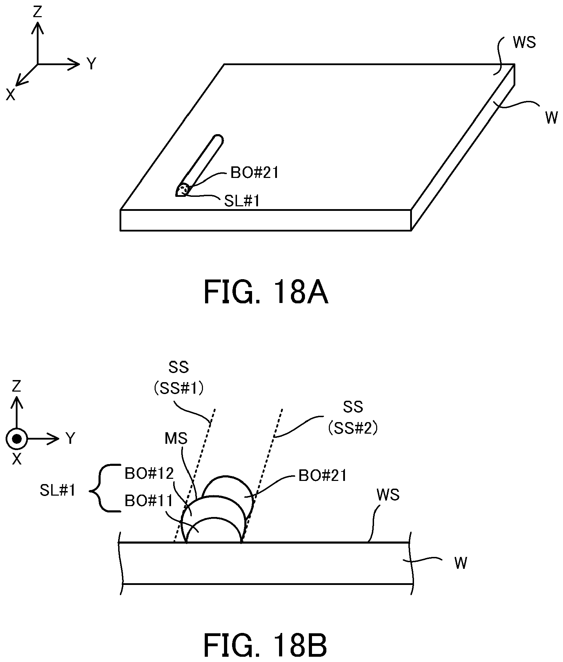

Then, after the melt pool MP is not irradiated with the build light EL due to the movement of at least one of the build head 21 and stage 31, the build materials M molten in the melt pool MP are cooled and solidified (namely, coagulated). As a result, as illustrated in FIG. 18A and 18B, the build object BO#21 including the solidified build material M is built. In an example illustrated in FIG. 18A and 18B, the build object BO#21 is built on the structural layer SL#1 (for example, the build object BO#12). Incidentally, the build object BO#21 in FIG. 18B is merely one example, and the build object BO#21 having a shape that is different from the shape illustrated in FIG. 18B may be built at a position that is different from the position illustrated in FIG. 18B.

Here, as described above, since the position P#21 at which the irradiation target position EP for building the build object BO#21 is set is away from the positions P#11 and P#12 at which the irradiation target position EP for building the structural layer SL#1 is set in the Y-axis direction that is the falling direction, a center of the build object BO#21 in the falling direction is away from a center of the structural layer SL#1 in the falling direction as illustrated in FIG. 18B. As a result, the build object BO#21 is built to extend from the structural layer SL# 1 toward a direction that is inclined with respect to the Z-axis direction (namely, the gravity direction) that is the optical axis direction. As a result, the build object BO#21 can form the inclination surface SS that is inclined to fall along the Y-axis direction that is the falling direction, together with the structural layer SL#1. Namely, the build object BO#21 can form the inclination surface SS that extends (spreads) in a direction that is inclined with respect to the gravity direction (the optical axis direction or the normal line L of the surface WS of the workpiece W), together with the structural layer SL#1.

Note that FIG. 18B illustrates an example in which the build object BO#21 has such a shape that it does not enter the inside of the structural layer SL#1 located below the build object BO#21. On the other hand, in a case where the melt pool MP is formed on the build surface MS that is set on the surface of the structural layer SL#1, there is a possibility that the melt pool MP includes a material (for example, molten metal) that was at least a part of the structural layer SL#1. In this case, the build object BO#21 may have such a shape that it at least partially enters the inside of the structural layer SL#1. Note that a state in which the build object BO#21 at least partially enters the inside of the structural layer SL#1 located below the build object BO#21 may be same as at least one of the state in which the build object BO#11 enters the inside of the workpiece W located below the build object BO#11 (see FIG. 11) and the state in which the build object BO#12 enters the build object BO#11 located below the build object BO#12 (see FIG. 15A to FIG. 15B and FIG. 16A to FIG. 16C). Thus, a detailed description related to the state in which the build object BO#21 at least partially enters the inside of the structural layer SL#1 located below the build object BO#21 is omitted.

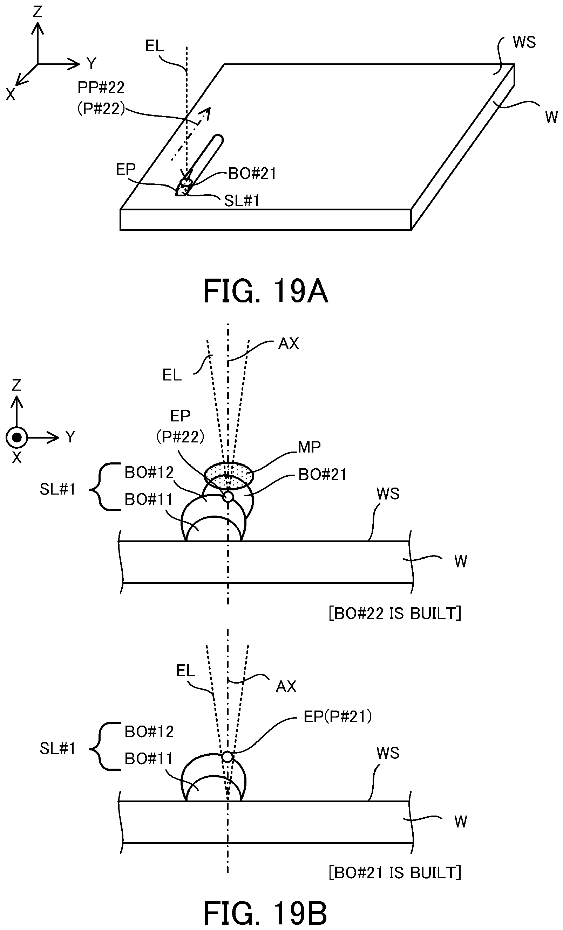

Then, the build apparatus SYS builds the build object BO#22. Thus, the build apparatus SYS firstly moves at least one of the build head 21 and stage 31 so that the irradiation target position EP is allowed to be set on the surface of or inside the build object BO#21 that has already been built, as illustrated in FIG. 19A and FIG. 19B. However, in a case where the irradiation target position EP is already allowed to be set on the surface WS of or inside of the build object BO#21 without moving the build head 21 and stage 31, the build apparatus SYS may not move at least one of the build head 21 and stage 31. Then, the build apparatus SYS moves the irradiation target position EP relative to the build surface MS based on the processing control information (especially, the processing path information indicating a processing path PP#22 for building the build object BO#22). As a result, the irradiation target position EP is sequentially set at a position P#22 indicated by the processing path PP#22 on the surface of or inside the build object BO#21.

In the present example embodiment, as illustrated in FIG. 19B, the build apparatus SYS sets the irradiation target position EP so that the position P#22 (see an upper drawing in FIG. 19B) at which the irradiation target position EP for building the build object BO#22 is set and the position P#21 (see a lower drawing in FIG. 19B) at which the irradiation target position EP for building the build object BO#21 is set are the same positions along the Y-axis direction, which is the falling direction. Incidentally, the upper drawing in FIG. 19B illustrates the position P#22 at which the irradiation target position EP for building the build object BO#22 is set, and the lower drawing in FIG. 19B illustrates the position P#21 at which the irradiation target position EP for building the build object BO#21 is set. Thus, the build apparatus SYS may set (namely, move) the irradiation target position EP based on the processing path information including the processing path PP#22 indicating the position P#22 that is same as the position P#21 indicated by the processing path PP#21 in the falling direction.

In this case, the build apparatus SYS may be regarded to set the irradiation target position EP so that a distance between the position P#21 and the position P#22 in the falling direction is shorter than a distance between at least one of the positions P#21 and P#22 and at least one of the positions P#11 and P#12 in the falling direction. The build apparatus SYS may be regarded to set the irradiation target position EP so that the distance between the position P#21 and the position P#22 in the falling direction is shorter than a first predetermined distance and the distance between at least one of the positions P#21 and P#22 and at least one of the positions P#11 and P#12 in the falling direction is longer than the first predetermined distance.

Furthermore, as illustrated in FIG. 19B, the build apparatus SYS may set the irradiation target position EP so that the position P#22 and the position P#21 are the same positions along the Z-axis direction, which is the optical axis direction. In this case, the build apparatus SYS may set (namely, move) the irradiation target position EP based on the processing path information including the processing path PP#22 indicating the position P#22 that is same as the position P#21 indicated by the processing path PP#21 in the optical axis direction. Alternatively, the build apparatus SYS may set the irradiation target position EP so that the position P#22 and the position P#21 are the different positions along the optical axis direction. In this case, the build apparatus SYS may set (namely, move) the irradiation target position EP based on the processing path information including the processing path PP#22 indicating the position P#22 that is different from the position P#21 indicated by the processing path PP#21 in the optical axis direction.

In this case, the build apparatus SYS may set the irradiation target position EP so that a distance between the position P#21 and the position P#22 in the optical axis direction is shorter than a distance between at least one of the positions P#21 and P#22 and at least one of the positions P#11 and P#12 in the optical axis direction. The build apparatus SYS may set the irradiation target position EP so that the distance between the position P#21 and the position P#22 in the optical axis direction is shorter than a second predetermined distance and the distance between at least one of the positions P#21 and P#22 and at least one of the positions P#11 and P#12 in the optical axis direction is longer than the second predetermined distance.

The build apparatus SYS irradiates an area of the build object BO#21 at which the build object BO#22 should be built with the build light EL, while moving the irradiation target position EP relative to the build surface MS. As a result, as illustrated in FIG. 19B, the melt pool MP is formed in the area on the build object BO#21 at which the build object BO#22 should be built. Furthermore, when the melt pool MP is formed on the build surface MS, the build material M is supplied to the melt pool MP from the material nozzle 212. Incidentally, the melt pool MP in FIG. 19B is merely one example, and the melt pool MP having a shape that is different from the shape illustrated in FIG. 19B may be formed at a position that is different from the position illustrated in FIG. 19B.

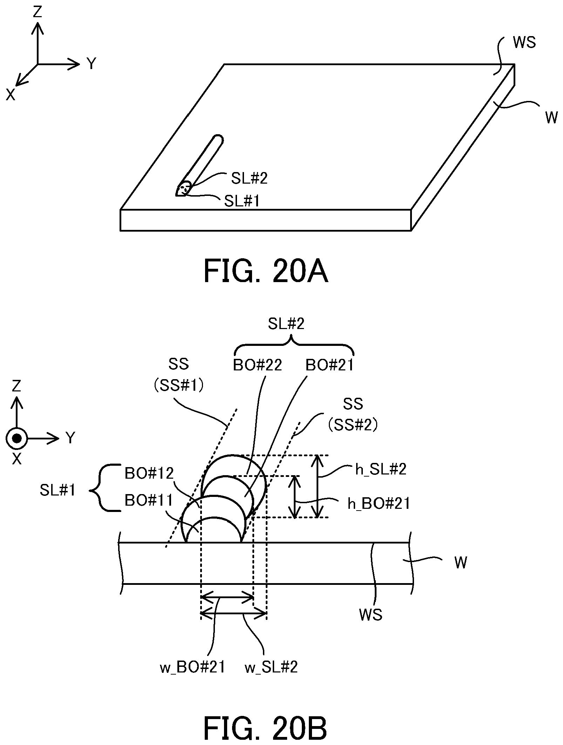

Then, after the melt pool MP is not irradiated with the build light EL due to the movement of at least one of the build head 21 and stage 31, the build materials M molten in the melt pool MP are cooled and solidified (namely, coagulated). As a result, as illustrated in FIG. 20A and 20B, the build object BO#22 including the solidified build material M is built. In an example illustrated in FIG. 20A and 20B, the build object BO#22 is built on the build object BO#21. Incidentally, the build object BO#22 in FIG. 20B is merely one example, and the build object BO#22 having a shape that is different from the shape illustrated in FIG. 20B may be built at a position that is different from the position illustrated in FIG. 20B.

In this manner, the structural layer SL#2 including the build objects BO#21 and BO#22 is built. In this case, a height (namely, a size in the Z-axis direction) h_SL#2 of the structural layer SL#2 is higher than a height h_BO#21 of the build object BO#21 that constitutes the structural layer SL#2. Thus, according to the first build operation, the structural layer SL#2 the height of which is higher can be built, compared to a case where the structural layer SL#2 that includes the build object BO#21 but does not include the build object BO#22 is built. However, the height h_SL#2 of the structural layer SL#2 may not be higher than the height h_BO#21 of the build object BO#21. For example, the height h_SL#2 of the structural layer SL#2 may be equal to the height h_BO#21 of the build object BO#21.

Moreover, a width (namely, a size in a direction along the XY plane, and a size along the Y-axis direction in the example illustrated in FIG. 20B) w_SL#2 of the structural layer SL#2 is wider than a width w_BO#21 of the build object BO#21 that constitutes the structural layer SL#2. Thus, according to the first build operation, the structural layer SL#2 the width of which is wider can be built, compared to a case where the structural layer SL#2 that includes the build object BO#21 but does not include the build object BO#22 is built. However, the width w_SL#2 of the structural layer SL#2 may not be wider than the width w_BO#21 of the build object BO#21. For example, the width w_SL#2 of the structural layer SL#2 may be equal to the width w_BO#21 of the build object BO#21 constituting the structural layer SL#2.

Here, as described above, since the position P#22 at which the irradiation target position EP for building the build object BO#22 is set is away from the positions P#11 and P#12 at which the irradiation target position EP for building the structural layer SL#1 is set in the Y-axis direction that is the falling direction, a center of the build object BO#22 in the falling direction is away from the center of the structural layer SL#1 in the falling direction as illustrated in FIG. 20B, as with the center of the build object BO#21. As a result, the build object BO#22 is built to extend from the structural layer SL#1 toward a direction that is inclined with respect to the Z-axis direction (namely, the gravity direction) that is the optical axis direction. As a result, the build object BO#22 can form the inclination surface SS that is inclined to fall along the Y-axis direction that is the falling direction, together with the structural layer SL#1. Namely, the structural layer SL#2 including the build objects BO#21 and BO#22 can form the inclination surface SS that extends (spreads) in a direction that is inclined with respect to the gravity direction (the optical axis direction or the normal line L of the surface WS of the workpiece W), together with the structural layer SL#1.

Note that the build apparatus SYS may build at least one other build object constituting the structural layer SL#2 after building the build objects BO#21 and BO#22. For example, the build apparatus SYS may further build an unillustrated build object BO#23 that is different from the build objects BO#21 and BO#22 by newly setting the irradiation target position EP on the surface of or inside the build object BO#22 that has already been built. In this case, the structural layer SL#2 including at least one other build object in addition to the build objects BO#21 and BO#22 is built. The same is true in a case where the structural layer SL that is different from the structural layer SL#2 is built.

Moreover, FIG. 20B illustrates an example in which the build object BO#22 has such a shape that it does not enter the inside of the build object BO#21 on which the build object BO#22 has not been built yet. On the other hand, in a case where the melt pool MP is formed in the build object BO#21, there is a possibility that the melt pool MP includes a material (for example, molten metal) that was at least a part of the build object BO#21. In this case, the build object BO#22 may have such a shape that it at least partially enters the inside of the build object BO#21 on which the build object BO#22 has not been built yet. Note that a state in which the build object BO#22 at least partially enters the inside of the build object BO#21 located below the build object BO#22 may be same as the state in which the build object BO#21 enters the inside of the build object BO#22 located below the build object BO#21 (see FIG. 15A to FIG. 15B and FIG. 16A to FIG. 16C). Thus, a detailed description related to the state in which the build object BO#22 at least partially enters the inside of the build object BO#21 located below the build object BO#22 is omitted.

Incidentally, in a case where at least one of the build objects BO#21 and BO#22 has such a shape that it enters the inside of the structural layer SL#1, a structural object (a structural object that is like the structural object STa illustrated in FIG. 16A to 16C) including a part of the build objects BO#21 and BO#22 that enters the inside of the structural layer SL#1 may be referred to as the structure layer SL#2. Alternatively, a structural object (a structural object that is like the structural object STb illustrated in FIG. 16A to 16C) not including the part of the build objects BO#21 and BO#22 that enters the inside of the structural layer SL#1 may be referred to as the structure layer SL#2.

Then, the build apparatus SYS repeats the operation for building the structural layer SL until all the structural layers SL that constitute the inclination structural object SST are built. Note that an operation for building a structural layer SL#n (n is a variable number representing an integer that is larger than m by 1) on a structural layer SL#m (m is a variable number representing an integer that is larger than 1) is the same as the operation for building the structural layer SL#2 on the structural layer SL#1. Namely, the description related to the operation for building the structural layer SL#2 on the structural layer SL#1 may be used as a description related to the operation for building the structural layer SL#n on the structural layer SL#m by replacing the signs "#1" and "#2" with the signs "#m" and "#n", respectively.

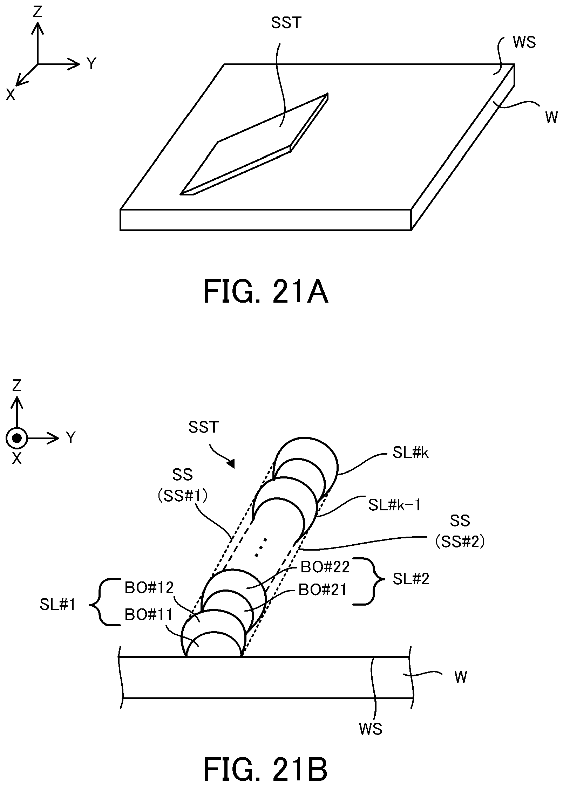

As a result, as illustrated in FIG. 21A and FIG. 21B, the inclination structural object SST that includes the plurality of structural layers SL and that includes the inclination surface SS is built.

### (2-2-2) Second Build Operation of Inclination Structural Object SST

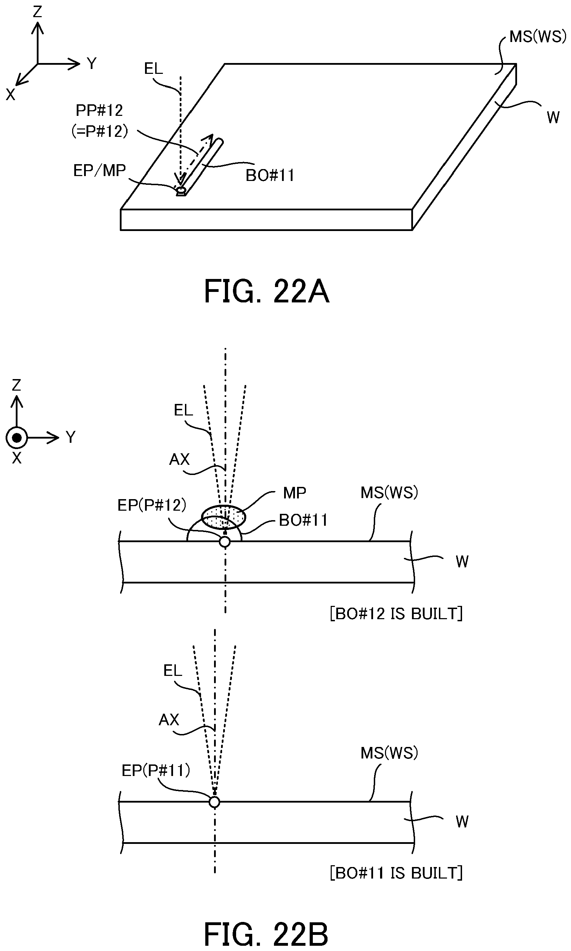

Next, with reference to FIG. 22 to FIG. 26, a second specific example of the build operation for building the inclination structural object SST on the workpiece W (a second build operation) will be described. The second build operation is different from the above-described first build operation in that it is an operation for building the inclination structural object SST including one build object and other build object by one build object and other build object so that one position at which the irradiation target position EP for building one build object is set and other position at which the irradiation target position EP for building other build object are different positions in the falling direction (the intersecting direction) described above are different positions. Thus, a process of the second build operation that is different from that of the first build operation is mainly described below. The process of the second build operation that is not specifically described may be the same as that of the first build operation.

Firstly, the build apparatus SYS builds the first structural layer SL#1, which constitutes the inclination structural object SST, on the surface WS of the workpiece W that is set as the build surface MS. Thus, the build apparatus SYS builds the build object BO#11 and then builds the build object BO#12.

In the second build operation, as illustrated in FIG. 22A and 22A, in order to build the build object BO#12, the build apparatus SYS sets the irradiation target position EP so that the position P#12 (see an upper drawing in FIG. 22B) at which the irradiation target position EP for building the build obj ect BO#12 is set and the position P#11 (see an upper drawing in FIG. 22B) at which the irradiation target position EP for building the build object BO#11 is set are the different positions along the Y-axis direction, which is the falling direction. Incidentally, the upper drawing in FIG. 22B illustrates the position P#12 at which the irradiation target position EP for building the build object BO#12 is set, and the lower drawing in FIG. 22B illustrates the position P#11 at which the irradiation target position EP for building the build object BO#11 is set. Specifically, the build apparatus SYS may set the irradiation target position EP so that the position P#12 is away by a second predetermined amount from the position P#11 along the Y-axis direction, which is the falling direction, toward a direction (a direction toward the +Y side in an example illustrated in FIG. 22A and FIG. 22B) toward which the inclination surface SS falls relative to the normal line N of the workpiece W that extends from the connection part C (see FIG. 8A and FIG. 8B) between the workpiece W and the inclination structural object SST.

Here, in the second build operation, the build apparatus SYS sets the irradiation target position EP so that the distance (the above-described second predetermined amount) between the position P#11 and the position P#12 in the falling direction is shorter than the distance (the above-described first predetermined amount) between the position P#21 and the position P#12 in the falling direction, as with the first build operation. Namely, the build apparatus SYS sets the irradiation target position EP so that the distance between the position P#11 and the position P#12 in the falling direction is shorter than the first predetermined amount and the distance between the position P#21 and the position P#12 in the falling direction is longer than the first predetermined amount.

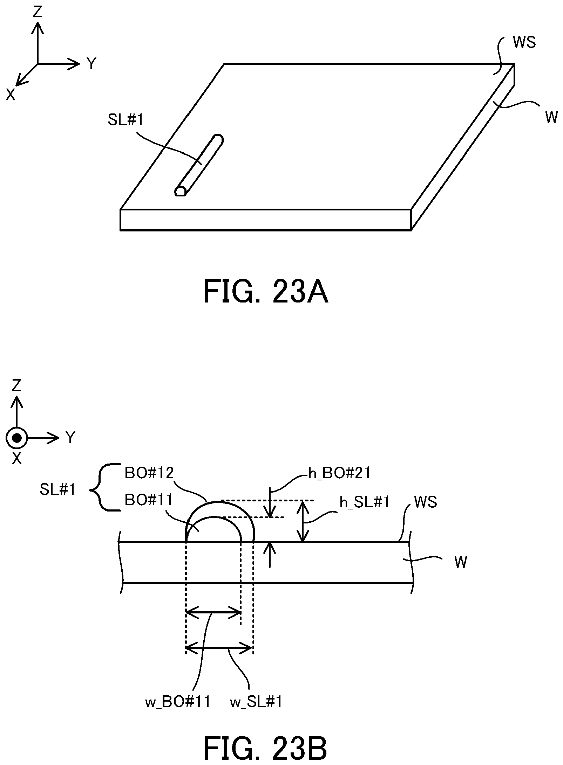

Then, the build apparatus SYS irradiates the area of the build object BO#11 at which the build object BO#12 should be built with the build light EL, while moving the irradiation target position EP relative to the build surface MS. As a result, as illustrated in FIG. 22B, the melt pool MP formed in the area on the build object BO#11 at which the build object BO#12 should be built. Furthermore, when the melt pool MP is formed on the build surface MS, the build material M is supplied to the melt pool MP from the material nozzle 212. Incidentally, the melt pool MP in FIG. 22B is merely one example, and the melt pool MP having a shape that is different from the shape illustrated in FIG. 22B may be formed at a position that is different from the position illustrated in FIG. 22B. As a result, the build object BO#12 is built as illustrated in FIG. 23A and FIG. 23B. Here, since the position P#12 is away from the position P#11 in the Y-axis direction, which is the falling direction, as described above, the center of the build object BO#12 in the falling direction is away from the center of the build object BO#11 in the falling direction along the Y-axis that is the falling direction, as illustrated in FIG. 23B. As a result, as illustrated in FIG. 23B, the width w_SL#1 of the structural layer SL#1 including the build objects BO#11 and BO#12 is larger than the width w_BO#11 of the build object BO#11 that constitutes the structural layer SL#1. Thus, according to the second build operation, the structural layer SL#1 the width of which is wider can be built, compared to a case where the structural layer SL#1 that includes the build object BO#11 but does not include the build object BO#12 is built. However, the width w_SL#1 of the structural layer SL#1 may not be wider than the width w_BO#11 of the build object BO#11 constituting the structural layer SL#1. For example, the width w_SL#1 of the structural layer SL#1 may be equal to the width w_BO#11 of the build object BO#11 constituting the structural layer SL#1.

Moreover, as illustrated in FIG. 23B, the height h_SL#1 of the structural layer SL#1 is higher than the height h_BO#11 of the build object BO#11 that constitutes the structural layer SL#1. Thus, according to the second build operation, the structural layer SL#1 the height of which is higher can be built, compared to a case where the structural layer SL#1 that includes the build object BO#11 but does not include the build object BO#12 is built. However, the height h_SL#1 of the structural layer SL#1 may not be higher than the height h_BO#11 of the build object BO#11. For example, the height h_SL#1 of the structural layer SL#1 may be equal to the height h_BO#11 of the build obj ect BO#1 1.

After the structural layer SL#1 is built, the build apparatus SYS builds the second structural layer SL#2, which constitutes the inclination structural object SST, on the structural layer SL#1, after setting the surface of the structural layer SL#1 as a new build surface MS. Specifically, the build apparatus SYS builds the build object BO#21, and then builds the build object BO#22, in order to build the structural layer SL#2.

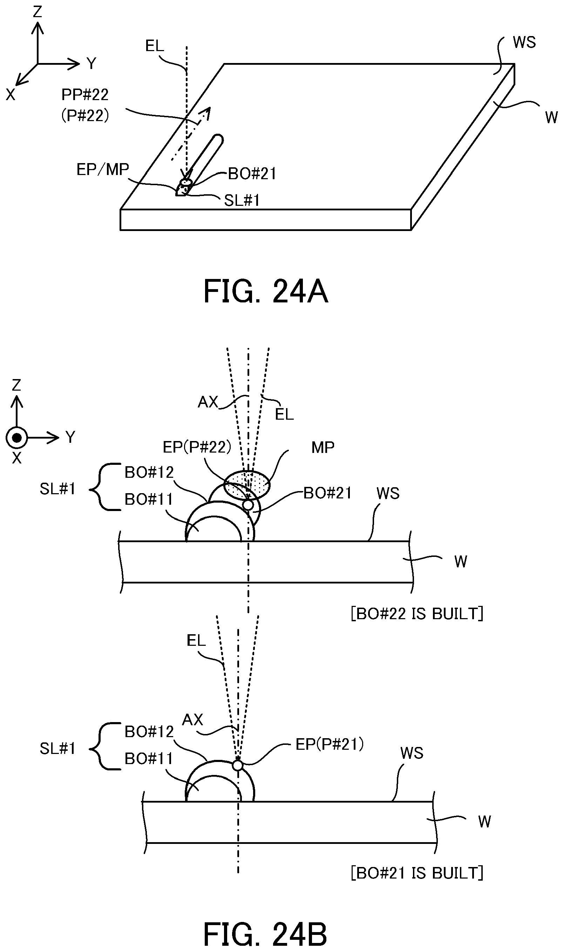

In the second build operation, as illustrated in FIG. 24A and FIG. 24B, the build apparatus SYS sets the irradiation target position EP so that the position P#22 (see an upper drawing in FIG. 22B) at which the irradiation target position EP for building the build object BO#22 is set and the position P#21 (see a lower drawing in FIG. 22B) at which the irradiation target position EP for building the build object BO#21 is set are the different positions along the Y-axis direction, which is the falling direction, in order to build the build object BO#22. Incidentally, the upper drawing in FIG. 24B illustrates the position P#22 at which the irradiation target position EP for building the build obj ect BO#22 is set, and the lower drawing in FIG. 24B illustrates the position P#21 at which the irradiation target position EP for building the build object BO#21 is set. Specifically, the build apparatus SYS may set the irradiation target position EP so that the position P#22 is away by a second predetermined amount from the position P#21 along the Y-axis direction, which is the falling direction, toward a direction (a direction toward the +Y side in an example illustrated in FIG. 24A and FIG. 24B) toward which the inclination surface SS falls relative to the normal line N of the workpiece W that extends from the connection part C (see FIG. 8A and FIG. 8B) between the workpiece W and the inclination structural object SST.

Here, in the second build operation, the build apparatus SYS sets the irradiation target position EP so that the distance (the above-described second predetermined amount) between the position P#21 and the position P#22 in the falling direction is shorter than the distance (the above-described first predetermined amount) between the position P#21 and the position P#12 in the falling direction, as with the first build operation. Namely, the build apparatus SYS sets the irradiation target position EP so that the distance between the position P#21 and the position P#22 in the falling direction is shorter than the first predetermined amount and the distance between the position P#21 and the position P#12 in the falling direction is longer than the first predetermined amount.

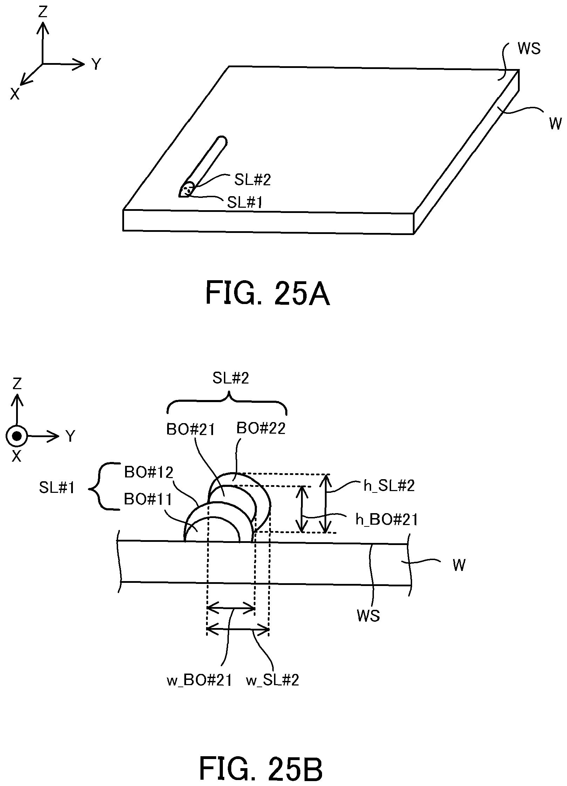

Then, the build apparatus SYS irradiates the area of the build object BO#21 at which the build object BO#22 should be built with the build light EL, while moving the irradiation target position EP relative to the build surface MS. As a result, as illustrated in FIG. 24B, the melt pool MP formed in the area on the build object BO#21 at which the build object BO#22 should be built. Furthermore, when the melt pool MP is formed on the build surface MS, the build material M is supplied to the melt pool MP from the material nozzle 212. Incidentally, the melt pool MP in FIG. 24B is merely one example, and the melt pool MP having a shape that is different from the shape illustrated in FIG. 24B may be formed at a position that is different from the position illustrated in FIG. 24B. As a result, the build object BO#22 is built as illustrated in FIG. 25A and FIG. 25B. Here, since the position P#22 is away from the position P#21 in the Y-axis direction, which is the falling direction, as described above, the center of the build object BO#22 in the falling direction is away from the center of the build object BO#21 in the falling direction along the Y-axis that is the falling direction, as illustrated in FIG. 25B. As a result, as illustrated in FIG. 53B, the width w_SL#2 of the structural layer SL#2 including the build objects BO#21 and BO#22 is larger than the width w_BO#21 of the build object BO#21 that constitutes the structural layer SL#2. Thus, according to the second build operation, the structural layer SL#2 the width of which is wider can be built, compared to a case where the structural layer SL#2 that includes the build object BO#21 but does not include the build object BO#22 is built. However, the width w_SL#2 of the structural layer SL#2 may not be wider than the width w_BO#21 of the build object BO#21 constituting the structural layer SL#2. For example, the width w_SL#2 of the structural layer SL#2 may be equal to the width w_BO#21 of the build object BO#21 constituting the structural layer SL#2.

Moreover, as illustrated in FIG. 25B, the height h_SL#2 of the structural layer SL#2 is higher than the height h_BO#21 of the build object BO#21 that constitutes the structural layer SL#2. Thus, according to the second build operation, the structural layer SL#2 the height of which is higher can be built, compared to a case where the structural layer SL#2 that includes the build object BO#21 but does not include the build object BO#22 is built. However, the height h_SL#2 of the structural layer SL#2 may not be higher than the height h_BO#21 of the build object BO#21. For example, the height h_SL#2 of the structural layer SL#2 may be equal to the height h_BO#21 of the build object BO#21.

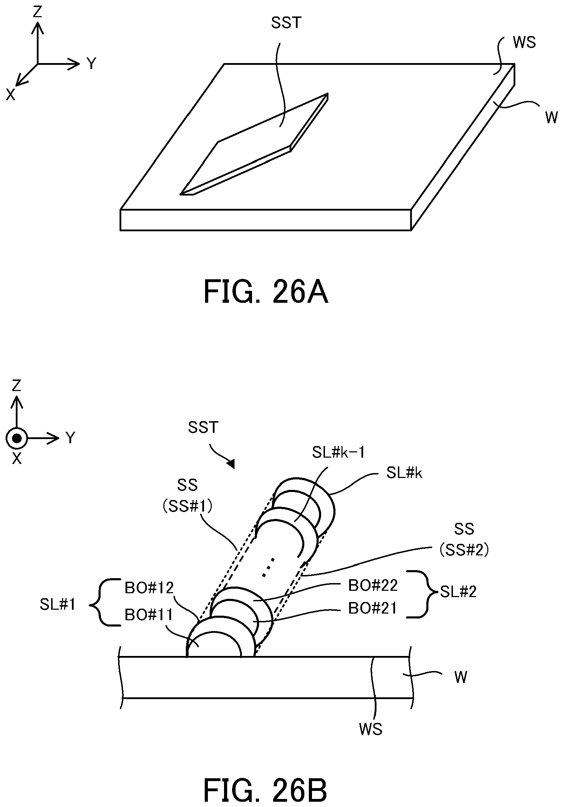

Then, the build apparatus SYS repeats the operation for building the structural layer SL until all the structural layers SL that constitute the inclination structural object SST are built. As a result, as illustrated in FIG. 26A and FIG. 26B, the inclination structural object SST that includes the plurality of structural layers SL and that includes the inclination surface SS is built.

### (3) Technical Effect

As described above, the build apparatus SYS can appropriately build then inclination structural object SST. Especially, the build apparatus SYS builds the structure layer SL#m (note that 1 is a variable number representing an integer that is equal to or larger than 2), which constitutes the inclination structural object SST by building the build object BO#m1 and then building the build object BO#m2. Thus, the build apparatus SYS can build the structural layer SL#m the width of which is wider and / or the height of which is higher, compared to a case where the structural layer SL#m is built by building the build object BO#m1 without building the build object BO#m2. Here, the structural layer SL#m is larger as the height of the structural layer SL#m is higher and / or the width of the structural layer SL#m is wider. Thus, the structural layer SL#m can appropriately support the structural layer SL#n (note that n is a variable number representing an integer that is larger than m), which is built on the structural layer SL#m and which extends from the structural layer SL#m along a direction that is inclined with respect to the optical axis direction, from below. Therefore, even in a case where the structural layer SL#n that extends from the structural layer SL#m along the direction that is inclined with respect to the optical axis direction is built on the structural layer SL#m, the structural layer SL#m that is a foundation and the structural layer SL#n that is supported by the structural layer SL#m are less likely to collapse easily. Thus, the build apparatus SYS can build the inclination structural object SST that includes the inclination surface SS whose inclination angle relative to the gravity direction is a desired angle, relative accurately.

### (4) Modified Example

Next, a modified example of the build apparatus SYS will be described.

### (4-1) First Modified Example

As described above, the build apparatus SYS builds the build object BO#m1 and then builds the build object BO#m2 in order to build the structural layer SL#m the width of which is wider and / or the height of which is higher. In a first modified example, the build apparatus SYS builds the structural layer SL#m the width of which is wider and / or the height of which is higher by building the build object BO#m1 without building the build object BO#m2. Namely, the build apparatus SYS builds the inclination structural object SST that includes the inclination surface SS whose inclination angle relative to the gravity direction is the desired angle, relative accurately, by building the build object BO#m1 without building the build object BO#m2.

For example, the build apparatus SYS may build the structural layer SL#m the width of which is wider and / or the height of which is higher by controlling a number of times of the irradiation of the build light EL per unit area or per unit time. Specifically, the larger a number of times of the irradiation of the build light EL to the build surface MS per unit area or per unit time is, the larger an amount of an energy transferred from the build light EL to the build surface MS per unit area or per unit time is. The larger the amount of the energy transferred from the build light EL to the build surface MS per unit area or per unit time is, the larger an amount of the build material M that is melted on the build surface MS is. The larger the amount of the build material M that is melted on the build surface MS is, the larger the melt pool MP formed on the build surface MS is. The larger the melt pool MP formed on the build surface MS is, the larger the build object BO#m1 formed on the build surface MS is. The larger the build object BO#m1 formed on the build surface MS is, the larger the structural layer SL#m including the build object BO#m1 is. Namely, the height of the structural layer SL#m is higher and / or the width of the structural layer SL#m is wider. Therefore, the build apparatus SYS can control at least one of the height and width of the structural layer SL#m by controlling a number of times of the irradiation of the build light EL. Namely, the build apparatus SYS can build the structural layer SL#m the width of which is wider and / or the height of which is higher by controlling a number of times of the irradiation of the build light EL. As a result, the build apparatus SYS can build the inclination structural object SST that includes the inclination surface SS whose inclination angle relative to the gravity direction is the desired angle, relative accurately by controlling a number of times of the irradiation of the build light EL.

For example, the build apparatus SYS may build the structural layer SL#m the width of which is wider and / or the height of which is higher by controlling a characteristic of the build light EL. Specifically, there is a possibility that the amount of the energy transferred from the build light EL to the build surface MS per unit area or per unit time changes, as the characteristic of the build light EL changes. For example, the energy transferred from the build light EL to the build surface MS per unit area or per unit time is larger, as an intensity of the build light EL, which is one example of the characteristic of the build light EL, is higher. Thus, the build apparatus SYS can control at least one of the height and width of the structural layer SL#m by controlling the characteristic of the build light EL (for example, the intensity of the build light EL), as with a case where a number of times of the irradiation of the build light EL is controlled. Namely, the build apparatus SYS can build the structural layer SL#m the width of which is wider and / or the height of which is higher by controlling the characteristic of the build light EL (for example, the intensity of the build light EL). As a result, the build apparatus SYS can build the inclination structural object SST that includes the inclination surface SS whose inclination angle relative to the gravity direction is the desired angle, relative accurately by controlling the characteristic of the build light EL (for example, the intensity of the build light EL).

For example, the build apparatus SYS may build the structural layer SL#m the width of which is wider and / or the height of which is higher by controlling a moving aspect of the irradiation target position EP, toward which the irradiation optical system 2111 emits the build light EL, relative to the build surface. Specifically, there is a possibility that the amount of the energy transferred from the build light EL to the build surface MS per unit area or per unit time changes, as the moving aspect of the irradiation target position EP changes. For example, the slower a moving speed (namely, a moving speed of the irradiation target position EP), which is one example of the moving aspect, is, the longer the time during which a certain area of the build surface MS is irradiated with the build light EL is. The longer the time during which a certain area of the build surface MS is irradiated with the build light EL is, the larger the amount of the energy transferred from the build light EL to the build surface MS in the certain area of the build surface MS is. Thus, the build apparatus SYS can control at least one of the height and width of the structural layer SL#m by controlling the moving aspect of the irradiation target position EP (for example, the moving speed of the irradiation target position EP), as with a case where a number of times of the irradiation of the build light EL is controlled. Namely, the build apparatus SYS can build the structural layer SL#m the width of which is wider and / or the height of which is higher by controlling the moving aspect of the irradiation target position EP (for example, the moving speed of the irradiation target position EP). As a result, the build apparatus SYS can build the inclination structural object SST that includes the inclination surface SS whose inclination angle relative to the gravity direction is the desired angle, relative accurately by controlling the moving aspect of the irradiation target position EP (for example, the moving speed of the irradiation target position EP).

For example, the build apparatus SYS may build the structural layer SL#m the width of which is wider and / or the height of which is higher by controlling a supply aspect of the build material M from the material nozzle 212. Specifically, there is a possibility that an amount of the build material M melted on the build surface MS changes, as the supply aspect of the build material M changes. For example, the larger a supply amount (especially, a supply amount per unit time), which is one example of the supply aspect, is, the larger the amount of the build material M melted on the build surface MS is. Thus, the build apparatus SYS can control at least one of the height and width of the structural layer SL#m by controlling the supply aspect of the build material M (for example, the supply amount of the build material M), as with a case where a number of times of the irradiation of the build light EL is controlled. Namely, the build apparatus SYS can build the structural layer SL#m the width of which is wider and / or the height of which is higher by controlling the supply aspect of the build material M (for example, the supply amount of the build material M). As a result, the build apparatus SYS can build the inclination structural object SST that includes the inclination surface SS whose inclination angle relative to the gravity direction is the desired angle, relative accurately by controlling the supply aspect of the build material M (for example, the supply amount of the build material M).

### (4-2) Second Modified Example

As described above, the build apparatus SYS performs, as the build operation for building the structural layer SL#m that constitutes the inclination structural object SST, the build operation for building the build object BO#m1 and then building the build object BO#m2, in order to build the inclination structural object SST including the inclination surface SS relative accurately.

On the other hand, as described above, the build apparatus SYS may build the 3D structural object ST that does not include the inclination surface SS. In this case, it is not highly necessary for the build apparatus SYS to perform the build operation for building the build object BO#m1 and then building the build object BO#m2, in order to build the structural layer SL#m constituting the 3D structural object ST that does not include the inclination surface SS.

Moreover, in a case where the build operation for building the build object BO#m1 and then building the build object BO#m2 is performed in order to build the structural layer SL#m, a throughput for building the structural layer SL#m deteriorated, compared to a case where the build object BO#m1 is built but the build object BO#m2 may not be built in order to build the structural layer SL#m. As a result, a throughput for building the inclination structural object SST deteriorates. Namely, it can be said that the build operation for building the inclination structural object SST described above prioritizes the improvement of the accuracy of building the inclination structural object SST by allowing the deterioration of the throughput for building the inclination structural object SST. However, there is a possibility that some user of the build apparatus SYS prioritize the throughput for building the inclination structural object SST over the accuracy of building the inclination structural object SST. In this case, it is not highly necessary for the build apparatus SYS to perform the build operation for building the build object BO#m1 and then building the build object BO#m1 in order to build the structural layer SL#m.

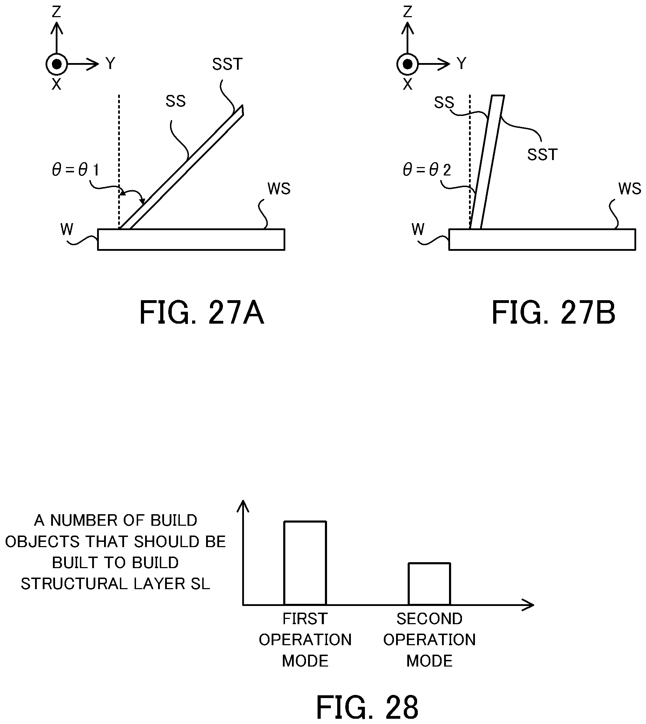

Moreover, in a case where an inclination angle θ of the inclination surface SS relative to the gravity direction (namely, the Z-axis direction) is relatively small (for example, in a case where the inclination angle θ is a relatively small second angle θ2 illustrated in FIG. 27B below), there is a possibility that the build apparatus SYS can build the inclination structural object SST relatively accurately without perform the build operation for building the build object BO#m1 and then building the build object BO#m2 in order to build the structural layer SL#m. The reason is as follows: in a case where the inclination angle θ of the inclination surface SS is relatively small, the structural layer SL#m that is the foundation and the structural layer SL#n that is supported by the structural layer SL#m are less likely to collapse even in a case where the structural layer SL#n, which extends from the structural layer SL#m in the direction that is inclined with respect to the optical axis direction, is built on the structural layer SL#m, compared to a case where the inclination angle θ of the inclination surface SS is relatively large (for example, in a case where the inclination angle θ is a relatively large first angle θ1 illustrated in FIG. 27B below). Thus, in a case where the inclination angle θ of the inclination surface SS relative to the gravity direction is relatively small, it is not highly necessary for the build apparatus SYS to perform the build operation for building the build object BO#m1 and then building the build object BO#m2 in order to build the structural layer SL#m.

Note that the inclination angle θ of the inclination surface SS relative to the gravity direction may mean an angle between an axis extending along the gravity direction and the inclination surface SS, as illustrated in FIG. 27A and FIG. 27B. Moreover, in a case where the surface WS of the workpiece W is parallel to the XY plane, the normal line N of the surface WS of the workpiece W extends along the gravity direction. Therefore, the inclination angle θ of the inclination surface SS relative to the gravity direction may mean an angle between the normal line N of the surface WS of the workpiece W and the inclination surface SS. FIG. 27A illustrates the inclination surface SS whose inclination angle θ is the relatively large first angle θ1. On the other hand, FIG. 27B illustrates the inclination surface SS whose inclination angle θ is the relatively small second angle θ2 (note that θ2 < θ1).

Therefore, in a second modified example, the build apparatus SYS may switch an operation mode of the build apparatus SYS between a first operation mode and a second operation mode. The first operation mode is an operation mode in which the build object BO#m1 is built and then the build object BO#m2 is built in order to build the structural layer SL#m (for example, an operation mode in which the first or second build operation for building the inclination structural object SST described above is performed), as illustrated in FIG. 28. Namely, the first operation mode is an operation mode in which a number of build objects that should be built in order to build the structural layer SL#m is relatively large. On the other hand, the second operation mode is an operation mode in which the build object BO#m1 is built but the build object BO#m2 may not be built in order to build the structural layer SL#m (for example, an operation mode in which the basic operation of the additive manufacturing described above is performed), as illustrated in FIG. 28. Namely, the second operation mode is an operation mode in which a number of build object that should be built in order to build the structural layer SL#m is relatively small.

The build apparatus SYS may set the operation mode of the build apparatus SYS to be the first operation mode in a case where the build apparatus SYS builds the inclination structural object SST including the inclination surface SS. On the other hand, the build apparatus SYS may set the operation mode of the build apparatus SYS to be the second operation mode in a case where the build apparatus SYS builds the 3D structural object ST that does not include the inclination surface SS.

The build apparatus SYS may set the operation mode of the build apparatus SYS to be the first operation mode in a case where the improvement of the accuracy of building the inclination structural object SST is prioritized over the improvement of the throughput for building the inclination structural object SST. On the other hand, the build apparatus SYS may set the operation mode of the build apparatus SYS to be the second operation mode in a case where the improvement of the throughput for building the inclination structural object SST is prioritized over the improvement of the accuracy of building the inclination structural object SST.

The build apparatus SYS may set the operation mode of the build apparatus SYS to be the first operation mode in a case where the inclination structural object SST including the inclination surface SS whose inclination angle θ is a predetermined first angle θ1 is built. A state in which the inclination angle θ is the predetermined first angle θ1 may include a state in which the inclination angle θ is larger than a predetermined angle threshold value. In this case, the build apparatus SYS may set the operation mode of the build apparatus SYS to be the first operation mode in a case where the inclination structural object SST including the inclination surface SS whose inclination angle θ is larger than the predetermined angle threshold value is built. On the other hand, the build apparatus SYS may set the operation mode of the build apparatus SYS to be the second operation mode in a case where the inclination structural object SST including the inclination surface SS whose inclination angle θ is a predetermined second angle θ2 is built. A state in which the inclination angle θ is the predetermined second angle θ2 may include a state in which the inclination angle θ is smaller than the predetermined angle threshold value. In this case, the build apparatus SYS may set the operation mode of the build apparatus SYS to be the second operation mode in a case where the inclination structural object SST including the inclination surface SS whose inclination angle θ is smaller than the predetermined angle threshold value is built.

The build apparatus SYS may set the operation mode of the build apparatus SYS to be the first operation mode in a case where a first part of the 3D structural object ST is built, and may set the operation mode of the build apparatus SYS to be the second operation mode in a case where a second part of the same 3D structural object ST, which is different from the first part, is built. Namely, the build apparatus SYS may switch the operation mode of the build apparatus SYS from the first operation mode to the second operation mode or from the second operation mode to the first operation mode in a period during which a certain 3D structural object ST is being built. The first part built by the build apparatus SYS in the first operation mode may include a part of the inclination structural object SST that includes the inclination surface SS. On the other hand, the second part built by the build apparatus SYS in the second operation mode may include a part of the inclination structural object SST that does not include the inclination surface SS. Alternatively, the first part may include a part of the inclination structural object SST that prioritizes the improvement of the accuracy related to the building over the improvement of the throughput related to the building. On the other hand, the second part may include a part of the inclination structural object SST that prioritizes the improvement of the throughput related to the building over the improvement of the accuracy related to building. Alternatively, the first part may include a part of the inclination structural object SST that includes the inclination surface SS whose inclination angle θ is the first angle θ1. On the other hand, the second part may include a part of the inclination structural object SST that includes the inclination surface SS whose inclination angle θ is the second angle θ2.

As described in the first modified example, the build apparatus SYS can build the inclination structural object SST relative accurately by building the build object BO#m1 without building the build object BO#m2. In this case, the first operation mode and the second operation mode may be two operation modes that are distinguished from a viewpoint of a number of the build objects that should be built to build the structural layer SL#m.

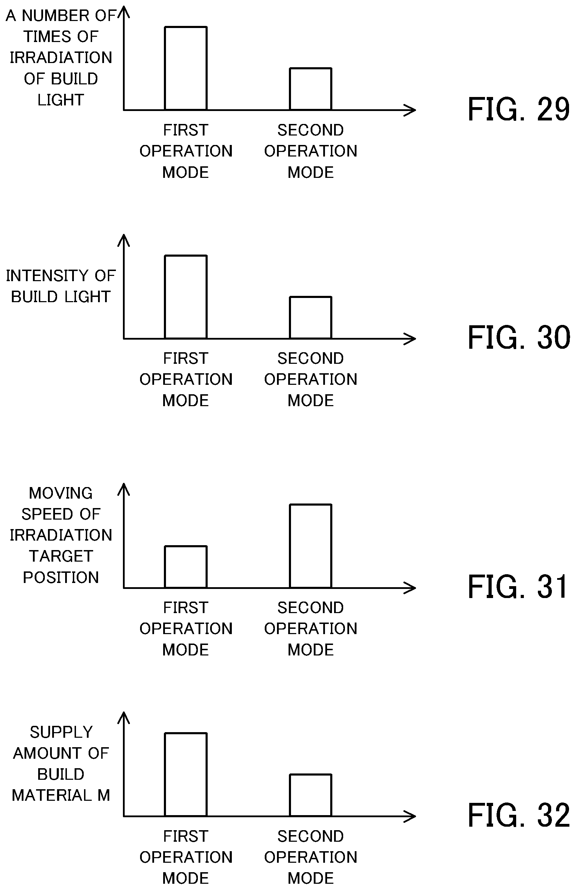

For example, as illustrated in FIG. 29, the first operation mode and the second operation mode may be two operation modes between which a number of times of the irradiation of the build light EL is different. More specifically, the first operation mode may be an operation mode in which a number of times of the irradiation of the build light EL is larger than that of the second operation mode.

For example, as illustrated in FIG. 29, the first operation mode and the second operation mode may be two operation modes between which the characteristic of the build light EL (for example, the intensity of the build light EL). More specifically, the first operation mode may be an operation mode in which the intensity of the build light EL is higher than that of the second operation mode.

For example, as illustrated in FIG. 31, the first operation mode and the second operation mode may be two operation modes between which the moving aspect of the irradiation target position EP is different. More specifically, the first operation mode may be an operation mode in which the moving speed of the irradiation target position EP is slower than that of the second operation mode.

For example, as illustrated in FIG. 32, the first operation mode and the second operation mode may be two operation modes between which the supply aspect of the build material M is different. More specifically, the first operation mode may be an operation mode in which the supply amount of the build material M is larger than that of the second operation mode.

### (4-3) Third Modified Example

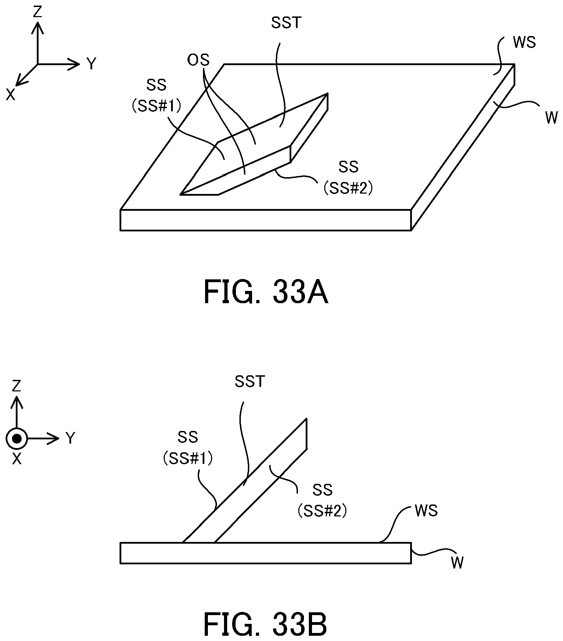

In the above-described description, the build apparatus SYS builds the thin plate-shaped inclination structural object SST whose thickness in the Y-axis direction, which is the falling direction, is relatively thin, as illustrated in FIG. 8A and Fig. 8B. On the other hand, as illustrated in FIG. 33A and FIG. 33B, the build apparatus SYS may build a thick plate-shaped inclination structural object SST whose thickness in the Y-axis direction, which is the falling direction, is relatively thick. The thick plate-shaped inclination structural object SST may be a structural object in which a plurality of structural layers SL, each of which is built by building a plurality of build objects each of which extends in the X-axis direction (the scanning direction) along the Y axis direction (the falling direction), are layered along the Z-axis direction, for example. The thick plate-shaped inclination structural object SST may be a structural object in which a plurality of structural layers SL, each of which is built based on the processing control information indicating a plurality of processing paths each of which indicates the movement trajectory of the irradiation target position EP extending in the X-axis direction (the scanning direction) and which are arranged along the Y-axis direction (the falling direction), are layered along the Z-axis direction, for example.

In this case, the build apparatus SYS may perform, as the build operation for building the structural layer SL#m constituting the thick plate-shaped inclination structural object SST, the build operation for building the build object BO#m1 and then building the build object BO#m2. Alternatively, as described in the second modified example, the build apparatus may set the operation mode of the build apparatus SYS to be the first operation mode in a case where the first part of the structural layer SL#m constituting the thick plate-shaped inclination structural object SST is built, and set the operation mode of the build apparatus SYS to be the second operation mode in a case where the second part of the structural layer SL#m constituting the thick plate-shaped inclination structural object SST is built. Next, a specific example of an operation for switching the operation mode of the build apparatus SYS between the first operation mode and the second operation mode in order to build the thick plate-shaped inclination structural object SST.

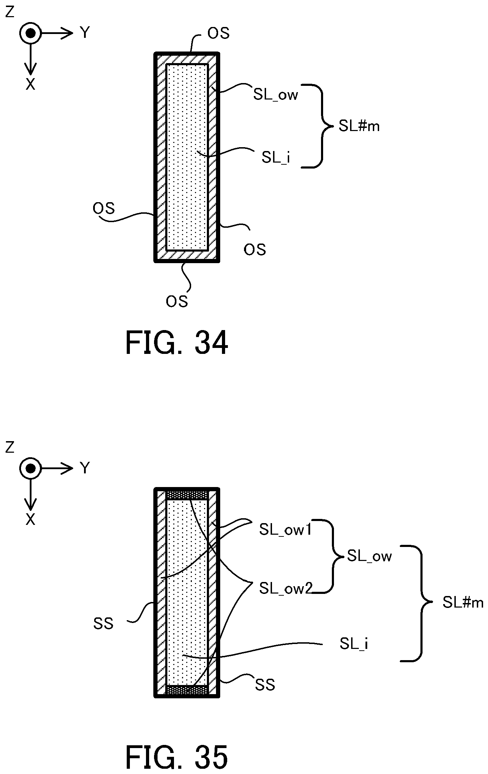

As illustrated in FIG. 34 that is a planar view illustrating the structural layer SL#m constituting the thick plate-shaped inclination structural object SST illustrated in FIG. 33A to FIG. 33B, the build apparatus SYS may set the operation mode of the build apparatus SYS to be the first operation mode in a case where an outer wall part SL_ow of the structural layer SL#m that constitutes an outer wall surface OS (namely, an outer edge) is built. For example, the build apparatus SYS may build the outer wall part SL_ow by building the build object BO#m1 and then building the build object BO#m2. On the other hand, as illustrated in FIG. 34, the operation mode of the build apparatus SYS may be set to be the second operation mode in a case where an inside part SL_i of the structural layer SL#m surrounded by the outer wall part SL_ow is built. For example, the build apparatus SYS may build the inside part SL_i by building the build object BO#m1 without building the build object BO#m2. In this case, the outer wall part SL_ow, which constitutes the inclination surface SS, is built with relatively high accuracy. Thus, the build apparatus SYS can build the inclination structural object SST that includes the inclination surface SS whose inclination angle relative to the gravity direction is the desired angle, relative accurately.

As illustrated in FIG. 35 that is a planar view illustrating the structural layer SL#m constituting the thick plate-shaped inclination structural object SST illustrated in FIG. 33A to FIG. 33B, the outer wall part SL_ow includes a first outer wall part SL_ow1 including the inclination surface SS and a second outer wall part SL_ow2 including a surface different from the inclination surface SS. In this case, the build apparatus SYS may set the operation mode of the build apparatus SYS to be the first operation mode in a case where the first outer wall part SL_ow1 is built. For example, the build apparatus SYS may build the first outer wall part SL_ow1 by building the build object BO#m1 and then building the build object BO#m2. On the other hand, the operation mode of the build apparatus SYS may be set to be the second operation mode in a case where the second outer wall part SL_ow2 of the outer wall part SL_o is built. For example, the build apparatus SYS may build the second outer wall part SL_ow2 by building the build object BO#m1 without building the build object BO#m2. In this case, the first outer wall part SL_ow1 including the inclination surface SS is built with relatively high accuracy. Thus, the build apparatus SYS can build the inclination structural object SST that includes the inclination surface SS whose inclination angle relative to the gravity direction is the desired angle, relative accurately. Furthermore, the throughput for building the inclination structural object SST is improved, compared to a case where the entire outer wall part SL_ow is built by the build apparatus SYS operating in the first operation mode.

### (4-4) Fourth Modified Example

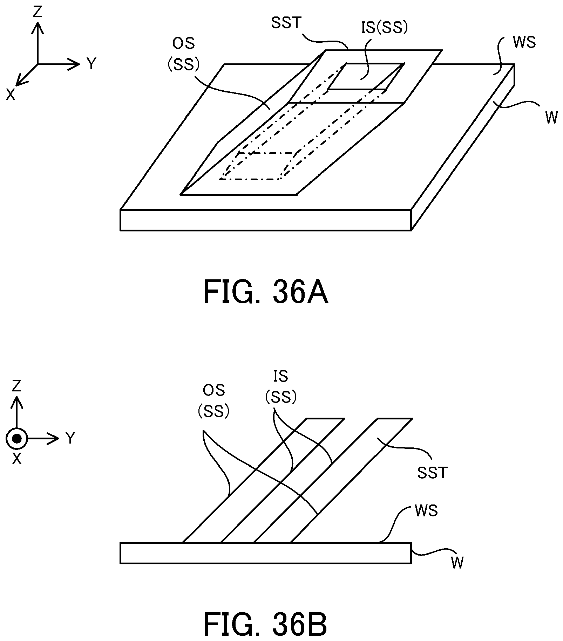

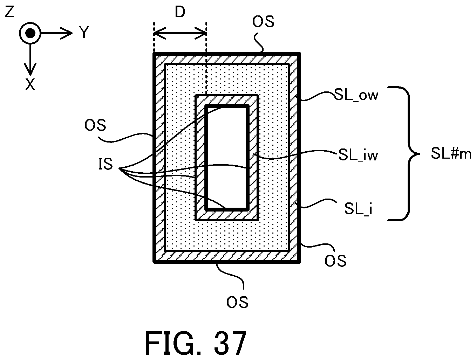

In the above-described third modified example, the build apparatus SYS builds the thick plate-shaped inclination structural object SST whose outer wall surface is the inclination surface SS. On the other hand, in a fourth modified example, the build apparatus SYS may build the thick plate-shaped inclination structural object SST whose outer wall surface OS and inner wall surface IS are both inclination surfaces SS, as illustrated in FIG. 36A and 36B. Even in this case, the build apparatus SYS may perform, as the build operation for building the structural layer SL#m constituting the thick plate-shaped inclination structural object SST, the build operation for building the build object BO#m1 and then building the build object BO#m2. Alternatively, the build apparatus may set the operation mode of the build apparatus SYS to be the first operation mode in a case where the first part of the structural layer SL#m constituting the thick plate-shaped inclination structural object SST is built, and set the operation mode of the build apparatus SYS to be the second operation mode in a case where the second part of the structural layer SL#m constituting the thick plate-shaped inclination structural object SST is built, as with the second modified example. For example, as illustrated in FIG. 37 that is a planar view illustrating the structural layer SL#m that constitutes the thick plate-shaped inclination structural object SST whose outer wall surface OS and inner wall surface IS are both inclination surfaces SS, the build apparatus SYS may set the operation mode of the build apparatus SYS to be the first operation mode in a case where the outer wall part SL_ow of the structural layer SL#m that constitutes the outer wall surface OS (namely, an outer edge) and an inner wall part SL_iw of the structural layer SL#m that constitutes the inner wall surface IS (namely, an inner edge) are built. For example, the build apparatus SYS may build the outer wall part SL_ow and the inner wall part SL_iw by building the build object BO#m1 and then building the build object BO#m2. On the other hand, as illustrated in FIG. 37, the build apparatus SYS may set the operation mode of the build apparatus SYS to be the second operation mode in a case where the inside part SL_i of the structural layer SL#m surrounded by the outer wall part SL_ow and the inner wall part SL_iw is built. For example, the build apparatus SYS may build the inside part SL_i by building the build object BO#m1 without building the build object BO#m2.

However, in a case where a distance D between the outer wall surface OS and the inner wall surface IS (note that this distance D may be referred to as a "thickness of the inclination structural object SST") is too short, there is a possibility that the outer wall part SL_ow and the inner wall part SL_iw overlap with each other at least partially (namely, are coupled at least partially). As a result, there is a possibility that heights of the outer wall part SL_ow and the inner wall part SL_iw are higher than necessary. Therefore, the build apparatus SYS may lower the heights of the build objects BO#m1 and BO#m2 built in the first operation mode in a case where the distance D is smaller than a predetermined first distance threshold THD1, compared to a case where the distance D is larger than the predetermined first distance threshold THD1. For example, the build apparatus SYS may halve the heights of the build objects BO#m1 and BO#m2 built in the first operation mode in a case where the distance D is smaller than the predetermined first distance threshold THD1, compared to a case where the distance D is larger than the predetermined first distance threshold THD1. As a result, the heights of the outer wall part SL_ow and the inner wall part SL_iw are not higher than necessary, even in a situation where there is a possibility that the outer wall part SL_ow and the inner wall part SL_iw overlap at least partially. Alternatively, in a case where the distance D is smaller than the predetermined first distance threshold THD1, the build apparatus SYS may set the operation mode of the build apparatus SYS to be the second operation mode even in a case where the outer wall part SL_ow and the inner wall part SL_iw are built, for example. Namely, the build apparatus SYS may build the build object BO#m1 and may not build the build object BO#m2 in order to build the outer wall part SL_ow and the inner wall part SL_iw of the structural layer SL#m.

The first distance threshold THD1 may be set based on an amount of an overlap of the build objects BO#m1 and SL#m2 that are built to build the structural layer SL#m described above and a line width of each of the build objects BO#m1 and SL#m2. The amount of the overlap of the build objects BO#m1 and SL#m2 may mean an amount of an overlap of the build objects BO#m1 and SL#m2 along a direction (namely, the Y-axis direction that is the falling direction) intersecting with the X-axis direction that is the scanning direction. The line width of each of the build objects BO#m1 and SL#m2 may mean a size of each of the build objects BO#m1 and SL#m2 along the direction (namely, the Y-axis direction that is the falling direction) intersecting with the X-axis direction that is the scanning direction. As one example, the first distance threshold THD1 may be set to a value obtained by adding the amount of the overlap to the line width (alternatively, a value that is larger than this value).

Note that the inclination structural object SST in which the distance D between the outer wall part SL_ow and the inner wall part SL_iw is smaller than the line width of each of the build objects BO#m1 and SL#m2 is a structural object that cannot be built by the build apparatus SYS. Thus, in a case where the distance D between the outer wall part SL_ow and the inner wall part SL_iw is smaller than the line width, the build apparatus SYS may output such a warning that the inclination structural object SST cannot be built.

### (4-5) Fifth Modified Example

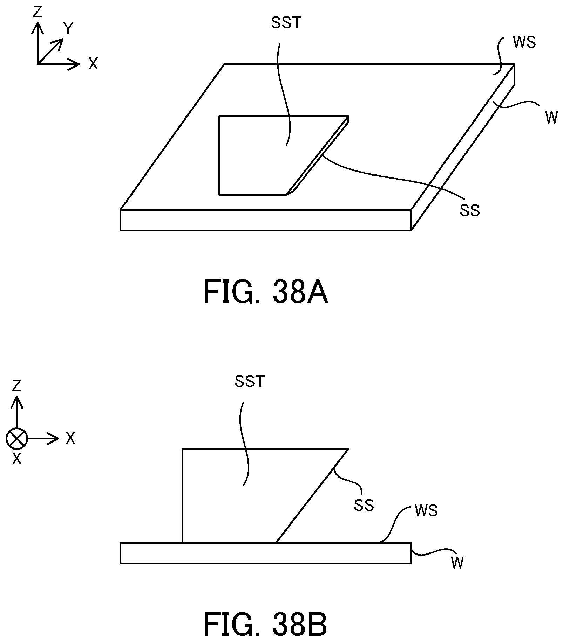

In the above-described description, the build apparatus SYS builds the inclination structural object SST including the inclination surface SS that is inclined to fall along the falling direction (namely, the Y-axis direction) that intersects with the X-axis direction that is the scanning direction, as illustrated in FIG. 8A and FIG. 8B. Namely, in the above-described description, the build apparatus SYS builds the inclination structural object SST including the inclination surface SS that is inclined to fall along the falling direction that is different from the scanning direction along which the build objects BO#m1 and BO#m2, which are built to build the structural layer SL#m, extend. On the other hand, in a fifth modified example, the build apparatus SYS may build the inclination structural object SST including the inclination surface SS that is inclined to fall along the scanning direction (namely, to fall along the falling direction that is a direction same as the scanning direction), as illustrated in FIG. 38A and FIG. 38B. Namely, the build apparatus SYS may build the inclination structural object SST including inclined inclination surface SS that includes a part that is farther apart along the scanning direction as it is more upward along the optical axis direction.

Next, a flow of an operation for building the structural layer SL#m constituting the inclination structural object SST including the inclination surface SS that is inclined to fall along the scanning direction will be described. Incidentally, in the below-described description, a process of the fifth build operation that is different from that of the first and second build operations is mainly described below. The process of the fifth build operation that is not specifically described may be the same as that of the first and second build operations.

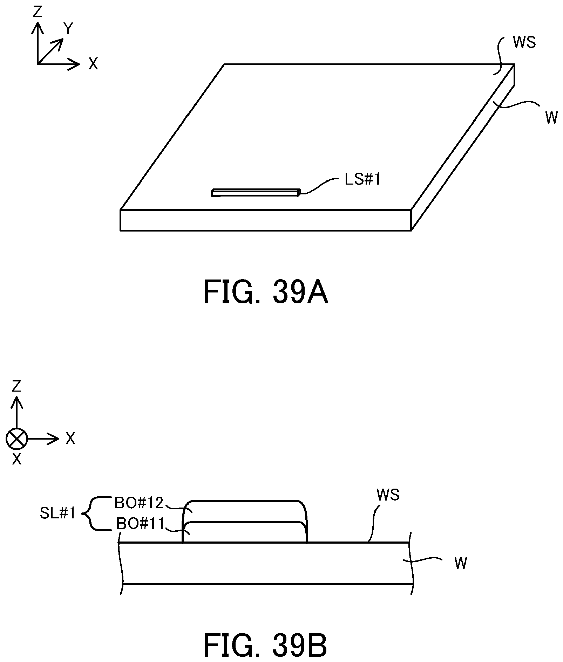

Firstly, the build apparatus SYS builds the first structural layer SL#1, which constitutes the inclination structural object SST, on the surface WS of the workpiece W that is set as the build surface MS. Specifically, as illustrated in FIG. 39A and FIG. 39B, the build apparatus SYS builds the structural layer SL#1 by building the build objects BO#11 and BO#12, as with a case where the first build operation is performed.

After the structural layer SL#1 is built, the build apparatus SYS builds the second structural layer SL#2, which constitutes the inclination structural object SST, on the structural layer SL#1, after setting the surface of the structural layer SL#1 as a new build surface MS. Specifically, the build apparatus SYS builds the structural layer SL#2 by building the build objects BO#21 and BO#22, as with a case where the first build operation is performed.

However, in the fifth modified example, the build apparatus SYS may not set the irradiation target position so that each of the positions P#21 and P#22 at which the irradiation target positions EP for building the build objects BO#21 and BO#22 are set, respectively, and each of the positions P#11 and P#12 at which the irradiation target positions EP for building the build objects BO#11 and BO#12 are set, respectively, are the different positions along the Y-axis direction, which is the falling direction. For example, the build apparatus SYS may set the irradiation target position so that each of the positions P#21 and P#22 and each of the positions P#11 and P#12 are the same position along the Y-axis direction, which is the falling direction.

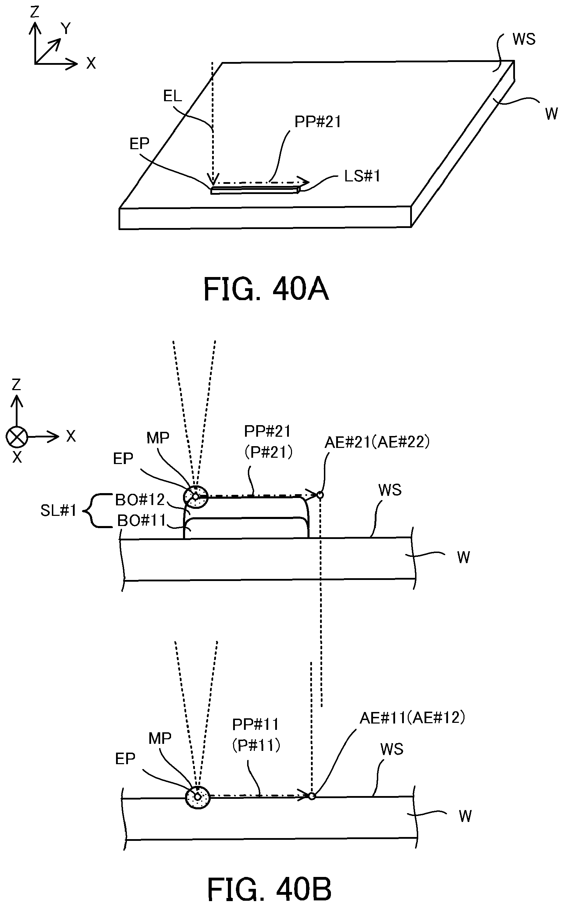

On the other hand, in the fifth modified example, as illustrated in FIG. 40A and 40B, the build apparatus SYS sets the irradiation target position EP so that each of end parts AE#21 and AE#22 of two areas at which the irradiation target positions EP for building the build objects BO#21 and BO#22 are set, respectively, (see an upper drawing in FIG. 40B) and each of end parts AE#11 and AE#12 of two areas at which the irradiation target positions EP are set for building the build objects BO#11 and BO#12 are set, respectively, (see a lower drawing in FIG. 40B) are the different positions along the X-axis direction that is the scanning direction. Namely, the build apparatus SYS sets the irradiation target position EP so that each of the end parts AE#21 and AE#22 is away from each of the end parts AE#11 and AE#12 in the X-axis direction that is the scanning direction. Note that the end part AE#21 is an end part of the area, at which the irradiation target position EP for building the build object BO#21 is set, along the scanning direction. Especially, the end part AE#21 is one end part that is located at the inclination surface SS side (+X side in the examples illustrated in FIG. 40A and FIG. 40B), among two end parts (both end parts) of the area, at which the irradiation target position EP for building the build object BO#21 is set, along the scanning direction. The same is true for the end parts AE #11 and EE #12 and EE #22.

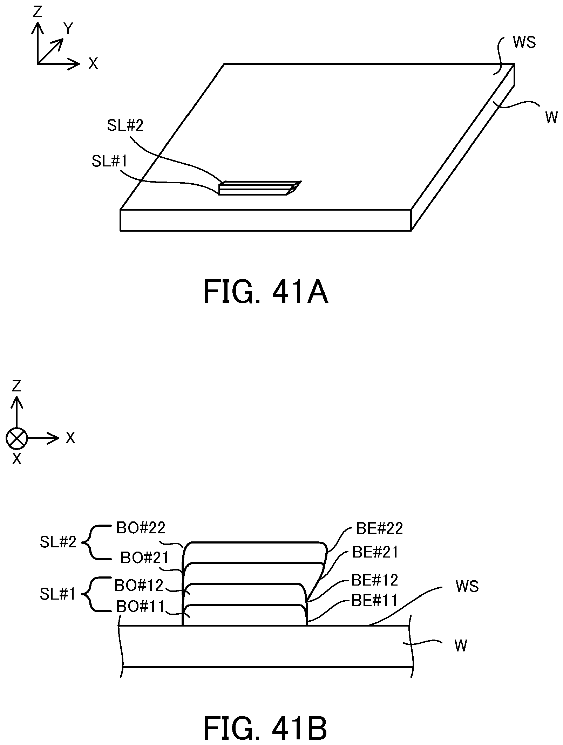

After the irradiation target position EP for building the build object BO#21 is set, the build apparatus SYS the area of the structural layer LS#1 at which the build object BO#21 should be built with the build light EL, while moving the irradiation target position EP relative to the build surface MS. As a result, the melt pool MP formed in the area on the structural layer SL#1 at which the build object BO#21 should be built. Furthermore, when the melt pool MP is formed on the build surface MS, the build material M is supplied to the melt pool MP from the material nozzle 212. As a result, the build object BO#21 is built. Then, the irradiation target position EP for building the build object BO #22 is set. Then, the build apparatus SYS irradiates the area of the build object BO#21 at which the build object BO#22 should be built with the build light EL, while moving the irradiation target position EP relative to the build surface MS. As a result, as illustrated in FIG. 40B, the melt pool MP formed in the area on the build object BO#21 at which the build object BO#22 should be built. Furthermore, when the melt pool MP is formed on the build surface MS, the build material M is supplied to the melt pool MP from the material nozzle 212. Incidentally, the melt pool MP in FIG. 40B is merely one example, and the melt pool MP having a shape that is different from the shape illustrated in FIG. 40B may be formed at a position that is different from the position illustrated in FIG. 40B. As a result, the build object BO#22 is built. As a result, the structural layer SL #2 including the build objects BO#21 and BO#22 is built as illustrated in FIG. 41A and FIG. 41B. As illustrated in FIG. 41A and FIG. 41B, each of an end part BE#21 (especially, an end part at the +X side, which is the inclination surface SS side) of the build object BO#21 in the scanning direction (the X-axis direction) and an end part BE#22 (especially, an end part at the +X side, which is the inclination surface SS side) of the build object BO#22 in the scanning direction and each of an end part BE#11 (especially, an end part at the +X side, which is the inclination surface SS side) of the build object BO#11 in the scanning direction (the X-axis direction) and an end part BE#12 (especially, an end part at the +X side, which is the inclination surface SS side) of the build object BO#12 in the scanning direction are located at different positions, respectively. Namely, each of the end parts BE#21 and BE#22 is away from each of the end parts BE#11 and BE#12 along the X-axis direction that is the scanning direction. As a result, the build objects BO#21 and BO#22 are built so that the end parts BE#21 and BE#22 extend from the structural layer SL#1 toward a direction that is inclined with respect to the Z-axis direction (namely, the gravity direction) that is the optical axis direction. As a result, the build objects BO#21 and BO#22 (especially the end parts BE#21 and BE#22) form, together with the structural layer SL #1, the inclination surface SS that is inclined to fall along the X-axis direction that is the scanning direction.

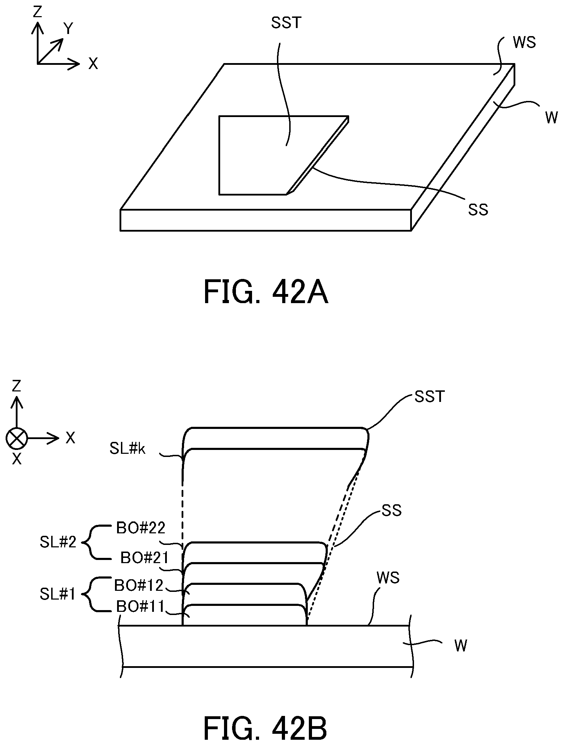

Then, the build apparatus SYS repeats the operation for building the structural layer SL until all the structural layers SL that constitute the inclination structural object SST are built. Note that an operation for building the structural layer SL#n (n is the variable number representing an integer that is larger than m by 1) on the structural layer SL#m (m is the variable number representing an integer that is larger than 1) is the same as the operation for building the structural layer SL#2 on the structural layer SL#1. As a result, as illustrated in FIG. 42A and FIG. 42B, the inclination structural object SST that includes the plurality of structural layers SL and that includes the inclination surface SS is built.

### (4-6) Sixth Modified Example

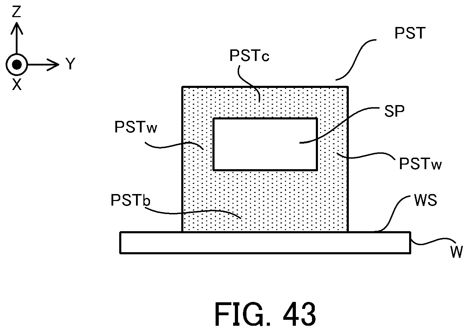

In a sixth modified example, the build apparatus SYS may build the 3D structural object ST in which a void SP is formed by performing the build operation for building the inclination structural object SST described above. In the below-described description, the 3D structural object ST in which the void SP is formed is referred to as a "void structural object PST" for convenience of description. Next, the operation for building the void structural object PST will be described. Incidentally, in the below-described description, the operation for building the void structural object PST that includes: a base member PSTb; a cylindrical wall member PSTw which protrudes in the Z-axis direction from the base member PSTb and in which the void SP is formed (namely, having an inner wall formed surrounding the void SP); and a ceiling member PSTc that is formed on the wall member PSTw to at least partially close the void SP will be described as illustrated in FIG. 43 that is a cross-sectional view illustrating one example of the void structural object PST. Note that the base member PSTb, the wall member PSTw, and the ceiling member PSTc are merely distinguished for convenience of description, and the base member PSTb, the wall member PSTw, and the ceiling member PSTc are typically integrated.

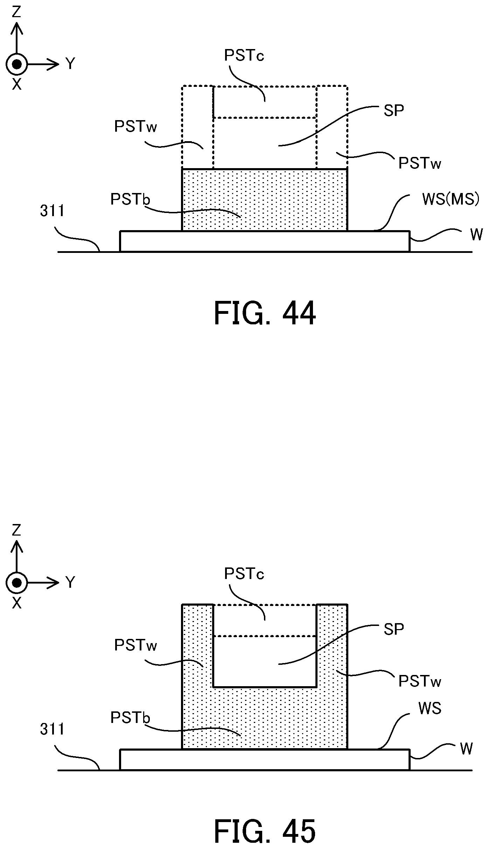

Firstly, as illustrated in FIG. 44, the build apparatus SYS sets the surface WS of the workpiece W as the build surface MS and builds the base member PSTb on the build surface MS. In an example illustrated in FIG. 43, the base member PSTb does not include the inclination surface SS that is inclined with respect to the gravity direction in a state where the surface WS of the workpiece W is horizontal (namely, the placement surface 311 is horizontal). Thus, the build apparatus SYS may build the base member PSTb by performing the basic operation of the additive manufacturing. However, in a case where the base member PSTb includes the inclination surface SS, the build apparatus SYS may build the base member PSTb by performing the build operation for building the inclination structural object SST.

Then, as illustrated in FIG. 45, the build apparatus SYS sets a surface of the base member PSTb as the build surface MS and builds the wall member PSTw on the build surface MS. Incidentally, in the example illustrated in FIG. 43, the wall member PSTw does not include the inclination surface SS that is inclined with respect to the gravity direction in a state where the surface WS of the workpiece W is horizontal (namely, the placement surface 311 is horizontal). Thus, the build apparatus SYS may build the wall member PSTw by performing the basic operation of the additive manufacturing. However, in a case where the wall member PSTw includes the inclination surface SS, the build apparatus SYS may build the wall member PSTw by performing the build operation for building the inclination structural object SST.

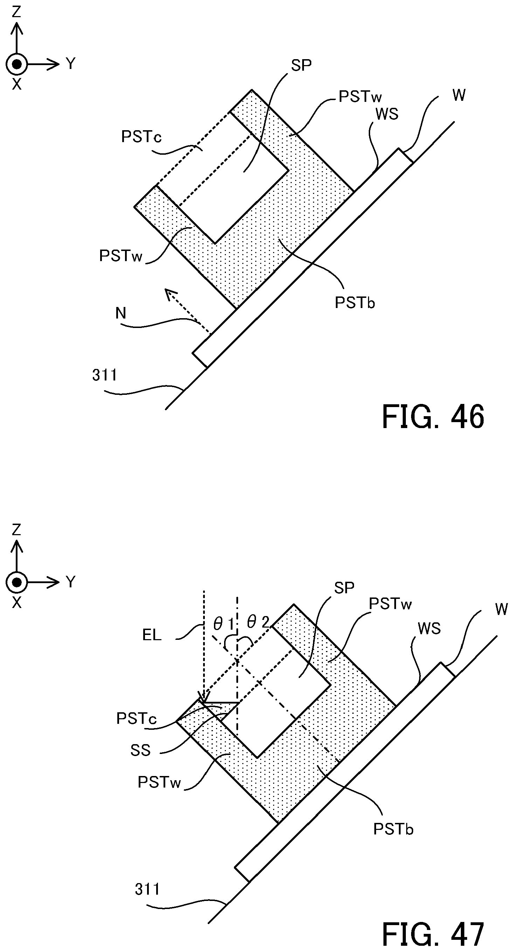

Then, the build apparatus SYS sets a surface of the wall member PSTw as the build surface MS and builds the ceiling member PSTc on the build surface MS. However, the ceiling member PSTc includes a surface that is perpendicular to the gravity direction in a state where the surface WS of the workpiece W is horizontal (namely, the placement surface 311 is horizontal). Thus, there is a possibility that the build apparatus SYS has difficulty in building the ceiling member PSTc in a state where the surface WS of the workpiece W is horizontal (namely, the placement surface 311 is horizontal). Therefore, as illustrated in FIG. 46, the build apparatus SYS moves the stage 31 so that the surface WS of the workpiece W (namely, the placement surface 311) is non-horizontal (specifically, is inclined with respect to the Z-axis direction that is the gravity direction). In other words, the build apparatus SYS moves the stage 31 so that the normal line N of the surface WS of the workpiece W (namely, the normal line of the placement surface 311) is non-horizontal (namely, is inclined with respect to the Z-axis direction that is the gravity direction). As a result, in the state illustrated in FIG. 46, the ceiling member PSTc is the inclination structural object SST including the inclination surface SS that is inclined with respect to the gravity direction. Thus, as illustrated in FIG. 47, the build apparatus SYS can build, on an object including the base member PSTb and the wall member PSTw placed on the surface WS of the workpiece W, the ceiling member PSTc by building the inclination structural object SST including the inclination surface SS that is inclined with respect to the gravity direction. Namely, the build apparatus SYS builds the ceiling member PSTc above the surface WS of the workpiece W (namely, above the mounting surface 311) by performing the build operation for building the inclination structural object SST.

In this case, the build apparatus SYS builds the ceiling member PSTc so that a space corresponding to the void SP is included below the ceiling member PSTc. Specifically, the build apparatus SYS builds the ceiling member PSTc including the inclination surface SS that faces the void SP.

Incidentally, the build apparatus SYS may build the ceiling member PSTc on one wall member PSTw (for example, a left wall member PSTw illustrated in FIG. 47) to thereby build the ceiling member PSTc that connects the one wall member PSTw and other wall member PSTw (for example, a right wall member PSTw illustrated in FIG. 47) located at a position that is different from a position of the one wall member PSTw. Alternatively, the build apparatus SYS may build a first ceiling part, which is a part of the ceiling member PSTc, on one wall member PSTw (for example, the left wall member PSTw illustrated in FIG. 47) and build a second ceiling part, which is other part of the ceiling member PSTc and which is connected to the first ceiling part, on other wall member PSTw (for example, the right wall member PSTw illustrated in FIG. 47).

In a case where the ceiling member PSTc is built, a total sum of an angle θ1 between the normal line N of the surface WS of the workpiece W (namely, the normal line of the placement surface 311 of the stage 31 on which the workpiece W is placed) and the gravity direction and an angle θ2 between a direction along the inclination surface SS of the ceiling member PSTc and the gravity direction may be equal to or larger than 90 degrees. FIG. 47 illustrates an example in which the total sum of the angle θ1 and the angle θ2 is 90 degrees.

The void structural object PST is built in this manner in the sixth modified example.

### (4-7) Seventh Modified Example

In the above-described description, in order to build the structural layer #2 on the structural layer SL#1, the build apparatus SYS builds the structural layer SL#1 by building the build object BO#11 and building the build object BO#12 on the build object BO#11, and then builds the structural layer SL#2 by building the build object BO#21 on the build object BO#12 and build the build object BO#22 on the build object BO#21.

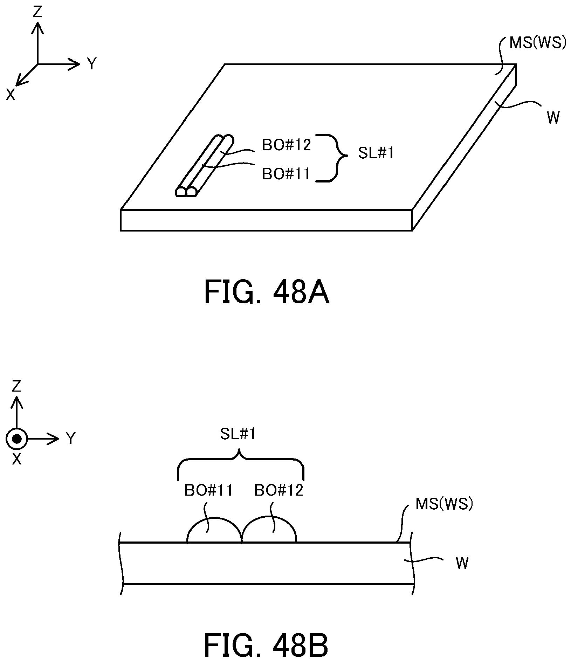

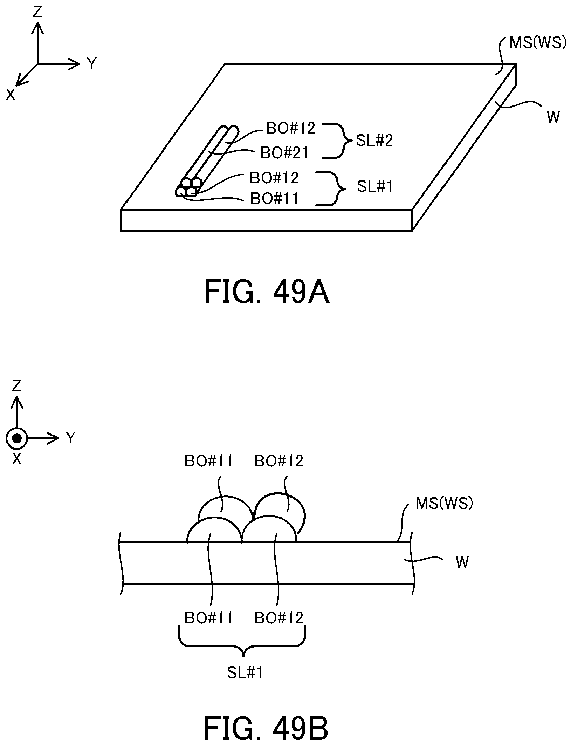

In the seventh modified example, in order to build the structural layer #2 on the structural layer SL#1, the build apparatus SYS may firstly build, on the build surface MS, the build objects BO #11 and BO #12 that are arranged along the Y-axis direction that is the falling direction, as illustrated in FIG. 48. As a result, the structural layer SL#1 including the build objects BO#11 and BO#12 is built. Then, the build apparatus SYS may set the irradiation target position EP on the surface of or inside the build object BO#11 and then build the build object BO#21 by irradiating the build object BO#11 with the build light EL. Namely, the build apparatus SYS may build the build object BO#21 on the build object BO#11. Furthermore, the build apparatus SYS may set the irradiation target position EP on the surface of or inside the build object BO#12 and then build the build object BO#22 by irradiating the build object BO#12 with the build light EL. Namely, the build apparatus SYS may build the build object BO#22 on the build object BO#12. In this manner, as illustrated in FIG. 49, the build apparatus SYS may build, on the structural layer SL#1, the build objects BO#21 and BO#22 that are arranged along the Y-axis direction that is the falling direction.

In this case, as described when the first or second build operation is described, the build apparatus SYS may set the irradiation target position EP so that the position P#21 at which the irradiation target position EP for building the build object BO#21 is set and the position P#11 at which the irradiation target position EP for building the build object BO#11 is set are the different positions along the Y-axis direction that is the falling direction. Furthermore, the build apparatus SYS may set the irradiation target position EP so that the position P#22 at which the irradiation target position EP for building the build object BO#22 is set and the position P#12 at which the irradiation target position EP for building the build object BO#12 is set are the different positions along the Y-axis direction that is the falling direction. As a result, as illustrated in FIG. 49, the structural layer SL #2 including the build objects BO#21 and BO#22 can form, together with the structural layer SL#1, the inclination surface SS that is inclined to fall along the Y-axis direction that is the falling direction.

In the same way, when the structural layer #n is built on the structural layer SL#m, the build apparatus SYS may build the structural layer SL#m by building the build objects BO#m1 and BO#m2 that are arranged along the Y-axis direction that is the falling direction. Then, the build apparatus SYS may set the irradiation target position EP on the surface of or inside the build object BO#m1 and then build the build object BO#n1 by irradiating the build object BO#m1 with the build light EL. Furthermore, the build apparatus SYS may set the irradiation target position EP on the surface of or inside the build object BO#m2 and then build the build object BO#n2 by irradiating the build object BO#m2 with the build light EL. Namely, the build apparatus SYS may build the structural layer SL#n by building, on the structural layer SL#1, the build objects BO#21 and BO#22 that are arranged along the Y-axis direction that is the falling direction.

The build apparatus SYS may build the inclination structural object SST by performing such operations.

### (4-8) Eighth Modified Example

There is a possibility that the build material M that was not used for building the 3D structural object ST remains on at least one of the workpiece W and the stage 31. Alternatively, there is a possibility that a part of the build material M that was not used for building the 3D structural object ST scatters or fall from the surface of the workpiece W to the outside of the workpiece W (for example, to the stage 31). Thus, the build apparatus SYS may include a collection apparatus that collects the build material M that was not used for building the 3D structural object ST. The build material M collected by the collection apparatus may be supplied from the material nozzle 212 to the workpiece W.

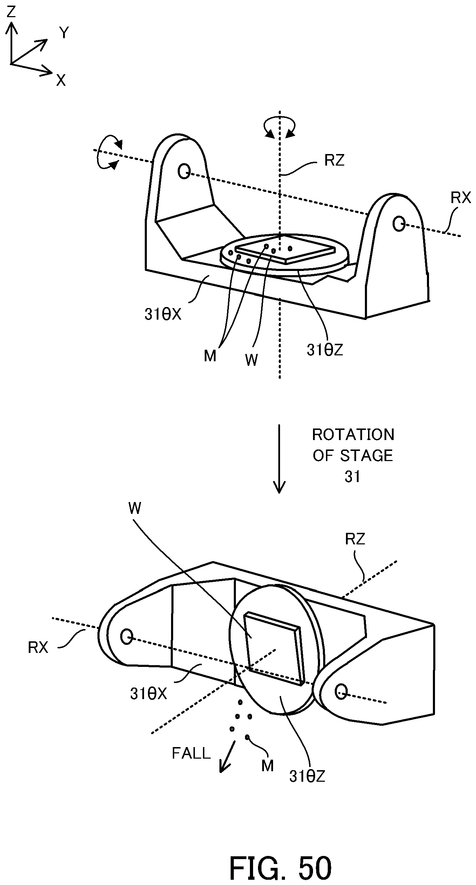

In a case where the collection apparatus collects the build material M, the build apparatus SYS may rotate the stage 31 by using the stage driving system 32 to allow the collection apparatus to collect the build material M that remains on at least one of the workpiece W and the stage 31, as illustrated in FIG. 50. For example, the build apparatus SYS may rotate the stage 31θX around a rotational axis RX of the stage 31θX (typically, a rotational axis along the X axis) by using the stage driving system 32. For example, the build apparatus SYS may rotate stage 31θZ around a rotational axis RZ of the stage 31θZ by using the stage driving system 32. As a result, the build material M remaining on at least one of the workpiece W and the stages 31 is removed from at least one of the workpiece W and the stage 31 by an effect of at least one of centrifugal force due to the rotation of the stage 31 and the gravity. As a result, the collection apparatus can properly collect the build material M remaining on the workpiece W or on the stage 31.

Alternatively, even in a case where the collection apparatus does not collect the build material M or the build apparatus SYS does not include the collection apparatus, the build apparatus SYS may rotate the stage 31 by using the stage driving system 32. As a result, the build material M remaining on at least one of the workpiece W and the stage 31 i removed from at least one of the workpiece W and the stage 31 by the effect of at least one of the centrifugal force due to the rotation of the stage 31 and the gravity. As a result, there is a low possibility that the build material M remaining on at least one of the workpiece W and the stage 31 adversely affect the additive manufacturing of the workpiece Z (namely, the building of the 3D structural object ST).

### (4-9) Other Modified Example

In the above-described description, the build apparatus SYS processes the workpiece W by irradiating the workpiece W with the build light EL. However, the build apparatus SYS may process the workpiece W by irradiating the workpiece W with any energy beam. In this case, the build apparatus SYS may include a beam irradiation apparatus that is configured to emit any energy beam in addition to or instead of the beam irradiation unit 211 and the light source 5. At least one of a charged particle beam, an electromagnetic wave and the like is one example of any energy beam. A least one of an electron beam, an ion beam and the like is one example of the charged particle beam.

### (5) Supplementary Note

Regarding the above-described embodiment, below-described supplementary notes are further disclosed.

### [Supplementary Note 1]

A build apparatus including:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to:
   control the build unit to build a first structural layer by irradiating a first position, which is set to be the irradiation position of the energy beam, with the energy beam to thereby build a first build object and by irradiating the first build object, a second position of which is set to be the irradiation position of the energy beam, with the energy beam to thereby build a second build obj ect;
   control the build unit to build a second structural layer by irradiating the first structural layer, a third position of which is set to be the irradiation position of the energy beam, with the energy beam to thereby build a third build object and by irradiating the third build object, a fourth position of which is set to be the irradiation position of the energy beam, with the energy beam to thereby build a fourth build object;
   control the build unit so that at least one of a distance between the first position and the second position along an optical axis direction of the optical system and a distance between the third position and the fourth position along the optical axis direction is shorter than a distance between the second position and the third position along the optical axis direction;
   control the build unit so that at least one of a distance between the first position and the second position along an intersecting direction that intersects with the optical axis direction and a distance between the third position and the fourth position along the intersecting direction is shorter than a distance between the second position and the third position along the intersecting direction; and
   control the build unit to build the structural object that includes at least the first structural object and the second structural object and that is inclined with respect to the optical axis direction.

### [Supplementary Note 2]

The build apparatus according to the Supplementary Note 1, wherein
the build controller is configured to controls the build unit so that the first position and the second positions are same positions along the optical axis direction, the first position and the second positions are same positions along the intersecting direction, the third position and the fourth positions are same positions along the optical axis direction, and / or the third position and the fourth positions are same positions along the intersecting direction.

### [Supplementary Note 3]

The build apparatus according to the Supplementary Note 1 or 2, wherein
the build controller is configured to control the build unit so that at least one of the distance between the first position and the second position along the optical axis direction, the distance between the first position and the second position along the intersecting direction, the distance between the third position and the fourth position along the optical axis direction and the distance between the third position and the fourth position along the intersecting direction is shorter than a predetermined distance.

### [Supplementary Note 4]

The build apparatus according to any one of the Supplementary Notes 1 to 3, wherein
the build controller is configured to control the build unit so that the distance between the second position and the third position along the intersecting direction is longer than a predetermined distance.

### [Supplementary Note 5]

The build apparatus according to any one of the Supplementary Notes 1 to 4, wherein
a width of the first structural layer is wider than a width of the first build object,
a width of the second structural layer is wider than a width of the third build object.

### [Supplementary Note 6]

The build apparatus according to any one of the Supplementary Notes 1 to 5, wherein
a height of the first structural layer is higher than a height of the first build obj ect,
a height of the second structural layer is wider than a height of the third build object.

### [Supplementary Note 7]

The build apparatus according to any one of the Supplementary Notes 1 to 6, wherein
the build controller is configured to: (i) control the build unit so that the irradiation position relatively moves along a scanning direction in a plane including the intersecting direction; and (ii) control the build unit so that the structural object, which includes the first structural layer and the second structural layer that are built by relatively moving the irradiation position along the scanning direction, includes an inclination surfaced that is inclined to fall along the scanning direction.

### [Supplementary Note 8]

The build apparatus according to the Supplementary Note 7, wherein
the build controller is configured to control the build unit so that a first end part of an area that is irradiated with the energy beam in a period during which the first structural layer is formed is away along the scanning direction from a second end part of an area that is irradiated with the energy beam in a period during which the second structural layer formed on the first structural layer is formed.

### [Supplementary Note 9]

The build apparatus according to any one of the Supplementary Notes 1 to 8, wherein
the third position includes a position on a surface of the first structural layer,
the fourth position includes a position inside the third build object or a position on a surface of the first structural layer.

### [Supplementary Note 10]

The build apparatus according to any one of the Supplementary Notes 1 to 9, wherein
the build controller is configured to control the build unit to build the second build object on the first build object, to build the third build object on the second build object, and to build the fourth build object on the third build object.

### [Supplementary Note 11]

The build apparatus according to any one of the Supplementary Notes 1 to 10, wherein
the build controller is configured to control the build unit to build the third build object on the first structural layer.

### [Supplementary Note 12]

The build apparatus according to the Supplementary Note 8, wherein
an end surface of the structural object including the first end part and the second end part is inclined along the scanning direction.

### [Supplementary Note 13]

The build apparatus according to the Supplementary Note 7, 8, or 12, wherein
the build controller is configured to control the build unit so that a space is formed below the inclination surface.

### [Supplementary Note 14]

The build apparatus according to any one of the Supplementary Notes 1 to 13, wherein
the irradiation position of the energy beam includes at least one of an irradiation target position of the energy beam and a condensed target position of the energy beam.

### [Supplementary Note 15]

A build apparatus including:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to perform, based on an input from a user, a switching between a first operation mode for building a first structural object including an inclination surface that intersects with a gravity direction by a first angle and a second operation mode for building a second structural object including an inclination surface that intersects with the gravity direction by a second angle.

### [Supplementary Note 16]

The build apparatus according to the Supplementary Note 15, wherein
each of the first structural object and the second structural object include a plurality of structural layers that are layered,
a number of times of an irradiation of the energy beam in a case where each structural layer is formed in the first operation mode is different from a number of times of an irradiation of the energy beam in a case where each structural layer is formed in the second operation mode.

### [Supplementary Note 17]

The build apparatus according to the Supplementary Note 16, wherein
in a case where the first angle is larger than the second angle, a number of times of the irradiation of the energy beam in a case where each structural layer is formed in the first operation mode is larger than a number of times of the irradiation of the energy beam in a case where each structural layer is formed in the second operation mode.

### [Supplementary Note 18]

The build apparatus according to the Supplementary Note 16, wherein
the first angle is equal to the second angle,
a number of times of the irradiation of the energy beam in a case where each structural layer is formed in the first operation mode is larger than a number of times of the irradiation of the energy beam in a case where each structural layer is formed in the second operation mode.

### [Supplementary Note 19]

The build apparatus according to any one of the Supplementary Notes 15 to 18, wherein
the build apparatus operating in the first operation mode forms each structural layer including a first build object and a second build object by irradiating a first position with the energy beam to thereby build the first build object and by irradiating a second position of the first build object with the energy beam to thereby build the second build obj ect,
the build apparatus operating in the second operation mode forms each structural layer including a third build object by irradiating a first position with the energy beam to thereby build the third build object without irradiating the second position of the first build object with the energy beam.

### [Supplementary Note 20]

The build apparatus according to any one of the Supplementary Notes 15 to 19, wherein
each of the first structural object and the second structural object include a plurality of structural layers that are layered,
a characteristic of the energy beam for forming each structural layer in the first operation mode is different from a characteristic of the energy beam for forming each structural layer in the second operation mode.

### [Supplementary Note 21]

The build apparatus according to the Supplementary Note 20, wherein
the characteristic of the energy beam includes an intensity of the energy beam.

### [Supplementary Note 22]

The build apparatus according to the Supplementary Note 21, wherein
in a case where the first angle is larger than the second angle, the intensity of the energy beam for forming each structural layer in the first operation mode is higher than the intensity of the energy beam for forming each structural layer in the second operation mode.

### [Supplementary Note 23]

The build apparatus according to any one of the Supplementary Notes 15 to 22 further including a movement apparatus that moves an irradiation position of the energy beam, wherein
a moving aspect of the irradiation position in a case where each structural layer is formed in the first operation mode is different from a moving aspect of the irradiation position in a case where each structural layer is formed in the second operation mode.

### [Supplementary Note 24]

The build apparatus according to the Supplementary Note 23, wherein
the moving aspect includes a moving speed.

### [Supplementary Note 25]

The build apparatus according to the Supplementary Note 24, wherein
in a case where the first angle is larger than the second angle, the moving speed in a case where each structural layer is formed in the first operation mode is slower than the moving speed in a case where each structural layer is formed in the second operation mode.

### [Supplementary Note 26]

The build apparatus according to any one of the Supplementary Notes 15 to 25, wherein
a supply aspect of the build material from the material supply unit in a case where each structural layer is formed in the first operation mode is different from a supply aspect of the build material from the material supply unit in a case where each structural layer is formed in the second operation mode.

### [Supplementary Note 27]

The build apparatus according to the Supplementary Note 26, wherein
the supply aspect includes a supply amount.

### [Supplementary Note 28]

The build apparatus according to the Supplementary Note 27, wherein
in a case where the first angle is larger than the second angle, the supply amount in a case where each structural layer is formed in the first operation mode is larger than the supply amount in a case where each structural layer is formed in the second operation mode.

### [Supplementary Note 29]

A build apparatus including:
a build unit that includes at least: a beam irradiation unit including an optical system that emits an energy beam toward an object; a material supply unit that supplies a build material to an irradiation position of the energy beam; and an attitude change apparatus that is configured to change an attitude of the object relative to the beam irradiation unit; and
a build controller configured to control a building of a structural object by the build unit,
wherein
the build controller is configured to control the build unit to change the attitude of the object so that a normal line of a placement surface, on which the object that is irradiated with the energy beam is placed, is inclined with respect to a gravity direction and to build the structural object including an inclination surface that extends along an inclination direction that is inclined with respect to the gravity direction,
at least a space is formed below the structural object.

### [Supplementary Note 30]

The build apparatus according to the Supplementary Note 29, wherein
a void surrounded by an inner wall surface is formed in the object,
the build controller is configured to control the build unit to form, above the placement surface, the structural object including the inclination surface facing the void.

### [Supplementary Note 31]

The build apparatus according to the Supplementary Note 30, wherein
the build controller is configured to control the build unit to form, above the placement surface, the structural object that partially closes the void.

### [Supplementary Note 32]

The build apparatus according to any one of the Supplementary Notes 29 to 31, wherein
a total sum of an angle between the normal line of the placement surface and the gravity direction and an angle between the inclination direction and the gravity direction is equal to or larger than 90 degrees.

### [Supplementary Note 33]

A build apparatus including:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to:
   control the build unit to set a first position to be an irradiation position or a condensing position of the energy beam to thereby build a first build object and to set a second position of the first build object to be the irradiation position or the condensing position of the energy beam to thereby build a second build object;
   control the build unit to set a third position of the second build object to be the irradiation position or the condensing position of the energy beam to thereby build a third build object and to set a fourth position of the third build object to be the irradiation position or the condensing position of the energy beam to thereby build a fourth build object;
   control the build unit so that at least one of a distance between the first position and the second position along a gravity direction and a distance between the third position and the fourth position along the gravity direction is shorter than a distance between the second position and the third position along the gravity direction; and
   control the build unit so that at least one of a distance between the first position and the second position along an intersecting direction that intersects with the gravity direction and a distance between the third position and the fourth position along the intersecting direction is shorter than a distance between the second position and the third position along the intersecting direction.

### [Supplementary Note 34]

A build apparatus including:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to:
   control the build unit to set a first position to be an irradiation position or a condensing position of the energy beam to thereby build a first build object and to set a second position of the first build object to be the irradiation position or the condensing position of the energy beam to thereby build a second build object;
   control the build unit to set a third position of the second build object to be the irradiation position or the condensing position of the energy beam to thereby build a third build object and to set a fourth position of the third build object to be the irradiation position or the condensing position of the energy beam to thereby build a fourth build object;
   control the build unit so that at least one of a distance between the first position and the second position along an optical axis direction of the optical system and a distance between the third position and the fourth position along the optical axis direction is shorter than a distance between the second position and the third position along the optical axis direction; and
   control the build unit so that at least one of a distance between the first position and the second position along an intersecting direction that intersects with the optical axis direction and a distance between the third position and the fourth position along the intersecting direction is shorter than a distance between the second position and the third position along the intersecting direction.

### [Supplementary Note 35]

A build apparatus including:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to control the build unit to form the structural object including an inclination surface that is inclined by repeating a layer forming operation to thereby form a plurality of structural layers that are layered,
the layer forming operation is for forming a structural layer by irradiating a first position with the energy beam to thereby build a build object and by setting a second position of the build object that has been built by irradiating the first position with the energy beam to be an irradiation position of the energy beam to thereby build a build object.

### [Supplementary Note 36]

A build apparatus including:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to:
   control the build unit to build a first structural layer by moving the energy beam along a scanning direction in an intersecting plane intersecting with an optical axis direction of the optical system after setting a first position to be an irradiation position or a condensing position of the energy beam to thereby build a first build object extending along the scanning direction and by moving the energy beam along the canning direction in the intersecting plane after setting a second position to be the irradiation position or the condensing position of the energy beam to thereby build a second build object extending along the scanning direction;
   control the build unit to build a second structural layer by moving the energy beam after setting a third position of at least a part of the first build object to be the irradiation position or the condensing position of the energy beam to thereby build a third build object extending along the scanning direction and by moving the energy beam after setting a fourth position of at least a part of the second build object to be the irradiation position or the condensing position of the energy beam to thereby build a fourth build object extending along the scanning direction;
   control the build unit so that the first build object and the second built object are built to be arranged along a direction intersecting with the scanning direction and the third build object and the fourth built object are built to be arranged along a direction intersecting with the scanning direction; and
   control the build unit to build the structural object that is inclined with respect to the optical axis direction by forming structural layers that include at least the first structural layer and the second structural layer.

### [Supplementary Note 37]

The build apparatus according to the Supplementary Note 36, wherein
the build controller is configured to control the build unit to build the structural object that is inclined toward the scanning direction.

### [Supplementary Note 38]

The build apparatus according to the Supplementary Note 36 or 37, wherein
an inclination surface of the structural object that is inclined includes a part that is farther apart along the scanning direction as it is more upward along the optical axis direction.

### [Supplementary Note 39]

A build apparatus including:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to:
   control the build unit to build a first structural layer by moving the energy beam along a scanning direction in an intersecting plane intersecting with a gravity direction after setting a first position to be an irradiation position or a condensing position of the energy beam to thereby build a first build object extending along the scanning direction and by moving the energy beam along the canning direction in the intersecting plane after setting a second position to be the irradiation position or the condensing position of the energy beam to thereby build a second build object extending along the scanning direction;
   control the build unit to build a second structural layer by moving the energy beam after setting a third position of at least a part of the first build object to be the irradiation position or the condensing position of the energy beam to thereby build a third build object extending along the scanning direction and by moving the energy beam after setting a fourth position of at least a part of the second build object to be the irradiation position or the condensing position of the energy beam to thereby build a fourth build object extending along the scanning direction;
   control the build unit so that the first build object and the second built object are built to be arranged along a direction intersecting with the scanning direction and the third build object and the fourth built object are built to be arranged along a direction intersecting with the scanning direction; and
   control the build unit to build the structural object that is inclined with respect to the gravity direction by forming structural layers that include at least the first structural layer and the second structural layer.

### [Supplementary Note 40]

A build method for building a build object by using a build unit that includes at least: a beam irradiation unit including an optical system that emits an energy beam; and a material supply unit that supplies a build material to an irradiation position of the energy beam,
wherein
the build method includes:
controlling the build unit to build a first structural layer by irradiating a first position, which is set to be the irradiation position of the energy beam, with the energy beam to thereby build a first build object and by irradiating the first build object, a second position of which is set to be the irradiation position of the energy beam, with the energy beam to thereby build a second build object;
controlling the build unit to build a second structural layer by irradiating the first structural layer, a third position of which is set to be the irradiation position of the energy beam, with the energy beam to thereby build a third build object and by irradiating the third build object, a fourth position of which is set to be the irradiation position of the energy beam, with the energy beam to thereby build a fourth build object;
controlling the build unit so that at least one of a distance between the first position and the second position along an optical axis direction of the optical system and a distance between the third position and the fourth position along the optical axis direction is shorter than a distance between the second position and the third position along the optical axis direction;
controlling the build unit so that at least one of a distance between the first position and the second position along an intersecting direction that intersects with the optical axis direction and a distance between the third position and the fourth position along the intersecting direction is shorter than a distance between the second position and the third position along the intersecting direction; and
controlling the build unit to build the structural object that includes at least the first structural object and the second structural object and that is inclined with respect to the optical axis direction.

### [Supplementary Note 41]

A build method for building a build object by using a build unit that includes at least: a beam irradiation unit including an optical system that emits an energy beam; and a material supply unit that supplies a build material to an irradiation position of the energy beam,
wherein
a first operation mode for building a first structural object including an inclination surface that intersects with a gravity direction by a first angle and a second operation mode for building a second structural object including an inclination surface that intersects with the gravity direction by a second angle are switchable based on an input from a user.

### [Supplementary Note 42]

A build method for building a build object by using a build unit that includes at least: a beam irradiation unit including an optical system that emits an energy beam toward an object; a material supply unit that supplies a build material to an irradiation position of the energy beam; and an attitude change apparatus that is configured to change an attitude of the object relative to the beam irradiation unit,
wherein
the build method includes controlling the build unit to change the attitude of the object so that a normal line of a placement surface, on which the object that is irradiated with the energy beam is placed, is inclined with respect to a gravity direction and to build the structural object including an inclination surface that extends along an inclination direction that is inclined with respect to the gravity direction,
at least a space is formed below the structural object.

### [Supplementary Note 43]

A build method for building a build object by using a build unit that includes at least: a beam irradiation unit including an optical system that emits an energy beam; and a material supply unit that supplies a build material to an irradiation position of the energy beam,
wherein
the build method includes:
controlling the build unit to set a first position to be an irradiation position or a condensing position of the energy beam to thereby build a first build object and to set a second position of the first build object to be the irradiation position or the condensing position of the energy beam to thereby build a second build obj ect;
controlling the build unit to set a third position of the second build object to be the irradiation position or the condensing position of the energy beam to thereby build a third build object and to set a fourth position of the third build object to be the irradiation position or the condensing position of the energy beam to thereby build a fourth build object;
controlling the build unit so that at least one of a distance between the first position and the second position along a gravity direction and a distance between the third position and the fourth position along the gravity direction is shorter than a distance between the second position and the third position along the gravity direction; and
controlling the build unit so that at least one of a distance between the first position and the second position along an intersecting direction that intersects with the gravity direction and a distance between the third position and the fourth position along the intersecting direction is shorter than a distance between the second position and the third position along the intersecting direction.

### [Supplementary Note 44]

A build method for building a build object by using a build unit that includes at least: a beam irradiation unit including an optical system that emits an energy beam; and a material supply unit that supplies a build material to an irradiation position of the energy beam,
wherein
the build method includes:
controlling the build unit to set a first position to be an irradiation position or a condensing position of the energy beam to thereby build a first build object and to set a second position of the first build object to be the irradiation position or the condensing position of the energy beam to thereby build a second build obj ect;
controlling the build unit to set a third position of the second build object to be the irradiation position or the condensing position of the energy beam to thereby build a third build object and to set a fourth position of the third build object to be the irradiation position or the condensing position of the energy beam to thereby build a fourth build object;
controlling the build unit so that at least one of a distance between the first position and the second position along an optical axis direction of the optical system and a distance between the third position and the fourth position along the optical axis direction is shorter than a distance between the second position and the third position along the optical axis direction; and
controlling the build unit so that at least one of a distance between the first position and the second position along an intersecting direction that intersects with the optical axis direction and a distance between the third position and the fourth position along the intersecting direction is shorter than a distance between the second position and the third position along the intersecting direction.

### [Supplementary Note 45]

A build method for building a build object by using a build unit that includes at least: a beam irradiation unit including an optical system that emits an energy beam; and a material supply unit that supplies a build material to an irradiation position of the energy beam,
wherein
the build method includes controlling the build unit to form the structural object including an inclination surface that is inclined by repeating a layer forming operation to thereby form a plurality of structural layers that are layered,
the layer forming operation is for forming a structural layer by irradiating a first position with the energy beam to thereby build a build object and by setting a second position of the build object that has been built by irradiating the first position with the energy beam to be an irradiation position of the energy beam to thereby build a build object.

### [Supplementary Note 46]

A build method for building a build object by using a build unit that includes at least: a beam irradiation unit including an optical system that emits an energy beam; and a material supply unit that supplies a build material to an irradiation position of the energy beam,
wherein
the build method includes:
controlling the build unit to build a first structural layer by moving the energy beam along a scanning direction in an intersecting plane intersecting with an optical axis direction of the optical system after setting a first position to be an irradiation position or a condensing position of the energy beam to thereby build a first build object extending along the scanning direction and by moving the energy beam along the canning direction in the intersecting plane after setting a second position to be the irradiation position or the condensing position of the energy beam to thereby build a second build obj ect extending along the scanning direction;
controlling the build unit to build a second structural layer by moving the energy beam after setting a third position of at least a part of the first build object to be the irradiation position or the condensing position of the energy beam to thereby build a third build object extending along the scanning direction and by moving the energy beam after setting a fourth position of at least a part of the second build object to be the irradiation position or the condensing position of the energy beam to thereby build a fourth build object extending along the scanning direction;
controlling the build unit so that the first build object and the second built object are built to be arranged along a direction intersecting with the scanning direction and the third build object and the fourth built object are built to be arranged along a direction intersecting with the scanning direction; and
controlling the build unit to build the structural object that is inclined with respect to the optical axis direction by forming structural layers that include at least the first structural layer and the second structural layer.

### [Supplementary Note 47]

A build method for building a build object by using a build unit that includes at least: a beam irradiation unit including an optical system that emits an energy beam; and a material supply unit that supplies a build material to an irradiation position of the energy beam,
wherein
the build method includes:
controlling the build unit to build a first structural layer by moving the energy beam along a scanning direction in an intersecting plane intersecting with a gravity direction after setting a first position to be an irradiation position or a condensing position of the energy beam to thereby build a first build object extending along the scanning direction and by moving the energy beam along the canning direction in the intersecting plane after setting a second position to be the irradiation position or the condensing position of the energy beam to thereby build a second build object extending along the scanning direction;
controlling the build unit to build a second structural layer by moving the energy beam after setting a third position of at least a part of the first build object to be the irradiation position or the condensing position of the energy beam to thereby build a third build object extending along the scanning direction and by moving the energy beam after setting a fourth position of at least a part of the second build object to be the irradiation position or the condensing position of the energy beam to thereby build a fourth build object extending along the scanning direction;
controlling the build unit so that the first build object and the second built object are built to be arranged along a direction intersecting with the scanning direction and the third build object and the fourth built object are built to be arranged along a direction intersecting with the scanning direction; and
controlling the build unit to build the structural object that is inclined with respect to the gravity direction by forming structural layers that include at least the first structural layer and the second structural layer.

At least a part of the features of each embodiment described above may be properly combined with at least another part of the features of each embodiment described above. Apart of the features of each embodiment described above may not be used. Moreover, the disclosures of all publications and United States patents that are cited in each embodiment described above are incorporated in the disclosures of the present application by reference if it is legally permitted.

The present invention is allowed to be changed, if desired, without departing from the essence or spirit of the invention which can be read from the claims and the entire specification, and a build apparatus and build method, which involve such changes, are also intended to be within the technical scope of the present invention.

### Description of Reference Codes

- SYS: build apparatus
- 2: build unit
- 21: build head
- 211: beam irradiation system
- 2111: irradiation optical system
- 212: material nozzle
- 22: head driving system
- 3: stage apparatus
- 31, 31θX, 31θZ: stage
- 32: stage driving system
- 7: control apparatus
- W: workpiece
- EL: build light
- EP: irradiation target position
- MS: build surface
- ST: 3D structural object
- SST: inclination structural object
- SS: inclination surface
- SL: structural layer
- BO: build object
- PP: processing path
- AX: optical axis
- MP: melt pool

## Claims

1. A build apparatus comprising:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to:
control the build unit to build a first structural layer by irradiating a first position, which is set to be the irradiation position of the energy beam, with the energy beam to thereby build a first build object and by irradiating the first build object, a second position of which is set to be the irradiation position of the energy beam, with the energy beam to thereby build a second build obj ect;
control the build unit to build a second structural layer by irradiating the first structural layer, a third position of which is set to be the irradiation position of the energy beam, with the energy beam to thereby build a third build object and by irradiating the third build object, a fourth position of which is set to be the irradiation position of the energy beam, with the energy beam to thereby build a fourth build object;
control the build unit so that at least one of a distance between the first position and the second position along an optical axis direction of the optical system and a distance between the third position and the fourth position along the optical axis direction is shorter than a distance between the second position and the third position along the optical axis direction;
control the build unit so that at least one of a distance between the first position and the second position along an intersecting direction that intersects with the optical axis direction and a distance between the third position and the fourth position along the intersecting direction is shorter than a distance between the second position and the third position along the intersecting direction; and
control the build unit to build the structural object that includes at least the first structural object and the second structural object and that is inclined with respect to the optical axis direction.

2. The build apparatus according to claim 1, wherein
the build controller is configured to controls the build unit so that the first position and the second positions are same positions along the optical axis direction, the first position and the second positions are same positions along the intersecting direction, the third position and the fourth positions are same positions along the optical axis direction, and / or the third position and the fourth positions are same positions along the intersecting direction.

3. The build apparatus according to claim 1 or 2, wherein
the build controller is configured to control the build unit so that at least one of the distance between the first position and the second position along the optical axis direction, the distance between the first position and the second position along the intersecting direction, the distance between the third position and the fourth position along the optical axis direction and the distance between the third position and the fourth position along the intersecting direction is shorter than a predetermined distance.

4. The build apparatus according to any one of claims 1 to 3, wherein
the build controller is configured to control the build unit so that the distance between the second position and the third position along the intersecting direction is longer than a predetermined distance.

5. The build apparatus according to any one of claims 1 to 4, wherein
a width of the first structural layer is wider than a width of the first build object,
a width of the second structural layer is wider than a width of the third build object.

6. The build apparatus according to any one of claims 1 to 5, wherein
a height of the first structural layer is higher than a height of the first build obj ect,
a height of the second structural layer is wider than a height of the third build object.

7. The build apparatus according to any one of claims 1 to 6, wherein
the build controller is configured to: (i) control the build unit so that the irradiation position relatively moves along a scanning direction in a plane including the intersecting direction; and (ii) control the build unit so that the structural object, which includes the first structural layer and the second structural layer that are built by relatively moving the irradiation position along the scanning direction, includes an inclination surfaced that is inclined to fall along the scanning direction.

8. The build apparatus according to claim 7, wherein
the build controller is configured to control the build unit so that a first end part of an area that is irradiated with the energy beam in a period during which the first structural layer is formed is away along the scanning direction from a second end part of an area that is irradiated with the energy beam in a period during which the second structural layer formed on the first structural layer is formed.

9. The build apparatus according to any one of claims 1 to 8, wherein
the third position includes a position on a surface of the first structural layer,
the fourth position includes a position inside the third build object or a position on a surface of the first structural layer.

10. The build apparatus according to any one of claims 1 to 9, wherein
the build controller is configured to control the build unit to build the second build object on the first build object, to build the third build object on the second build object, and to build the fourth build object on the third build object.

11. The build apparatus according to any one of claims 1 to 10, wherein
the build controller is configured to control the build unit to build the third build object on the first structural layer.

12. The build apparatus according to claim 8, wherein
an end surface of the structural object including the first end part and the second end part is inclined along the scanning direction.

13. The build apparatus according to claim 7, 8, or 12, wherein
the build controller is configured to control the build unit so that a space is formed below the inclination surface.

14. The build apparatus according to any one of claims 1 to 13, wherein
the irradiation position of the energy beam includes at least one of an irradiation target position of the energy beam and a condensed target position of the energy beam.

15. A build apparatus comprising:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to perform, based on an input from a user, a switching between a first operation mode for building a first structural object including an inclination surface that intersects with a gravity direction by a first angle and a second operation mode for building a second structural object including an inclination surface that intersects with the gravity direction by a second angle.

16. The build apparatus according to claim 15, wherein
each of the first structural object and the second structural object include a plurality of structural layers that are layered,
a number of times of an irradiation of the energy beam in a case where each structural layer is formed in the first operation mode is different from a number of times of an irradiation of the energy beam in a case where each structural layer is formed in the second operation mode.

17. The build apparatus according to claim 16, wherein
in a case where the first angle is larger than the second angle, a number of times of the irradiation of the energy beam in a case where each structural layer is formed in the first operation mode is larger than a number of times of the irradiation of the energy beam in a case where each structural layer is formed in the second operation mode.

18. The build apparatus according to claim 16, wherein
the first angle is equal to the second angle,
a number of times of the irradiation of the energy beam in a case where each structural layer is formed in the first operation mode is larger than a number of times of the irradiation of the energy beam in a case where each structural layer is formed in the second operation mode.

19. The build apparatus according to any one of claims 15 to 18, wherein
the build apparatus operating in the first operation mode forms each structural layer including a first build object and a second build object by irradiating a first position with the energy beam to thereby build the first build object and by irradiating a second position of the first build object with the energy beam to thereby build the second build obj ect,
the build apparatus operating in the second operation mode forms each structural layer including a third build object by irradiating a first position with the energy beam to thereby build the third build object without irradiating the second position of the first build object with the energy beam.

20. The build apparatus according to any one of claims 15 to 19, wherein
each of the first structural object and the second structural object include a plurality of structural layers that are layered,
a characteristic of the energy beam for forming each structural layer in the first operation mode is different from a characteristic of the energy beam for forming each structural layer in the second operation mode.

21. The build apparatus according to claim 20, wherein
the characteristic of the energy beam includes an intensity of the energy beam.

22. The build apparatus according to claim 21, wherein
in a case where the first angle is larger than the second angle, the intensity of the energy beam for forming each structural layer in the first operation mode is higher than the intensity of the energy beam for forming each structural layer in the second operation mode.

23. The build apparatus according to any one of claims 15 to 22 further comprising a movement apparatus that moves an irradiation position of the energy beam, wherein
a moving aspect of the irradiation position in a case where each structural layer is formed in the first operation mode is different from a moving aspect of the irradiation position in a case where each structural layer is formed in the second operation mode.

24. The build apparatus according to claim 23, wherein
the moving aspect includes a moving speed.

25. The build apparatus according to claim 24, wherein
in a case where the first angle is larger than the second angle, the moving speed in a case where each structural layer is formed in the first operation mode is slower than the moving speed in a case where each structural layer is formed in the second operation mode.

26. The build apparatus according to any one of claims 15 to 25, wherein
a supply aspect of the build material from the material supply unit in a case where each structural layer is formed in the first operation mode is different from a supply aspect of the build material from the material supply unit in a case where each structural layer is formed in the second operation mode.

27. The build apparatus according to claim 26, wherein
the supply aspect includes a supply amount.

28. The build apparatus according to claim 27, wherein
in a case where the first angle is larger than the second angle, the supply amount in a case where each structural layer is formed in the first operation mode is larger than the supply amount in a case where each structural layer is formed in the second operation mode.

29. A build apparatus comprising:
a build unit that includes at least: a beam irradiation unit including an optical system that emits an energy beam; and a material supply unit that supplies a build material to an irradiation position of the energy beam; and
a build controller configured to control a building of a structural object by the build unit,
wherein
the build controller is configured to:
control the build unit to build a first structural layer by moving the energy beam along a scanning direction in an intersecting plane intersecting with an optical axis direction of the optical system after setting a first position to be an irradiation position or a condensing position of the energy beam to thereby build a first build object extending along the scanning direction and by moving the energy beam along the canning direction in the intersecting plane after setting a second position to be the irradiation position or the condensing position of the energy beam to thereby build a second build object extending along the scanning direction;
control the build unit to build a second structural layer by moving the energy beam after setting a third position of at least a part of the first build object to be the irradiation position or the condensing position of the energy beam to thereby build a third build object extending along the scanning direction and by moving the energy beam after setting a fourth position of at least a part of the second build object to be the irradiation position or the condensing position of the energy beam to thereby build a fourth build object extending along the scanning direction;
control the build unit so that the first build object and the second built object are built to be arranged along a direction intersecting with the scanning direction and the third build object and the fourth built object are built to be arranged along a direction intersecting with the scanning direction; and
control the build unit to build the structural object that is inclined with respect to the optical axis direction by forming structural layers that include at least the first structural layer and the second structural layer.

30. The build apparatus according to claim 29, wherein
the build controller is configured to control the build unit to build the structural object that is inclined toward the scanning direction.

31. The build apparatus according to claim 29 or 30, wherein
an inclination surface of the structural object that is inclined includes a part that is farther along the scanning direction as it is at more upper side along the optical axis direction.
